# EUROPEAN PATENT APPLICATION

(11) **EP 2 684 926 A1**
(43) Date of publication of application: **15.01.2014**
(21) Application number: 12755017.6
(22) Date of filing: 09.03.2012
(51) Int. Cl.: C09J 7/02, B32B 27/00, B32B 27/36, C09J 11/04, C09J 201/00

(54) **SHATTERPROOFING MEMBER WITH HARDENABLE PRESSURE-SENSITIVE ADHESIVE LAYER**

(30) Priority: 09.03.2011 JP 2011051240; 20.12.2011 JP 2011277824; 05.03.2012 JP 2012047874; 05.03.2012 JP 2012047875; 05.03.2012 JP 2012047876; 05.03.2012 JP 2012047877; 05.03.2012 JP 2012047878
(71) Applicant: Nitto Denko Corporation, Ibaraki-shi, Osaka 567-8680 (JP)
(72) Inventor: HIDA, Takafumi, Ibaraki-shi Osaka 567-8680 (JP); NAGASAKI, Kunio, Ibaraki-shi Osaka 567-8680 (JP); SUGINO, Yusuke, Ibaraki-shi Osaka 567-8680 (JP); DOI, Kohei, Ibaraki-shi Osaka 567-8680 (JP); NAKAYAMA, Yusuke, Ibaraki-shi Osaka 567-8680 (JP)
(74) Representative: Müller-Boré & Partner Patentanwälte
(86) International application number: PCT/JP2012/056130
(87) International publication number: WO 2012/121374

(57) **Abstract**

Provided is a shatterproofing member including a pressure-sensitive adhesive layer convertible into an adhesive layer, which allows adherends to be instantly fixed to each other, allows the adherends to be reattached to each other, is excellent in processability such as being able to be cut into a sheet shape, is not peeled from the adherends even when exposed to a high-temperature atmosphere such as one in a fire, and can express shatterproof property when attached to an adherend that is broken by combustion such as glass even if exposed to combustion during a fire or the like. The shatterproofing member including a pressure-sensitive adhesive layer convertible into an adhesive layer includes: a pressure-sensitive adhesive layer convertible into an adhesive layer; and a flame-resistant material, in which the pressure-sensitive adhesive layer convertible into an adhesive layer has pressure-sensitive adhesive property before being sintered, and has adhesive property after being sintered.

## Description

### Technical Field

The present invention relates to a shatterproofing member including a pressure-sensitive adhesive layer convertible into an adhesive layer (hereinafter sometimes referred to as "convertible pressure-sensitive adhesive layer"). Specifically, the present invention relates to a shatterproofing member including a convertible pressure-sensitive adhesive layer having sinterability, in which the convertible pressure-sensitive adhesive layer has pressure-sensitive adhesive property before being sintered, and has adhesive property after being sintered, and the member can express shatterproof property when attached to an adherend that is broken by combustion such as glass even if exposed to combustion during a fire or the like, and shows excellent flame retardancy when used for flame-retardant treatment for lumber or plastic.

### Background Art

A general shatterproofing film for glass (see, for example, Patent Literature 1) is attached for crime prevention or prevention of shattering of glass due to an impact. However, such conventional shatterproofing film uses PET or vinyl chloride as a raw material, and hence is vulnerable to a flame or heat and burns when exposed to a high-temperature atmosphere such as one in a fire.

Meanwile, it is possible to attach a flame-resistant film to glass with a general pressure-sensitive adhesive (see, for example, Patent Literature 2). However, there is a problem in that, when exposed to a high-temperature atmosphere such as one in a fire, the flame-resistant film is peeled from the adherend owing to decomposition of a polymer component of the pressure-sensitive adhesive.

It is also possible to attach a flame-resistant film to glass with a sinterable adhesive typified by an aqueous dispersion of inorganic particles (see, for example, Patent Literature 3). However, there are problems in that the adhesive involves difficulty in reattachment, and requires time or heat treatment before achieving fixation after being applied and hence cannot instantly achieve fixation. There is also a problem in that the adhesive is difficult to cut into a sheet shape by punching or the like.

In addition, float glass such as window glass involves a risk in that the glass breaks and shatters owing to heat of a fire or the like. Accordingly, when a member to be attached to the float glass such as window glass is not peeled off even under a high-temperature atmosphere and is not lost by burning, the member can express shatterproof property even when exposed to combustion during a fire or the like, and hence has extremely high practicality.

In addition, depending on a place where the shatterproofing film for glass is used, the film may be exposed to such a situation that its surface is liable to have a flaw. When the surface of the shatterproofing film for glass has a flaw, there arise problems in that: rupture or the like of the film occurs from the site of the flaw; its shatterproof property reduces; and its design degrades.

In addition, depending on a place where the shatterproofing film for glass is used, the film may be liable to be affected by temperature. In such situation, when heat-insulating property or heat-shielding property can be imparted to the shatterproofing film for glass, the film can express, for example, heat-retaining property against a change in external temperature.

Further, in recent years, the shatterproofing film for glass has been required to have performance such as physical functionality or chemical functionality.

Depending on a place where the shatterproofing film for glass is used, the film may be exposed to such a situation that a fingerprint is liable to adhere to its surface. When the surface of the shatterproofing film for glass has a fingerprint adhering thereto, there arises a problem in, for example, that its quality in external appearance is impaired. As a result, it becomes difficult to apply the film to an application requiring a satisfactory external appearance.

In addition, the conventional shatterproofing film for glass uses a material that hardly absorbs ink, and hence it is difficult to directly print on its surface. Accordingly, there arises a problem in that a shatterproofing film for glass having printing on its surface is difficult to obtain.

In addition, the conventional shatterproofing film for glass does not have antireflection property or is not sufficient in antireflection property in some cases. Inthosecases, for example, depending on applications, unnecessary reflection of light or the like becomes a problem.

In addition, when light selective transmission property can be imparted to the shatterproofing film for glass, an optical filter member or the like having glass-shatterproof property can be provided.

In addition, the conventional shatterproofing film for glass involves a problem in that, when the film is exposed to an alkaline environment, its surface is corroded, with the result that a wrinkle, a blister, or the like occurs.

In addition, the conventional shatterproofing film for glass involves a problem in that, when the film is exposed to an acidic environment, its surface is corroded, with the result that a wrinkle, a blister, or the like occurs.

In addition, the conventional shatterproofing film for glass involves a problem in that, when the film is exposed to a solvent such as an organic solvent, its surface is corroded, with the result that a wrinkle, a blister, or the like occurs.

Further, in recent years, the shatterproofing film for glass has been required to have performance such as environment-resistant functionality or hygienic functionality.

When the shatterproofing film for glass is used for, for example, glass in a building, the film is required to have performance such as antifouling property, dust-proof property, cleaning property, antibacterial property, or organic matter degradability.

In addition, depending on a place where the shatterproofing film for glass is used, the film may be exposed to such a situation that a stain is liable to adhere to its surface. When the surface of the shatterproofing film for glass has a stain adhering thereto, there arises a problem in, for example, that its quality in external appearance is impaired. As a result, it becomes difficult to apply the film to an application requiring a satisfactory external appearance.

In addition, the conventional shatterproofing film for glass does not have moisture-conditioning property or is not sufficient in moisture-conditioning property in some cases. In those cases, there arises a problem in that, when the film is used for, for example, an inner wall surface of a house, dew condensation occurs.

In addition, the conventional shatterproofing film for glass does not have moisture-preventing property or is not sufficient in moisture-preventing property in some cases. In those cases, there arises a problem in that, when the film is used for, for example, an inner wall surface of a house, dew condensation occurs.

In addition, the conventional shatterproofing film for glass does not have water resistance or is not sufficient in water resistance in some cases. In those cases, there arises a problem in that its surface deteriorates when exposed to moisture.

In addition, the conventional shatterproofing film for glass does not have water repellency or is not sufficient in water repellency in some cases. In those cases, for example, there arises a problem in that, when its surface is stained with a contaminant, the contaminant cannot be easily removed with water.

In addition, the conventional shatterproofing film for glass does not have hydrophilicity or is not sufficient in hydrophilicity in some cases. In those cases, for example, there arises a problem in that, when its surface is stained with a contaminant, the contaminant cannot be easily removed by washing.

In addition, the conventional shatterproofing film for glass does not have oil repellency or is not sufficient in oil repellency in some cases. In those cases, for example, there arises a problem in that, when its surface is stained with an oily contaminant, the oily contaminant cannot be easily removed.

In addition, depending on a place where the shatterproofing film for glass is used, various bacteria may grow on its surface. In such situation, when antibacterial property can be imparted to the shatterproofing film for glass, the growth of the various bacteria can be effectively suppressed even in the case of using the film under an environment in which these bacteria easily grow.

In addition, depending on a place where the shatterproofing film for glass is used, various fungi may grow on its surface. In such situation, when antifungal property can be imparted to the shatterproofing film for glass, the growth of the various fungi can be effectively suppressed even in the case of using the film under an environment in which these fungi easily grow.

In addition, when deodorant property can be imparted to the shatterproofing film for glass, the film can reduce an odor in the vicinity of an adherend by being flexibly attached to the adherend.

### Citation List

### Patent Literature

[PTL 1] JP 09-176337 A
[PTL 2] JP 2005-082775 A
[PTL 3] JP 2002-173379 A

### Summary of Invention

### Technical Problem

An object of the present invention is to provide a shatterproofing member including a convertible pressure-sensitive adhesive layer, which allows adherends to be instantly fixed to each other, allows the adherends to be reattached to each other, is excellent in processability such as being able to be cut into a sheet shape, is not peeled from the adherends even when exposed to a high-temperature atmosphere such as one in a fire, and can express shatterproof property when attached to an adherend that is broken by combustion such as glass even if exposed to combustion during a fire or the like.

A preferred obj ect of the present invention is to provide ashatterproofing memberincluding a convertible pressure-sensitive adhesive layer, which is excellent in scratch resistance.

A preferred object of the present invention is to provide a shatterproofingmember including a convertible pressure-sensitive adhesive layer, which is excellent in thermal functionality.

A preferred obj ect of the present invention is to provide ashatterproofing memberincluding a convertible pressure-sensitive adhesive layer, which is excellent in physical functionality and chemical functionality.

A preferred object of the present invention is to provide ashatterproofing memberincluding a convertible pressure-sensitive adhesive layer, which is excellent in environment-resistant functionality or hygienic functionality.

### Solution to Problems

The shatterproofing member including a convertible pressure-sensitive adhesive layer of the presentinventionincludes: a convertible pressure-sensitive adhesive layer; and an flame-resistant material, in which the convertible pressure-sensitive adhesive layer has pressure-sensitive adhesive property before being sintered, and has adhesive property after being sintered.

In a preferred embodiment, the shatterproofing member including a convertible pressure-sensitive adhesive layer of the present invention further includes a protective layer as at least one outermost layer.

In a preferred embodiment, the protective layer includes a resin layer.

In a preferred embodiment, the resin layer includes a polyester-based resin layer.

In a preferred embodiment, the protective layer includes at least one kind selected from a UV-curing type hard coat layer, a thermosetting type hard coat layer, and an organic-inorganic hybrid type hard coat layer.

In a preferred embodiment, the protective layer has a thickness of 0.1 µm to 200 µm.

In a preferred embodiment, the shatterproofing member including a convertible pressure-sensitive adhesive layer of the present invention further includes a thermally functional layer as at least one outermost layer.

In a preferred embodiment, the thermally functional layer has a thickness of 0.1 µm to 200 µm.

In a preferred embodiment, the thermally functional layer includes a heat-insulating layer.

In a preferred embodiment, the heat-insulating layer contains hollow bead structures.

In a preferred embodiment, the hollow bead structures include glass beads.

In a preferred embodimenht, the thermally functional layer includes a heat-shielding layer.

In a preferred embodiment, the heat-shielding layer contains at least one kind selected from a pigment, a ceramic, a metal, and microballoons.

In a preferred embodiment, the heat-shielding layer includes at least one kind selected from an applied layer, a sheet layer, a foil layer, a sputtered layer, and a deposited layer.

In a preferred embodiment, the shatterproofing member including a convertible pressure-sensitive adhesive layer of the present invention further includes a physically functional layer as at least one outermost layer.

In a preferred embodiment, the physically functional layer has a thickness of 0.1 µm to 200 µm.

In a preferred embodiment, the physically functional layer includes any one of an anti-fingerprint layer, an ink-absorbing layer, an antireflection layer, and a light selective transmission layer.

In a preferred embodiment, the shatterproofing member including a convertible pressure-sensitive adhesive layer of the present invention further includes a chemically functional layer as at least one outermost layer.

In a preferred embodiment, the chemically functional layer has a thickness of 0.1 µm to 200 µm.

In a preferred embodiment, the chemically functional layer includes any one of an alkali-resistant layer, an acid-resistant layer, and a solvent-resistant layer.

In a preferred embodiment, the shatterproofing member including a convertible pressure-sensitive adhesive layer of the present invention further includes an environment-resistant layer as at least one outermost layer.

In a preferred embodiment, the environment-resistant layer has a thickness of 0.1 µm to 200 µm.

In a preferred embodiment, the environment-resistant layer includes any one of a photocatalyst layer, an antifouling layer, a moisture-conditioning layer, a moisture-preventing layer, a water-resistant layer, a water-repellent layer, a hydrophilic layer, and an oil-repellent layer.

In a preferred embodiment, the shatterproofing member including a convertible pressure-sensitive adhesive layer of the present invention further includes a hygienically functional layer as at least one outermost layer.

In a preferred embodiment, the hygienically functional layer has a thickness of 0.1 µm to 200 µm.

In a preferred embodiment, the hygienically functional layer includes any one of an antibacterial layer, an antifungal layer, and a deodorant layer.

In a preferred embodiment, the convertible pressure-sensitive adhesive layer includes sinterable particles and a polymer component.

In a preferred embodiment, the deformation point of each of the sinterable particles is 250°C to 800°C.

In a preferred embodiment, the sinterable particles are each formed of at least one kind of component selected from silicic acid, boric acid, borosilicic acid, aluminum oxide, calcium oxide, sodium oxide, lithium oxide, and phosphorus oxide.

In a preferred embodiment,the average particle diameter of each of the sinterable particles is 0.1 µm to 1,000 µm.

In a preferred embodiment, the content ratio of the sinterable particles is 1 wt% to 80 wt% with respect to a solid content of the convertible pressure-sensitive adhesive layer.

In a preferred embodiment, the polymer component includes at least one kind of component selected from a rubber-based polymer, a silicone-based polymer, and an acrylic polymer.

In a preferred embodiment, a material for forming the polymer component contains a photopolymerization initiator.

In a preferred embodiment, the convertible pressure-sensitive adhesive layer is obtained by photopolymerization.

In a preferred embodiment, the flame-resistant material includes an inorganic backing.

In a preferred embodiment, the inorganic backing includes a fibrous inorganic backing.

In a preferred embodiment, the fibrous inorganic backing includes a glass cloth.

In a preferred embodiment, the shatterproofing member including a convertible pressure-sensitive adhensive layer has a sheet shape or a tape shape, and has a thickness of 1 µm to 1,000 µm.

### Advantageous Effects of Invention

According to one embodiment of the present invention, it is possible to provide the shatterproofing member including a convertible pressure-sensitive adhesive layer, which allows adherends to be instantly fixed to each other, allows the adherends to be reattached to each other, is excellent in processability such as being able to be cut into a sheet shape, is not peeled from the adherends even when exposed to a high-temperature atmosphere such as one in a fire, and can express shatterproof property when attached to an adherend that is broken by combustion such as glass even if exposed to combustion during a fire or the like. Further, the shatterproofing member with a pressure-sensitive adhesive layer provided by the present invention is excellent in flame retardancy when used in flame-retardant treatment for lumber or plastic.

According to one preferred embodiment of the present invention, it is possible to provide the shatterproofing member including a convertible pressure-sensitive adhesive layer, which is excellent in scratch resistance.

According to one preferred embodiment of the present invention, it is possible to provide the shatterproofing member including a convertible pressure-sensitive adhesive layer, which is excellent in thermal functionality. When the shatterproofing member including a convertible pressure-sensitive adhesive layer of the present invention is excellent in thermal functionality, the shatterproofing member including a convertible pressure-sensitive adhesive layer of the present invention is excellent in high-temperature pressure-sensitive adhesive property/high-temperature adhesive property.

According to one preferred embodiment of the present invention, it is possible to provide the shatterproofing member including a convertible pressure-sensitive adhesive layer, which is excellent in physical functionality and chemical functionality.

When theshatterproofing memberincluding a convertible pressure-sensitive adhesive of the present invention includes the anti-fingerprint layer as the physically functional layer, the member can effectively express excellent anti-fingerprint performance.

When the shatterproofing member including a convertible pressure-sensitive adhesive of the present invention includes the ink-absorbing layer as the physically functional layer, the member can effectively express excellent printing property.

When the shatterproofingmember including a convertible pressure-sensitive adhesive of the present invention includes the antireflection layer as the physically functional layer, the member can effectively express excellent antireflection property.

When the shatterproof ing member including a convertible pressure-sensitive adhesive of the present invention includes the light selective transmission layer as the physically functional layer, the member can effectively express excellent light selective transmission property.

When the shatterproof ing member including a convertible pressure-sensitive adhesive of the present invention includes the alkali-resistant layer as the chemically functional layer, the member can effectively express excellent alkali resistance.

When the shatterproof ing member including a convertible pressure-sensitive adhesive of the present invention includes the acid-resistant layer as the chemically functional layer, the member can effectively express excellent acid resistance.

When the shatterproofing member including a convertible pressure-sensitive adhesive of the present invention includes the solvent-resistant layer as the chemically functional layer, the member can effectively express excellent solvent resistance.

According to one preferred embodiment of the present invention, it is possible to provide the shatterproofing member including a convertible pressure-sensitive adhesive layer, which is excellent in environment-resistant functionality or hygienic functionality.

When the shatterproofing member including a convertible pressure-sensitive adhesive layer of the present invention includes the photocatalyst layer as the environment-resistant functional layer, the member can effectively express photocatalytic performance such as antifouling property, dust-proof property, cleaning property, antibacterial property, or organic matter degradability.

When the shatterproof ing member including a convertible pressure-sensitive adhesive layer of the present invention includes the antifouling layer as the environment-resistant functional layer, the member can effectively express excellent antifouling performance.

When the shatterproofing member including a convertible pressure-sensitive adhesive layer of the present invention includes the moisture-conditioning layer as the environment-resistant functional layer, the member can effectively express excellent moisture-conditioning property.

When the shatterproofing member-including a convertible pressure-sensitive adhesive layer of the present invention includes the moisture-preventing layer as the environment-resistant functional layer, the member can effectively express excellent moisture-preventing property.

When the shatterproofing member including a convertible pressure-sensitive adhesive layer of the present invention includes the water-resistant layer as the environment-resistant functional layer, the member can effectively express excellent water resistance, and hence its surface hardly deteriorates even when exposed to moisture.

When the shatterproof ing member including a convertible pressure-sensitive adhesive layer of the present invention includes the water-repellent layer as the environment-resistant functional layer, the member can effectively express excellent water repellency, and hence when its surface is stained with a contaminant, the contaminant can be easily removed with water.

When the shatterproofingmember including a convertible pressure-sensitive adhesive layer of the present invention includes the hydrophilic layer as the environment-resistant functional layer, the member can effectively express excellent hydrophilicity, and hence when its surface is stained with a contaminant, the contaminant can be easily removed by washing.

When the shatterproofingmember including a convertible pressure-sensitive adhesive layer of the present invention includes the oil-repellent layer as the environment-resistant functional layer, the member can effectively express excellent oil repellency, and hence when its surface is stained with an oily contaminant, the oily contaminant can be easily removed.

When the shatterproof ing member including a convertible pressure-sensitive adhesive layer of the present invention includes the antibacterial layer as the hygienically functional layer, the member can effectively express excellent antibacterial performance.

When the shatterproof ing member including a convertible pressure-sensitive adhesive layer of the present invention includes the antifungal layer as the hygienically functional layer, the member can effectively express excellent antifungal performance.

When the shatterproofing member including a convertible pressure-sensitive adhesive layer of the present invention includes the deodorant layer as the hygienically functional layer, the member can effectively express excellent deodorant property, and hence can reduce an odor in the vicinity of an adherend.

### Brief Description of Drawings

FIG. **1** is an example of a schematic sectional view of a shatterproofing member including a convertible pressure-sensitive adhesive layer of the present invention.
FIG. **2** is an example of a schematic sectional view of another shatterproofing member including a convertible pressure-sensitive adhesive layer of the present invention.
FIG. **3** is an example of a schematic sectional view of still another shatterproofing member including a convertible pressure-sensitive adhesive layer of the present invention.
FIG. **4** is an example of a schematic sectional view of still another shatterproofing member including a convertible pressure-sensitive adhesive layer of the present invention.
FIG. **5** is a schematic view of a method of evaluating glass-shatterproof property.
FIG. **6** is a schematic view of a method for a horizontal firing test.
FIG. **7** is a schematic view of a method of evaluating high-temperature pressure-sensitive adhesive property and high-temperature adhesive property.

### Description of Embodiments

### <<Shatterproofing member including convertible pressure-sensitive adhesive layer>>

A shatterproofing member including a convertible pressure-sensitive adhesive layer of the present invention includes a convertible pressure-sensitive adhesive layer and a flame-resistant material.

The convertible pressure-sensitive adhesive layer has pressure-sensitive adhesive property before being sintered, and has adhesive property after being sintered. Herein, the shatterproofing member including a convertible pressure-sensitive adhesive layer of the present invention means a shatterproofing member including a convertible pressure-sensitive adhesive layer before being sintered. That is, the shatterproofing member including a convertible pressure-sensitive adhesive layer of the present invention has pressure-sensitive adhesive property as it is, and its adhesive property is expressed by performing sintering.

The term "pressure-sensitive adhesive" as used in the present invention refers to, as defined in JIS, an adhesive with a kind of adhesive property that is temporary and can be exerted by applying only a slight pressure. In addition, the property involves cohesive strength and elasticity, and hence allows peeling from a hard smooth surface while exerting strong adhesive property. A pressure-sensitive adhesive is a soft solid, and does not cause a change in state unlike an adhesive. The pressure-sensitive adhesive wets an adherend and resists peeling while keeping its original state, and hence can instantly exert adhesive strength on a practical level upon attachment of adherends to each other. That is, the pressure-sensitive adhesive has liquid property to wet an adherend (fluidity) in combination with solid property to resist peeling (cohesive strength). The pressure-sensitive adhesive is a soft solid, and hence its contact area with an adherend gradually increases through the application of a pressure or the passing of time. In addition, the pressure-sensitive adhesive can keep the softness for a long time period, and hence has property of allowing peeling to be performed when the peeling is desired.

The term "adhesive" as used in the present invention refers to, as defined in JIS, an adhedive with property of allowing surfaces of solids of the same kind or different kinds to be attached to each other into integration. An adhesive is a liquid having fluidity when adherends are attached to each other, and wets the adherends and conforms thereto. After that, the adhesive is converted to a solid by heating or chemical reaction to firmly bond the adherends at their interface and to exert the ability to resist peeling. That is, the adhesive wets an adherend as a liquid and exerts adhesive property as a solid.

### <Protective layer>

The shatterproofing member including a convertible pressure-sensitive adhesive layer of the present invention preferably includes a protective layer as at least one outermost layer. The shatterproofing member including a convertible pressure-sensitive adhesive layer of the present invention may include the protective layer as one outermost layer, or as each of both outermost layers.

The protective layer according to one preferred embodiment is a resin layer. Such resin layer is preferably a polyester-based resin layer. Any appropriate polyester resin may be adopted as a polyester resin that serves as a material for such polyester-based resin layer. Examples of such polyester resin include polyethylene terephthalate (PET) and polyethylene naphthalate (PEN).

The resin layer may further contain any appropriate additive depending on purpose. Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives to be incorporated into the resin layer can be appropriately set depending on purposes.

The protective layer according to another preferred embodiment is at least one kind selected from a UV-curing type hard coat layer, a thermosetting type hard coat layer, and an organic-inorganic hybrid type hard coat layer.

The UV-curing type hard coat layer can be formed from a resin composition containing a UV-curable resin. The thermosetting type hard coat layer can be formed from a resin composition containing a thermosetting resin. The organic-inorganic hybrid type hard coat layer can be formed from a resin composition containing an organic-inorganic hybrid resin.

Examples of such resin as described above include an acrylic resin, an oxetane-based resin, an epoxy resin, and a silicone-based resin. A hard coat layer capable of effectively expressing excellent scratch-resisting performance can be obtained by using a resin composition containing such resin in the formation of the hard coat layer. Of those, the acrylic resin is particularly preferred in terms of, for example, handleability.

Any appropriate acrylic resin may be adopted as the acrylic resin as long as the resin has a repeating unit derived from any of various monofunctional or polyfunctional (meth) acrylates. Examples of the monofunctional (meth)acrylate include isobornyl acrylate, tetrahydrofurfuryl acrylate, 2-hydroxy-3-phenoxypropyl acrylate, butoxyethyl acrylate, lauryl acrylate, stearyl acrylate, benzyl acrylate, hexyl diglycol acrylate, 2-hydroxyethyl acrylate, 2-ethylhexyl acrylate, cyclohexyl acrylate, phenoxyethyl acrylate, dicyclopentadiene acrylate, polyethylene glycol acrylate, polypropylene glycol acrylate, and nonylphenoxyethyl cellosolve acrylate. Examples of the polyfunctional (meth)acrylate include: polyfunctional (meth)acrylates such as polyethylene glycol diacrylate, neopentyl glycol diacrylate, trimethylolpropane triacrylate, and pentaerythritol triacrylate; and polyfunctional (meth) acrylate oligomers such as oligourethane (meth) acrylate and oligoester (meth) acrylate. Those (meth) acrylates may be used alone, or two or more kinds thereof may be mixed and used to form a copolymer.

The resin composition may further contain any appropriate additive depending on purposes. Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives to be incorporated into the resin composition can be appropriately set depending on purposes.

The pencil hardness of the protective layer is preferably 2H to 8H, more preferably 4H to 6H. A protective layer having excellent scratch resistance can be obtained by setting the pencil hardness of the protective layer in such range.

The thickness of the protective layer is preferably 0. 1 µm to 200 µm, more preferably 0. 5 µm to 150 µm, still more preferably 1 µm to 100 µm. As long as the thickness of the protective layer falls within the range, the layer can express excellent scratch resistance.

### <Thermally functional layer>

The shatterproofing member including a convertible pressure-sensitive adhesive layer of the present invention preferably includes a thermally functional layer as at least one outermost layer. The shatterproofing member including a convertible pressure-sensitive adhesive layer of the present inventionmay include the thermally functional layer as one outermost layer, or as each of both outermost layers.

Any appropriate layer may be adopted as the thermally functional layer as long as the layer can express thermal functionality. Preferred examples of such thermally functional layer include a heat-insulating layer and a heat-shielding layer.

The thickness of the thermally functional layer is preferably 0.1 µm to 200 µm, more preferably 0.5 µm to 150 µm, still more preferably 1 µm to 100 µm. As long as the thickness of the thermally functional layer falls within the range, the layer can express excellent thermal functionality, and can express excellent high-temperature pressure-sensitive adhensive property and high-temperature adhensive property.

Any appropriate layer may be adopted as the heat-insulating layer as long as a heat-insulating effect is obtained.

The heat-insulating layer preferably contains hollow bead structures. The term "hollow bead structures" refers to structures each including a gas layer in the inside of a bead. Examples of the gas layer include air, nitrogen, and a noble gas.

Examples of such hollow bead structures include hollow ceramic beads, hollow silica beads, Shirasu balloons, glass beads, and hollow styrene beads. Of those, the glass beads are particularly preferred.

The heat-insulating layer is more preferably a resin composition containing hollow bead structures.

A resin to be incorporated into such resin composition is not particularly limited as long as the resin can retain, for example, a heat-insulating material formed of the hollow beads and can be formed into a predetermined shape. Examples thereof include a polyolefin-based resin, an acrylic resin, a urethane resin, a polyester resin, a polystyrene, a vinyl chloride resin, a vinylidene chloride resin, a vinyl acetate-based resin, a polyamide resin, an epoxy resin, a phenol resin, and a fluorine-based resin.

The heat-insulating layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the heat-insulating layer can be appropriately set depending on purposes.

The thickness of the heat-insulating layer is preferably 0.1 µm to 200 µm, more preferably 0.5 µm to 150 µm, still more preferably 1 µm to 100 µm. As long as the thickness of the heat-insulating layer falls within the range, the layer can express excellent heat-insulating property, and can express excellent high-temperature pressure-sensitive adhensive property and high-temperature adhensive property.

Any appropriate layer may be adopted as the heat-shielding layer as long as the layer can express a heat-shielding effect. The term "heat-shielding effect" specifically refers to the following effect. The generation of thermal energy is suppressed by reflecting a large quantity of infrared rays.

The heat-shielding layer is preferably a layer having an average reflectance for light having any wavelength in the range of 780 nm to 2,100 nm of 50% or more.

The heat-shielding layer may be formed only of one layer, or may be formed of two or more layers.

The heat-shielding layer preferably contains any appropriate heat-shielding substance. Examples of such heat-shielding substance include a pigment, a ceramic, a metal, and microballoons. Only one kind of such heat-shielding substances may be used, or two or more kinds thereof may be used in combination.

When the heat-shielding substance is particulate, its average particle diameter is preferably 0.005 µm to 10 µm, more preferably 0.01 µm to 1 µm. When the heat-shielding substance is particulate, as long as its average particle diameter falls within the range, the heat-shielding property of the heat-shielding layer can be expressed at a high level.

Any appropriate pigment may be adopted as the pigment. The pigment is, for example, an inorganic pigment. Preferred examples of the inorganic pigment include: a white pigment such as titanium oxide, manganese dioxide, or cobalt oxide; and a pale color pigment using the white pigment and any other pigment in combination.

A ceramic of any appropriate form may be adopted as the ceramic.

Any appropriate metal may be adopted as the metal. Examples of the metal include aluminum and copper.

Microballoons are hollow fine particles each having a cavity in the inside thereof. Examples of the microballoons include ceramic balloons formed of a glass and a titania composite. Preferred examples thereof include glass beads.

The heat-shielding layer can contain any appropriate additive. Examplesofsuch additiveinclude a plasticizer,a filler, a lubricant, a thermal stabilizer, an anti-fogging agent, a stabilizer, an antioxidant, a surfactant, a resin, and a solvent.

The heat-shielding layer can adopt any appropriate form. The heat-shielding layer is preferably at least one kind selected from an applied layer, a sheet layer, a foil layer, a sputtered layer, and a deposited layer.

When the heat-shielding layer is an applied layer, the heat-shielding layer can be formed by applying any appropriate heat-shielding coating material.

When the heat-shielding layer is a sheet layer, the heat-shielding layer is, for example, a sheet layer containing a heat-shielding substance. Such sheet layer can be formed by any appropriate forming method.

When the heat-shielding layer is a foil layer, examples of the heat-shielding layer include foil layers formed of metal foils such as an aluminum foil and a copper foil.

When the heat-shielding layer is a sputtered layer or a deposited layer, the layer can be formed by any appropriate sputtering method or deposition method.

The thickness of the heat-shielding layer is preferably 0.1 µm to 100 µm, more preferably 1 µm to 100 µm. As long as the thickness of the heat-shielding layer falls within the range, the layer can express excellent heat-shielding property, and can express excellent high-temperature pressure-sensitive adhensive property and high-temperature adhensive property.

### <Physically functional layer>

The shatterproofing member including a convertible pressure-sensitive adhesive layer of the present invention preferably includes a physically functional layer as at least one outermost layer. The shatterproofing member including a convertible pressure-sensitive adhesive layer of the present invention may include the physically functional layer as one outermost layer, or as each of both outermost layers.

Any appropriate layer may be adopted as the physical functional layer as long as the layer can express physical functionality. Preferred examples of such physical functional layer include an anti-fingerprint layer, an ink-absorbing layer, an antireflection layer, and a light selective transmission layer.

The thickness of the physical functional layer is preferably 0.1 µm to 200 µm, more preferably 0.5 µm to 150 µm, still more preferably 1 µm to 100 µm. As long as the thickness of the physical functional layer falls within the range, the layer can express excellent physical functionality.

### (Anti-fingerprint layer)

Any appropriate layer may be adopted as the anti-fingerprint layer as long as the effect of the present invention is obtained. The layer is preferably a layer containing at least one kind of resin selected from a fluorine-based resin, a silicone-based resin, and a urethane-based resin.

The fluorine-based resin is, for example, a fluorine-containing silane compound (general formula (1)) described in JP 09-258003 A. The fluorine-based resins may be used alone or in combination.

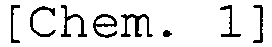

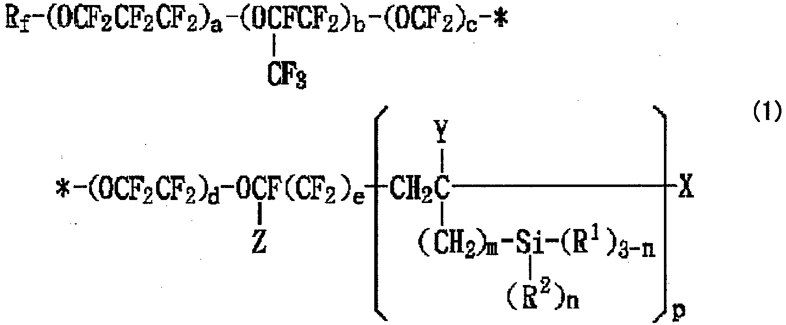

In the general formula (1), R_{f} represents a linear or branched perfluoroalkyl group having 1 to 16 carbon atoms, and preferred examples thereof include CF₃-, C₂F₅-, and C₃F₇-.

X represents iodine or hydrogen. Y represents hydrogen or a lower alkyl group.

R¹ represents a hydrolyzable group and preferred examples thereof include a halogen, -OR³, -OCOR³, -OC(R³)=C(R⁴)₂, -ON=C(R³)₂, and -ON=CR⁵ (provided that R³ represents an aliphatic hydrocarbon group or an aromatic hydrocarbon group, R⁴ represents hydrogen or a lower aliphatic hydrocarbon group, and R⁵ represents a divalent, aliphatic hydrocarbon group having 3 to 6 carbon atoms).

More preferred examples of R¹ include chlorine, -OCH₃, and -OC₂H₅.

R² represents hydrogen or an inert, monovalent organic group, preferably, for example, a monovalent hydrocarbon group having 1 to 4 carbon atoms.

a, b, c, and d each represent an integer of 0 to 200, preferably 1 to 50. e represents 0 or 1. m and n each represent an integer of 0 to 2, preferably 0. p represents an integer of 1 or more, preferably an integer of 1 to 10.

The molecular weight of the fluorine-containing silane compound represented by the general formula (1) is preferably 5×10² to 1×10⁵, more preferably 5×10² to 1×10⁴.

A preferred structure of the fluorine-containing silane compound represented by the general formula (1) is, for example, a structure represented by the general formula (2). In the general formula (2), q represents an integer of 1 to 50, r represents an integer of 1 or more, preferably an integer of 1 to 10, and the other symbols are the same as those described in the general formula (1).

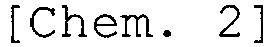

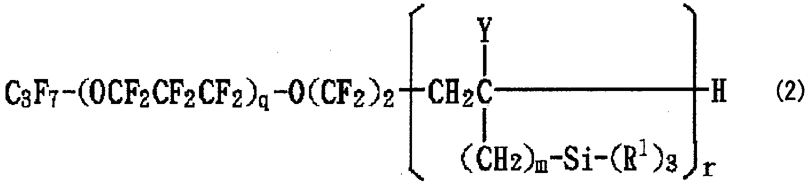

Examples of the silicone-based resin include a dimethylpolysiloxane, a methylhydropolysiloxane, a silicone oil or a silicone varnish, and a silicone-modified acrylic copolymer described in JP 09-111185 A. The silicone-based resins may be used alone or in combination.

Examples of the urethane-based resin include a urethane (meth)acrylate shown in JP 2010-248426 A, and a polyfunctional urethane (meth)acrylate compound obtained by causing a polyfunctional (meth) acrylate compound having active hydrogen and a polyisocyanate compound to react with each other. The urethane-based resins may be used alone or in combination.

Examples of the polyfunctional (meth) acrylate compound having active hydrogen in the polyfunctional urethane (meth) acrylate compound obtained by causing a polyfunctional (meth)acrylate compound having active hydrogen and a polyisocyanate compound to react with each other may include: pentaerythritols such as pentaerythritol tri(meth)acrylate, dipentaerythritol hexa(meth)acrylate, dipentaerythritol penta(meth)acrylate, dipentaerythritol tetra(meth)acrylate, dipentaerythritol tri(meth)acrylate, and dipentaerythritol di(meth)acrylate; methylols such as trimethylolpropane di(meth)acrylate; and epoxy acrylates such as bisphenol A diepoxy acrylate. Preferred examples of such polyfunctional (meth)acrylate compound having active hydrogen include pentaerythritol triacrylate and dipentaerythritol pentaacrylate. Those polyfunctional (meth)acrylates each having active hydrogen may be used alone or in combination.

Examples of the polyisocyanate compound in the polyfunctional urethane (meth) acrylate compound obtained by causing a polyfunctional (meth)acrylate compound having active hydrogen and a polyisocyanate compound to react with each other include polyisocyanate compounds each using, as a constituent, a linear saturated hydrocarbon, a cyclic saturated hydrocarbon (alicyclic), or an aromatic hydrocarbon. Specific examples thereof include: linear saturated hydrocarbon polyisocyanates such as tetramethylene diisocyanate, hexamethylene diisocyanate, and 2,2,4-trimethylhexamethylene diisocyanate; cyclic saturated hydrocarbon (alicyclic) polyisocyanates such as isophorone diisocyanate, dicyclohexylmethane diisocyanate, methylenebis(4-cyclohexylisocyanate), hydrogenated diphenylmethane diisocyanate, hydrogenated xylene diisocyanate, and hydrogenated toluene diisocyanate; and aromatic polyisocyanates such as 2,4-tolylene diisocyanate, 1,3-xylylene diisocyanate, p-phenylene diisocyanate, 3,3'-dimethyl-4,4'-diisocyanate, 6-isopropyl-1,3-phenyl diisocyanate, and 1,5-naphthalene diisocyanate. Preferred examples of such polyisocyanate compound include isophorone diisocyanate and hexamethylene diisocyanate. Those polyisocyanate compounds may be used alone or in combination.

Upon production of the polyfunctional urethane (meth)acrylate compound, the usage of the polyisocyanate compound with respect to 1 equivalent of an active hydrogen group in the polyfunctional (meth)acrylate compound having active hydrogen is preferably 0.1 equivalent to 50 equivalents, more preferably 0.1 equivalent to 10 equivalents in terms of an isocyanate group equivalent. A temperature for the reaction is preferably 30°C to 150°C, more preferably 50°C to 100°C. The end point of the reaction is calculated by a method involving causing the remaining isocyanate amount to react with an excess amount of n-butylamine and subjecting the resultant to back titration with 1 N hydrochloric acid, and the time point at which the remaining polyisocyanate amount becomes 0.5 wt% or less is defined as the end.

Upon production of the polyfunctional urethane (meth)acrylate compound, a catalyst may be added for the purpose of reducing the reaction time. Examples of such catalyst include a basic catalyst and an acidic catalyst. Examples of the basic catalyst may include: amines such as pyridine, pyrrole, triethylamine, diethylamine, dibutylamine, and ammonia; and phosphines such as tributylphosphine and triphenylphosphine. Examples of the acidic catalyst include: copper naphthenate, cobalt naphthenate, and zinc naphthenate; metal alkoxides such as tributoxyaluminum, trititanium tetrabutoxide, and zirconium tetrabutoxide; Lewis acids such as aluminum chloride; and tin compounds such as tin 2-ethylhexanoate, octyltin trilaurate, dibutyltin dilaurate, and octyltin diacetate. The addition amount of the catalyst is preferably 0.1 part by weight to 1 part by weight with respect to 100 parts by weight of the polyisocyanate.

Upon production of the polyfunctional urethane (meth)acrylate compound, a polymerization inhibitor (such as methoquinone, hydroquinone, methylhydroquinone, or phenothiazine) is preferably used in order that the polymerization of the (meth) acrylate compound during the reaction may be prevented. The usage of such polymerization inhibitor is preferably 0.01 wt% to 1 wt%, more preferably 0.05 wt% to 0. 5 wt% with respect to the reaction mixture. A temperature for the reaction is preferably 60 °C to 150 °C, more preferably 80°C to 120°C.

The anti-fingerprint layer may further contain any appropriate additive depending on purposes. Examples of such additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives to be incorporated into the anti-fingerprint layer can be appropriately set depending on purposes.

The anti-fingerprint layer may be formed only of one layer, or may be formed of two or more layers.

### (Ink-absorbing layer)

Any appropriate layer may be adopted as the ink-absorbing layer as long as a printing effect is obtained.

The ink-absorbing layer preferably contains a water-soluble resin. The content of the water-soluble resin in the ink-absorbing layer is preferably 50 wt% to 100 wt%, more preferably 70 wt% to 100 wt%, still more preferably 90 wt% to 100 wt%, particularly preferably 95 wt% to 100 wt%, most preferably substantially 100 wt%.

Any appropriate water-soluble resin may be adopted as the water-soluble resin. Such water-soluble resin is, for example, at least one kind selected from polyvinyl alcohol, polyvinylpyrrolidone, polyacrylic acid, polyethylenimine, and a copolymer of vinylpyrrolidone and vinyl acetate.

The water-soluble resins in the ink-absorbing layer may be used alone or in combination.

The ink-absorbing layer may further contain any appropriate additive depending on purposes. Examples of such additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the ink-absorbing layer can be appropriately set depending on purposes.

The ink-absorbing layer may be formed only of one layer, or may be formed of two or more layers.

### (Antireflection layer)

Any appropriate layer such as a known antireflection layer maybe adopted as the antireflection layer as long as an antireflection effect is obtained.

A formation material for the antireflection layer is, for example, a resin-based material such as a UV-curable acrylic resin, a hybrid type material obtained by dispersing inorganic fine particles made of colloidal silica or the like in a resin, or a sol-gel-based material using a metal alkoxide such as tetraethoxysilane or titanium tetraethoxide. Of those formation materials, a formation material containing a fluorine group is preferred for imparting contamination-preventing property to the surface of the layer. Of those formation materials, a formation material having a large inorganic component content is preferred for improving the scratch resistance of the layer. Such formation material having a large inorganic component content is, for example, the sol-gel-based material. The sol-gel-based material may be partially condensed.

An antireflection layer capable of achieving compatibility between scratch resistance and low reflection is, for example, an antireflection layer formed from a material (material described in JP 2004-167827 A) containing: a siloxane oligomer having a number-average molecular weight of from 500 to 10,000 in terms of ethylene glycol; and a fluorine compound having a number-average molecular weight of 5,000 or more in terms of a polystyrene, and having a fluoroalkyl structure and a polysiloxane structure.

An inorganic sol is also given as an example of the formation material for the antireflection layer. Examples of the inorganic sol include silica, alumina, and magnesium fluoride.

Hollow, spherical silicon oxide fine particles may be incorporated into the formation material for the antireflection layer. Examples of such hollow, spherical silicon oxide fine particles include silica-based fine particles disclosed in JP 2001-233611 A.

Any appropriate temperature may be adopted as each of drying and curing temperatures upon formation of the antireflection layer.

For example, application methods such as fountain coating, die coating, spin coating, spray coating, gravure coating, roll coating, and bar coating as wet modes, and vacuum deposition can each be adopted for the formation of the antireflection layer.

When the antireflection layer is a plurality of layers formed of two or more layers, the layer is preferably of, for example, a two-layer structure obtained by laminating a silicon oxide layer having a low refractive index (refractive index: about 1.45) on a titanium oxide layer having a high refractive index (refractive index: about 1.8).

The antireflection layer may further contain any appropriate additive depending on purposes. Examples of such additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the antireflection layer can be appropriately set depending on purposes.

The antireflection layer may be a single layer formed only of one layer, or may be a plurality of layers formed of two or more layers.

### (Light selective transmission layer)

Any appropriate layer may be adopted as the light selective transmission layer as long as a light selective transmission effect is obtained. The light selective transmission layer is preferably at least one kind selected from a metal thin film and a dielectric thin film. Any appropriate metal material may be adopted as a metal material for the metal thin film. Any appropriate dielectric material may be adopted as a dielectric material for the dielectric thin film.

A dielectric multilayer film obtained by alternately laminating a dielectric layer A and a dielectric layer B having a higher refractive index than a refractive index that the dielectric layer A has is suitable as the light selective transmission layer.

Amaterial whose refractive index falls within the range of 1. 6 or less can be preferably selected as a material for forming the dielectric layer A, and a material whose refractive index falls within the range of 1.2 to 1.6 can be more preferably selected as the material. Examples of such material include silica, alumina, lanthanum fluoride, magnesium fluoride, and sodium aluminum hexafluoride. Those materials may be used alone or in combination.

A material whose refractive index falls within the range of 1.7 or more can be preferably selected as a material for forming the dielectric layer B, and a material whose refractive index falls within the range of 1.7 to 2.5 can be more preferably selected as the material. Examples of such material include products each obtained by using, as a main component, titanium oxide, zirconium oxide, tantalum pentoxide, niobium pentoxide, lanthanum oxide, yttrium oxide, zinc oxide, zinc sulfide, or indium oxide and incorporating a small amount of titanium oxide, tin oxide, cerium oxide, or the like thereinto. Those materials may be used alone or in combination.

The light selective transmission layer may further contain any appropriate additive depending on purposes. Examples of such additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the light selective transmission layer can be appropriately set depending on purposes.

The light selective transmission layer may be a single layer formed only of one layer, or may be a plurality of layers formed of two or more layers.

When the light selective transmission layer is a plurality of layers, the light selective transmission layer is preferably at least one kind selected from a multilayer metal thin film and a multilayer dielectric thin film.

The light selective transmission layer is specifically, for example, a multilayer film obtained by alternately laminating a silica layer and a titania layer.

### <Chemically functional layer>

The shatterproofing member including a convertible pressure-sensitive adhesive layer of the present invention preferably includes a chemically functional layer as at least one outermost layer. The shatterproofing member including a convertible pressure-sensitive adhesive layer of the present invention may include the chemically functional layer as one outermost layer, or as each of both outermost layers.

Any appropriate layer may be adopted as the chemically functional layer as long as the layer can express chemical functionality. Preferred examples of such chemically functional layer include an alkali-resistant layer, an acid-resistant layer, and a solvent-resistant layer.

The thickness of the chemically functional layer is preferably 0.1 µm to 200 µm, more preferably 0.5 µm to 150 µm, still more preferably 1 µm to 100 µm. As long as the thickness of the chemically functional layer falls within the range, the layer can express excellent chemical functionality.

### (Alkali-resistant layer)

Any appropriate layer may be adopted as the alkali-resistant layer as long as an alkali-resistant effect is obtained.

The alkali-resistant layer preferably contains an alkali-resistant resin. The content of the alkali-resistant resin in the alkali-resistant layer is preferably 50 wt% to 100 wt%, more preferably 70 wt% to 100 wt%, still more preferably 90 wt% to 100 wt%, particularly preferably 95 wt% to 100 wt%, most preferably substantially 100 wt%.

Any appropriate alkali-resistant resin may be adopted as the alkali-resistant resin. Examples of such alkali-resistant resin include at least one kind selected from a urethane-based resin, a phenol-based resin, and a fluorine-based resin. Specific examples of the urethane-based resin include an oil-modified polyurethane resin, an alkyd-based polyurethane resin, a polyester-based polyurethane resin, and a polyether-based urethane resin. Specific examples of the phenol-based resin include a novolac type phenol resin and a resol type phenol resin. Specific examples of the fluorine-based resin include polytetrafluoroethylene, polychlorotrifluoroethylene, polyvinyl fluoride, polyvinylidene fluoride, a tetrafluoroethylene/hexafluoropropylene copolymer, and a chlorofluoroethylene/vinylidene fluoride copolymer.

The alkali-resistant resins in the alkali-resistant layer may be used alone or in combination.

The alkali-resistant layer may further contain any appropriate additive depending on purposes. Examples of such additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the alkali-resistant layer can be appropriately set depending on purposes.

The alkali-resistant layer may be formed only of one layer, or may be formed of two or more layers.

### (Acid-resistant layer)

Any appropriate layer may be adopted as the acid-resistant layer as long as an acid-resistant effect is obtained.

The acid-resistant layer preferably contains an acid-resistant resin. The content of the acid-resistant resin in the acid-resistant layer is preferably 50 wt% to 100 wt%, more preferably 70 wt% to 100 wt%, still more preferably 90 wt% to 100 wt%, particularly preferably 95 wt% to 100 wt%, most preferably substantially 100 wt%.

Any appropriate acid-resistant resin may be adopted as the acid-resistant resin. Examples of such acid-resistant resin include at least one kind selected from a phenol-based resin, a silicone-based resin, and a fluorine-based resin. Specific examples of the phenol-based resin include a novolac type phenol resin and a resol type phenol resin. Specific examples of the silicone-based resin include dimethylpolysiloxane, methylhydropolysiloxane, a silicone oil or a silicone varnish, and a silicone-modified acrylic copolymer shown in JP 09-111185 A. Specific examples of the fluorine-based resin include polytetrafluoroethylene, polychlorotrifluoroethylene, polyvinyl fluoride, polyvinylidene fluoride, a tetrafluoroethylene/hexafluoropropylene copolymer, and a chlorofluoroethylene/vinylidene fluoride copolymer.

The acid-resistant resins in the acid-resistant layer may be used alone or in combination.

The acid-resistant layer may further contain any appropriate additive depending on purposes. Examples of such additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the acid-resistant layer can be appropriately set depending on purposes.

The acid-resistant layer may be formed only of one layer, or may be formed of two or more layers.

### (Solvent-resistant layer)

Any appropriate layer may be adopted as the solvent-resistant layer as long as a solvent-resistant effect is obtained.

The solvent-resistant layer preferably contains a solvent-resistant resin. The content of the solvent-resistant resin in the solvent-resistant layer is preferably 50 wt% to 100 wt%, more preferably 70 wt% to 100 wt%, still more preferably 90 wt% to 100 wt%, particularly preferably 95 wt% to 100 wt%, most preferably substantially 100 wt%.

Any appropriate solvent-resistant resin may be adopted as the solvent-resistant resin. Examples of such solvent-resistant resin include at least one kind selected from a urethane-based resin, a phenol-based resin, a silicone-based resin, and a fluorine-based resin. Specific examples of the urethane-based resin include an oil-modified polyurethane resin, an alkyd-based polyurethane resin, apolyester-basedpolyurethaneresin, andapolyether-basedurethane resin. Specific examples of the phenol-based resin include a novolac type phenol resin and a resol type phenol resin. Specific examples of the silicone-based resin include dimethylpolysiloxane, methylhydropolysiloxane, a silicone oil or a silicone varnish, and a silicone-modified acrylic copolymer shown in JP 09-111185 A. Specific examples of the fluorine-based resin include polytetrafluoroethylene, polychlorotrifluoroethylene, polyvinyl fluoride, polyvinylidene fluoride, a tetrafluoroethylene/hexafluoropropylene copolymer, and a chlorofluoroethylene/vinylidene fluoride copolymer.

The solvent-resistant resins in the solvent-resistant layer may be used alone or in combination.

The solvent-resistant layer may further contain any appropriate additive depending on purposes. Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the solvent-resistant layer can be appropriately set depending on purposes.

The solvent-resistant layer may be formed only of one layer, or may be formed of two or more layers.

### <Environment-resistant functional layer>

The shatterproofing member including a convertible pressure-sensitive adhesive layer of the present invention preferably includes an environment-resistant functional layer as at least one outermost layer. The shatterproofing member including a convertible pressure-sensitive adhesive layer of the present invention may include the environment-resistant functional layer as one outermost layer, or as each of both outermost layers.

Any appropriate layer may be adopted as the environment-resistant functional layer as long as the layer can express environment-resistant functionality. Preferred examples of such environment-resistant functional layer include a photocatalyst layer, an antifouling layer, a moisture-conditioning layer, a moisture-preventing layer, a water-resistant layer, a water-repellent layer, a hydrophilic layer, and an oil-repellent layer.

The thickness of the environment-resistant functional layer is preferably 0.1 µm to 200 µm, more preferably 0.5 µm to 150 µm, still more preferably 1 µm to 100 µm. As long as the thickness of the environment-resistant functional layer falls within the range, the layer can express excellent environment-resistant functionality.

### (Photocatalyst layer)

The photocatalyst layer contains a photocatalyst. Although the form of the photocatalyst may be any form, photocatalyst particles are preferred because photocatalyst performance can be sufficiently expressed.

The photocatalyst layer may be a layer formed only from the photocatalyst, or may be a layer formed from the photocatalyst and any appropriate component except the photocatalyst. Examples of the appropriate component except the photocatalyst include additives such as an inorganic binder and a dispersion stabilizer.

Examples of the photocatalyst particles include: metal oxides such as titanium oxide, zinc oxide, tin oxide, lead oxide, ferric oxide, dibismuth trioxide, tungsten trioxide, and strontium titanate; and products obtained by adding metals such as Fe, Co, Ni, Cu, Zn, Ru, Rh, Pd, Ag, Pt, and Au to the metal oxides. Of those, titanium oxide is preferred because it is non-hazardous, chemically stable, and inexpensive. Although any one of anatase type titanium oxide, rutile type titanium oxide, and brookite type titanium oxide can be used as the titanium oxide, titanium oxide that uses the anatase type titanium oxide highly active for a photocatalytic reaction as a main component is preferred.

The average particle diameter of each of the photocatalyst particles is preferably 0.005 µm to 0.1 µm, more preferably 0.01 µm to 0.1 µm. As long as the average particle diameter of each of the photocatalyst particles falls within the range, the transparency of the photocatalyst layer can be secured and its photocatalytic activity can be retained at a high level.

The photocatalyst layer may be formed only of one layer, or may be formed of two or more layers.

The inorganic binder enhances adhesion between the photocatalyst particles and improves the strength of the layer based on the photocatalyst. Any appropriate inorganic compound may be adopted as the inorganic binder as long as the compound functions as a binder. The inorganic binder is preferably, for example, a silica compound. Tetra-, tri-, and bifunctional alkoxysilanes, and condensates and hydrolysates of these alkoxysilanes, a silicone varnish, and the like can each be used as the silica compound. The tri- and bifunctional alkoxysilanes are generally referred to as "silane coupling agents" in some cases. Specifically, examples of the tetrafunctional alkoxysilane include tetramethoxysilane, tetraethoxysilane, and tetrapropoxysilane, examples of the trifunctional alkoxysilane include methyltrimethoxysilane, methyltriethoxysilane, phenyltrimethoxysilane, phenyltriethoxysilane, vinyltrimethoxysilane, vinyltriethoxysilane, methacryloxypropyltrimethoxysilane, glycidopropoxytrimethoxysilane, glycidopropylmethyldiethoxysilane, aminopropyltriethoxysilane, aminoethylaminopropyltrimethoxysilane, and mercaptopropyltrimethoxysilane, and examples of the bifunctional alkoxysilane include dimethyldimethoxysilane, dimethyldiethoxysilane, diphenyldimethoxysilane, and diphenyldiethoxysilane. Examples of the condensates of the alkoxysilanes include condensates of the tetrafunctional alkoxysilane such as Ethyl Silicate 40, Ethyl Silicate 48, and Methyl Silicate 51. Examples of the hydrolysates of the alkoxysilanes include products obtained by hydrolyzing the alkoxysilanes with an organic solvent, water, and a catalyst. Of those silica compounds, in particular, tetramethoxysilane, tetraethoxysilane, Ethyl Silicate 40, Ethyl Silicate 48, Methyl Silicate 51, and alcoholic silica sols as hydrolysis products thereof are particularly preferred because each of them can firmly fix the photocatalyst layer and is relatively inexpensive.

### (Antifouling layer)

Any appropriate layer may be adopted as the antifouling layer as long as an antifouling effect is obtained.

The antifouling layer is preferably, for example, a layer containing at least one kind selected from a fluorine-based resin and a silicone-based resin.

The fluorine-based resin is, for example, a fluorine-containing silane compound (general formula (1)) described in JP 09-258003 A. The fluorine-based resins may be used alone or in combination.

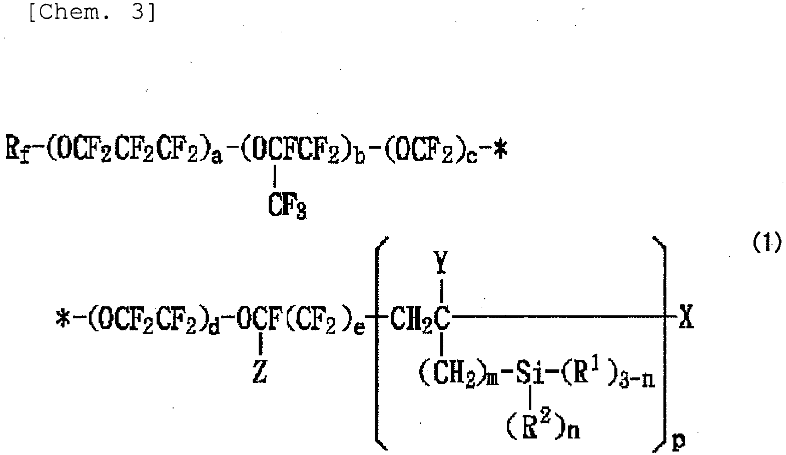

In the general formula (1), R_{f} represents a linear or branched perfluoroalkyl group having 1 to 16 carbon atoms, and preferred examples thereof include CF₃-, C₂F₅-, and C₃F₇-. X represents iodine or hydrogen. Y represents hydrogen or a lower alkyl group. R¹ represents a hydrolyzable group and preferred examples thereof include a halogen, -OR³, -OCOR³, -OC(R³)=C(R⁴)₂, -ON=C(R³)₂, and -ON=CR⁵ (provided that R³ represents an aliphatic hydrocarbon group or an aromatic hydrocarbon group, R⁴ represents hydrogen or a lower aliphatic hydrocarbon group, and R⁵ represents a divalent, aliphatic hydrocarbon group having 3 to 6 carbon atoms). More preferred examples of R¹ include chlorine, -OCH₃, and -OC₂H₅. R² represents hydrogen or an inert, monovalent organic group, preferably, for example, a monovalent hydrocarbon group having 1 to 4 carbon atoms. a, b, c, and d each represent an integer of 0 to 200, preferably 1 to 50. e represents 0 or 1. mandn each represent an integer of 0 to 2, preferably 0. p represents an integer of 1 or more, preferably an integer of 1 to 10.

The molecular weight of the fluorine-containing silane compound represented by the general formula (1) is preferably 5×10² to 1×10⁵, more preferably 5×10² to 1×10⁴.

A preferred structure of the fluorine-containing silane compound represented by the general formula (1) is, for example, a structure represented by the general formula (2). In the general formula (2), q represents an integer of 1 to 50, r represents an integer of 1 or more, preferably an integer of 1 to 10, and the other symbols are the same as those described in the general formula (1).

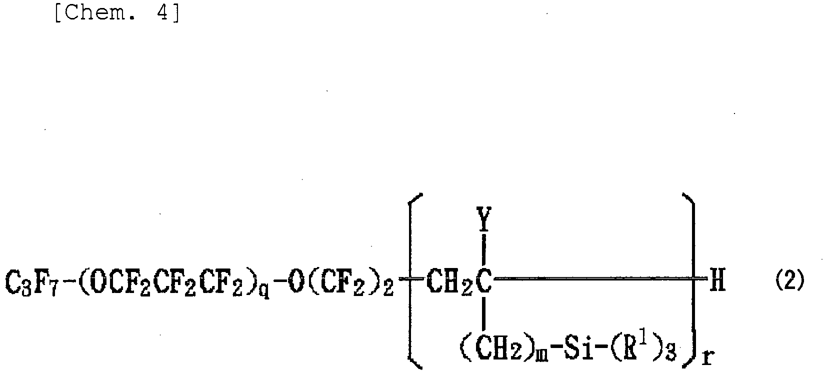

Examples of the silicone-based resin include a dimethylpolysiloxane, a methylhydropolysiloxane, a silicone oil or a silicone varnish, and a silicone-modified acrylic copolymer described in JP 09-111185 A. The silicone-based resins may be used alone or in combination.

The antifouling layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, and amounts of additives to be incorporated into the resin composition can be appropriately set depending on purposes.

The antifouling layer may be formed only of one layer, or may be formed of two or more layers.

### (Moisture-conditioning layer)

Any appropriate layer may be adopted as the moisture-conditioning layer as long as a moisture-conditioning effect is obtained.

The moisture-conditioning layer preferably contains a porous substance. The content of the porous substance in the moisture-conditioning layer is preferably 50 wt% to 100 wt%, more preferably 70 wt% to 100 wt%, still more preferably 90 wt% to 100 wt%, particularly preferably 95 wt% to 100 wt%, most preferably substantially 100 wt%.

Any appropriate porous substance may be adopted as the porous substance. Examples of such porous substance include an inorganic oxide, a composite inorganic oxide, and porous carbon. Such porous substance is specifically, for example, at least one kind selected from silica, alumina, magnesia, titania, zirconia, a silica-alumina composite oxide, zeolite, and activated carbon.

The porous substances in the moisture-conditioning layer may be used alone or in combination.

The moisture-conditioning layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the moisture-conditioning layer can be appropriately set depending on purposes.

The moisture-conditioning layer may be formed only of one layer, or may be formed of two or more layers.

### (Moisture-preventing layer)

Any appropriate layer may be adopted as the moisture-preventing layer as long as a moisture-preventing effect is obtained.

The moisture-preventing layer preferably contains a resin having a moisture-preventing effect. Specifically, the moisture-preventing layer preferably contains at least one kind selected from a polyvinylidene chloride-based resin and a polyolefin-based resin. The content of the at least one kind selected from a polyvinylidene chloride-based resin and a polyolefin-based resin in the moisture-preventing layer is preferably 50 wt% to 100 wt%, more preferably 70 wt% to 100 wt%, still more preferably 90 wt% to 100 wt%, particularly preferably 95 wt% to 100 wt%, most preferably substantially 100 wt%.

Any appropriate polyvinylidene chloride-based resin may be adopted as the polyvinylidene chloride-based resin as long as the resin has a constituent unit derived from a polyvinylidene chloride. Specific examples of such polyvinylidene chloride-based resin include a polyvinylidene chloride, a modified body of the polyvinylidene chloride, and a copolymer of vinylidene chloride and any other copolymerizable monomer.

Any appropriate polyolefin-based resin may be adopted as the polyolefin-based resin as long as the resin has a constituent unit derived from an olefin. Specific examples of such polyolefin-based resin include a polyethylene, a copolymer of ethylene and any other copolymerizable monomer, a polypropylene, and a copolymer of propylene and any other copolymerizable monomer.

The resins each having a moisture-preventing effect in the moisture-preventing layer may be used alone or in combination.

The moisture-preventing layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the moisture-preventing layer can be appropriately set depending on purposes.

The moisture-preventing layer may be formed only of one layer, or may be formed of two or more layers.

The moisture-preventing layer may be a layer formed from any appropriate moisture-preventing coating material.

### (Water-resistant layer)

Any appropriate layer may be adopted as the water-resistant layer as long as a water-resistant effect is obtained.

The water-resistant layer preferably contains a water-resistant resin. The content of the water-resistant resin in the water-resistant layer is preferably 50 wt% to 100 wt%, more preferably 70 wt% to 100 wt%, still more preferably 90 wt% to 100 wt%, particularly preferably 95 wt% to 100 wt%, most preferably substantially 100 wt%.

Any appropriate water-resistant resin may be adopted as the water-resistant resin. Such water-resistant resin is, for example, at least one kind selected from an epoxy-based resin, a phenol-based resin, a silicone-based resin, and a fluorine-based resin.

The epoxy-based resin is, for example, a cross-linked resin obtained by cross-linking an epoxy group present in an epoxy group-containing monomer or in an epoxy group-containing prepolymer with a curing agent (such as a photopolymerization initiator or a thermal polymerization initiator). Specific examples of the epoxy-based resin include a bisphenol A type epoxy resin, a bisphenol F type epoxy resin, a cresol novolac type epoxy resin, an alicyclic epoxy resin, and a phenol novolac type epoxy resin.

The phenol-based resin is, for example, a cured resin synthesized in the presence of a catalyst by using a phenol (such as phenol or cresol) and formaldehyde as a raw material. Specific examples of the phenol-based resin include a novolac type phenol resin and a resol type phenol resin.

The silicone-based resin is, for example, a resin having a main skeleton having a siloxane bond. Specific examples of the silicone-based resin include a dimethylpolysiloxane, a methylhydropolysiloxane, a silicone oil, a silicone varnish, and a silicone-modified acrylic copolymer described in JP 09-111185 A.

The fluorine-based resin is, for example, a resin obtained by polymerizing an olefin containing fluorine. Specific examples of the fluorine-based resin include polytetrafluoroethylene, polychlorotrifluoroethylene, polyvinyl fluoride, polyvinylidene fluoride, a tetrafluoroethylene/hexafluoropropylene copolymer, and a chlorofluoroethylene/vinylidene fluoride copolymer.

The water-resistant resins in the water-resistant layer may be used alone or in combination.

The water-resistant layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, and amounts of additives that can be incorporated into the water-resistant layer can be appropriately set depending on purposes.

The water-resistant layer may be formed only of one layer, or may be formed of two or more layers.

### (Water-repellent layer)

Any appropriate layer may be adopted as the water-repellent layer as long as a water-repellent effect is obtained.

The water-repellent layer preferably contains a water-repellent compound. The content of the water-repellent compound in the water-repellent layer is preferably 1 wt% to 100 wt%, more preferably 2 wt% to 100 wt%, still more preferably 3 wt% to 100 wt%.

Any appropriate water-repellent compound may be adopted as the water-repellent compound. Such water-repellent compound is, for example, at least one kind selected from a silicone-based compound and a fluorine-based compound.

The silicone-based compound is, for example, a silicone-based compound that can be used as a water-repellent agent. Such silicone-based compound is, for example, a resin having a main skeleton having a siloxane bond. Specific examples of the silicone-based compound include a dimethylpolysiloxane, a methylhydropolysiloxane, a silicone oil, a silicone varnish, and a silicone-modified acrylic copolymer described in JP 09-111185 A.

The fluorine-based compound is, for example, a fluorine-based compound that can be used as a water-repellent agent. Examples of such fluorine-based compound include a compound having a fluorine-containing chain and a resin obtained by polymerizing an olefin containing fluorine. Specific examples of the fluorine-based compound include polytetrafluoroethylene, polychlorotrifluoroethylene, polyvinyl fluoride, polyvinylidene fluoride, a tetrafluoroethylene/hexafluoropropylene copolymer, and a chlorofluoroethylene/vinylidene fluoride copolymer.

The water-repellent compounds in the water-repellent layer may be used alone or in combination.

The water-repellent layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an anti foaming agent. Thekinds, number, andamountsofadditives that can be incorporated into the water-repellent layer can be appropriately set depending on purposes.

The water-repellent layer may be formed only of one layer, or may be formed of two or more layers.

### (Hydrophilic layer)

Any appropriate layer may be adopted as the hydrophilic layer as long as a hydrophilic effect is obtained.

The hydrophilic layer preferably contains at least one kind selected from a hydrophilic inorganic compound and a hydrophilic resin. The hydrophilic inorganic compounds may be used alone or in combination. The hydrophilic resins may be used alone or in combination.

When the hydrophilic layer contains the hydrophilic inorganic compound, the content of the hydrophilic inorganic compound in the hydrophilic layer is preferably 1 wt% to 100 wt%, more preferably 2 wt% to 100 wt%, still more preferably 3 wt% to 100 wt%.

When the hydrophilic layer contains the hydrophilic resin, the content of the hydrophilic resin in the hydrophilic layer is preferably 1 wt% to 100 wt%, more preferably 2 wt% to 100 wt%, still more preferably 3 wt% to 100 wt%.

Any appropriate hydrophilic inorganic compound may be adopted as the hydrophilic inorganic compound. Such hydrophilic inorganic compound is, for example, at least one kind selected from titanium oxide, silica, and alumina.

Any appropriate hydrophilic resin may be adopted as the hydrophilic resin. Examples of such hydrophilic resin include at least one kind selected from: cationic polymers obtained from vinyl monomers each containing a cationic group such as an amino group, an ammonium group, a pyridyl group, an imino group, or a betaine structure; nonionic polymers obtained from vinyl monomers each containing a hydrophilic nonionic group such as a hydroxy group, an amide group, an ester group, or an ether group; and anionic polymers obtained from vinyl monomers each containing an anionic group such as a carboxyl group, a sulfonic acid group, or a phosphoric acid group.

Examples of the vinyl monomer containing a cationic group include: a (meth)acrylic acid ester or (meth)acrylamide having a dialkylamino group having 2 to 44 carbon atoms, such as dimethylaminoethyl (meth)acrylate, diethylaminoethyl (meth)acrylate, dipropylaminoethyl (meth)acrylate, diisopropylaminoethyl (meth)acrylate, dibutylaminoethyl (meth)acrylate, diisobutylaminoethyl (meth) acrylate, di(t-butyl)aminoethyl (meth)acrylate, dimethylaminopropyl(meth)acrylamide, diethylaminopropyl(meth)acrylamide, dipropylaminopropyl(meth)acrylamide, diisopropylaminopropyl(meth)acrylamide, dibutylaminopropyl(meth)acrylamide, diisobutylaminopropyl(meth)acrylamide, or di(t-butyl)aminopropyl(meth)acrylamide; styrene having a dialkylamino group having 2 to 44 carbon atoms, such as dimethylaminostyrene or dimethylaminomethylstyrene; vinylpyridine such as 2- or 4-vinylpyridine; an N-vinyl heterocyclic compound such as N-vinylimidazole; a vinyl ether such as aminoethyl vinyl ether or dimethylaminoethyl vinyl ether; acid-neutralized products of those monomers each having an amino group or products obtained by quaternarizing those monomers each having an amino group with alkyl (having 1 to 22 carbon atoms) halides, benzyl halides, alkyl (having 1 to 18 carbon atoms) or aryl (having 6 to 24 carbon atoms) sulfonic acids, or dialkyl (having 2 to 8 carbon atoms in total) sulfates; diallyl type quaternary ammonium salts such as dimethyldiallylammonium chloride and diethyldiallylammonium chloride; and vinyl monomers each having a betaine structure such as N-(3-sulfopropyl)-N-(meth)acryloyloxyethyl-N,N-dimethylammoniu m betaine, N-(3-sulfopropyl)-N-(meth)acryloylamidepropyl-N,N-dimethylammo nium betaine, N-(3-carboxymethyl)-N-(meth)acryloylamidepropyl-N,N-dimethylam monium betaine, and N-carboxymethyl-N-(meth)acryloyloxyethyl-N,N-dimethylammonium betaine.

Examples of the vinyl monomer containing a nonionic group include: vinyl alcohol; a (meth)acrylic acid ester or (meth) acrylamide having a hydroxyalkyl (having 1 to 8 carbon atoms) group, such as N-hydroxypropyl(meth)acrylamide, N-hydroxyethyl (meth)acrylate, or N-hydroxypropyl(meth)acrylamide; a (meth)acrylic acid ester of a polyhydric alcohol, such as polyethylene glycol (meth)acrylate (having a degree of polymerization of ethylene glycol of 1 to 30); (meth)acrylamide; an alkyl (having 1 to 8 carbon atoms) (meth)acrylamide such as N-methyl(meth)acrylamide, N-n-propyl(meth)acrylamide, N-isopropyl(meth)acrylamide, N-t-butyl(meth)acrylamide, or N-isobutyl(meth)acrylamide; a dialkyl (having 2 to 8 carbon atoms in total) (meth)acrylamide such as N,N-dimethyl(meth)acrylamide, N,N-diethyl(meth)acrylamide, N,N-dimethylacrylamide, or N,N-diethylacrylamide; diacetone (meth)acrylamide; an N-vinyl cyclic amide such as N-vinylpyrrolidone; a (meth) acrylic acid ester having an alkyl (having 1 to 8 carbon atoms) group such as methyl (meth)acrylate, ethyl (meth)acrylate, or n-butyl (meth)acrylate; and a (meth)acrylamide having a cyclic amide group such as N-(meth)acryloylmorpholine.

Examples of the vinyl monomer containing an anionic group include: carboxylic acid monomers each having a polymerizable unsaturated group such as (meth)acrylic acid, maleic acid, or itaconic acid and/or acid anhydrides thereof (in the case where two or more carboxyl groups are present in one monomer) ; sulfonic acid monomers each having a polymerizable unsaturated group such as styrenesulfonic acid and 2-(meth)acrylamide-2-alkyl (having 1 to 4 carbon atoms) propanesulfonic acid; vinylphosphonic acid; and phosphoric acid monomers each having a polymerizable unsaturated group such as a (meth) acryloyloxyalkyl (having 1 to 4 carbon atoms) phosphoric acid.

The hydrophilic layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, and amounts of additives that can be incorporated into the hydrophilic layer can be appropriately set depending on purposes.

The hydrophilic layer may be formed only of one layer, or may be formed of two or more layers.

### (Oil-repellent layer)

Any appropriate layer may be adopted as the oil-repellent layer as long as an oil-repellent effect is obtained.

The oil-repellent layer preferably contains an oil-repellent compound. The content of the oil-repellent compound in the oil-repellent layer is preferably 1 wt% to 100 wt%, more preferably 2 wt% to 100 wt%, still more preferably 3 wt% to 100 wt%.

Any appropriate oil-repellent compound may be adopted as the oil-repellent compound. Such oil-repellent compound is, for example, at least one kind selected from a fluorine-based resin and a fluorine-containing silane compound.

The fluorine-based resin is, for example, a fluorine-based resin that can be used as an oil-repellent agent. Examples of such fluorine-based resin include polytetrafluoroethylene, polychlorotrifluoroethylene, polyvinyl fluoride, polyvinylidene fluoride, a tetrafluoroethylene/hexafluoropropylene copolymer, and a chlorofluoroethylene/vinylidene fluoride copolymer.

The fluorine-containing silane compound is, for example, a fluorine-containing silane compound that can be used as an oil-repellent agent. Such fluorine-containing silane compound is, for example, such a fluorine-containing silane compound described in JP 09-258003 A as represented by the general formula (1). In the general formula (1), R_{f} represents a linear or branched perfluoroalkyl group having 1 to 16 carbon atoms, and preferred examples thereof include CF₃-, C₂F₅-, and C₃F₇-. X represents iodine or hydrogen. Y represents hydrogen or a lower alkyl group. R¹ represents a hydrolyzable group and preferred examples thereof include a halogen, -OR³, -OCOR³, -OC (R³)=C(R⁴)₂, -ON=C(R³)₂, and -ON=CR⁵ (provided that R³ represents an aliphatic hydrocarbon group or an aromatic hydrocarbon group, R⁴ represents hydrogen or a lower aliphatic hydrocarbon group, and R⁵ represents a divalent, aliphatic hydrocarbon group having 3 to 6 carbon atoms). More preferred examples of R¹ include chlorine, -OCH₃, and -OC₂H₅. R² represents hydrogen or an inert, monovalent organic group, preferably, for example, a monovalent hydrocarbon group having 1 to 4 carbon atoms. a, b, c, and d each represent an integer of 0 to 200, preferably 1 to 50. e represents 0 or 1. m and n each represent an integer of 0 to 2, preferably 0. p represents an integer of 1 or more, preferably an integer of 1 to 10. The molecular weight of the fluorine-containing silane compound represented by the general formula (1) is preferably 5×10² to 1×10⁵, more preferably 5×10² to 1×10⁴. A preferred structure of the fluorine-containing silane compound represented by the general formula (1) is, for example, a structure represented by the general formula (2). In the general formula (2), q represents an integer of 1 to 50, r represents an integer of 1 or more, preferably an integer of 1 to 10, and the other symbols are the same as those described in the general formula (1).

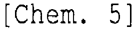

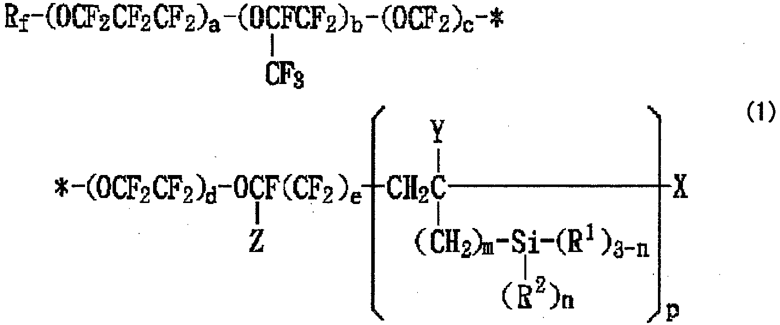

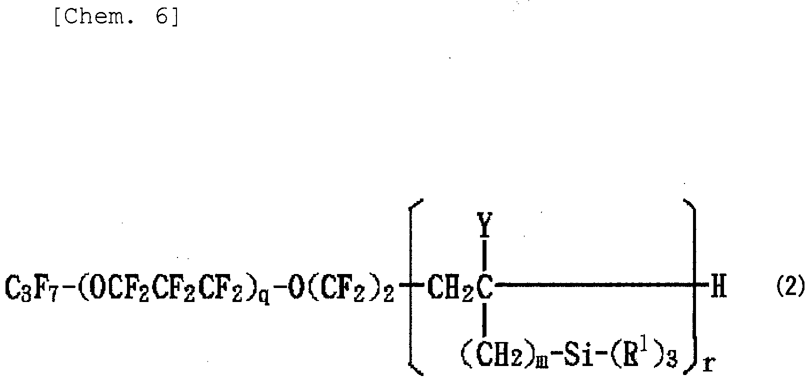

The oil-repellent compounds in the oil-repellent layer may be used alone or in combination.

The oil-repellent layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, and amounts of additives that can be incorporated into the oil-repellent layer can be appropriately set depending on purposes.

The oil-repellent layer may be formed only of one layer, or may be formed of two or more layers.

### <Hygienically functional layer>

The shatterproofing member including a convertible pressure-sensitive adhesive layer of the present invention preferably includes a hygienically functional layer as at least one outermost layer. The shatterproofing member including a convertible pressure-sensitive adhesive layer of the present invention may include the hygienically functional layer as one outermost layer, or as each of both outermost layers.

Any appropriate layer may be adopted as the hygienically functional layer as long as the layer can express hygienic functionality. Preferred examples of such hygienically functional layer include an antibacterial layer, an antifungal layer, and a deodorant layer.

The thickness of the hygienically functional layer is preferably 0.1 µm to 200 µm, more preferably 0.5 µm to 150 µm, still more preferably 1 µm to 100 µm. As long as the thickness of the hygienically functional layer falls within the range, the layer can express excellent hygienic functionality.

### (Antibacterial layer)

Any appropriate layer may be adopted as the antibacterial layer as long as an antibacterial effect is obtained.

The antibacterial layer preferably contains an antibacterial agent. Any appropriate antibacterial agent may be adopted as the antibacterial agent. The content of the antibacterial agent in the antibacterial layer is preferably 0.05 wt% to 20 wt%, more preferably 0.1 wt% to 15 wt%, still more preferably 0.5 wt% to 10 wt%. As long as the content of the antibacterial agent in the antibacterial layer falls within the range, the layer can express extremely excellent antibacterial property.

The antibacterial agent is preferably such that a metal component is carried on an inorganic powder. The carrying amount of the metal component is preferably 0.1 wt% to 30 wt%, more preferably 0.5 wt% to 20 wt%, still more preferably 1 wt% to 10 wt% in terms of a content in the antibacterial agent. As long as the carrying amount of the metal component falls within the range, the antibacterial layer can express extremely excellent antibacterial property.

Any appropriate inorganic powder may be adopted as the inorganic powder. The inorganic powder is preferably at least one kind selected from zeolite, silica gel, titanium oxide, and aluminum oxide.

Any appropriate metal component may be adopted as the metal component. The metal component is preferably at least one kind selected from silver, copper, zinc, tin, bismuth, cadmium, chromium, and mercury.

The antibacterial layer is more preferably a resin composition containing an antibacterial agent. A resin in such resin composition is, for example: a thermosetting resin such as a phenol-based resin, a urea-based resin, a melamine-based resin, an alkyd-based resin, a diallyl phthalate-based resin, an epoxy-based resin, a polyurethane-based resin, or a silicon-based resin; a resin such as a polyvinyl chloride-based resin, a polyvinylidene chloride-based resin, a fluorine-based resin, a polyvinyl fluoride-based resin, a polyvinylidene fluoride-based resin, a polyvinyl acetate-based resin, a polyvinyl alcohol-based resin, a polyvinyl formal-based resin, a saturated polyester-based resin, a polyethylene-based resin, a polypropylene-based resin, a polystyrene-based resin, an ABS-based resin, an acrylic resin, a polyamide-based resin, a polyacetal-based resin, a chlorinated polyether-based resin, a polycarbonate-based resin, a polyarylate-based resin, ethylcellulose, cellulose acetate, or cellulose nitrate; or an elastomer or rubber such as a natural rubber, an isoprene-based rubber, an acrylonitrile-based rubber, an acrylic rubber, a butadiene-based rubber, a butyl-based rubber, a styrene-based rubber, a chloroprene-based rubber, a chlorohydrin-based rubber, a polyolefin-based rubber, a urethane-based rubber, a polysulfide rubber, a silicone-based rubber, a fluorine-based rubber, or a fluorosilicone-based rubber.

The antibacterial layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, and amounts of additives that can be incorporated into the antibacterial layer can be appropriately set depending on purposes.

The antibacterial layer may be formed only of one layer, or may be formed of two or more layers.

### (Antifungal layer)

Any appropriate layer may be adopted as the antifungal layer as long as an antifungal effect is obtained.

The antifungal layer preferably contains an antifungal agent. Any appropriate antifungal agent may be adopted as the antifungal agent. The content of the antifungal agent in the antifungal layer is preferably 0.05 wt% to 20 wt%, more preferably 0.1 wt% to 15 wt%, still more preferably 0.5 wt% to 10 wt%. As long as the content of the antifungal agent in the antifungal layer falls within the range, the layer can express extremely excellent antifungal property.

The antifungal agent is preferably at least one kind selected from an organic antifungal agent and an inorganic antifungal agent.

Any appropriate organic antifungal agent may be adopted as the organic antifungal agent. The organic antifungal agent is preferably at least one kind selected from a thiocarbamate-based compound, a dithiocarbamate-based compound, an allylamine-based compound, an imidazole-based compound, a triazole-based compound, a thiazolone-based compound, a tropolone-based compound, and an organic acid-based compound. Examples of the thiocarbamate-based compound and the dithiocarbamate-based compound include tolnaftate, tolciclate, thiram (tetramethylthiuram disulfide), ferbam, ziram, zineb, maneb, and polycarbamate. Examples of the allylamine-based compound include butenafine. Examples of the imidazole-based compound include imidazole compounds each having a substituent (such as benzimidazole having a thiazolyl group, benzimidazole having a thiazolinyl group, and benzimidazole having a thiadiazolinyl group), clotrimazole, econazole, miconazole, tioconazole, bifonazole, sulconazole, croconazole, isoconazole, oxiconazole, and ketoconazole. Examples of the triazole-based compound include fluconazole. Examples of the thiazolone-based compound include 1,2-benzisothiazolin-3-one. Examples of the tropolone-based compound include hinokitiol. Examples of the organic acid-based compound include dehydroacetic acid, sorbic acid, propionic acid, and aromatic carboxylic acids (such as benzoic acid and a pyridonecarboxylic acid-based compound).

Any appropriate inorganic antifungal agent may be adopted as the inorganic antifungal agent. The inorganic antifungal agent is preferably at least one kind selected from a metal ion-based antifungal agent obtained by causing an inorganic compound to carry a metal ion, and a photocatalyst. Examples of the metal ion include silver, copper, and zinc. Examples of the inorganic compound include: silicic acid salts such as zeolite and silica gel; and phosphoric acid salts such as apatite.

The antifungal layer is more preferably a resin composition containing an antifungal agent. A resin in such resin composition is, for example: a thermosetting resin such as a phenol-based resin, a urea-based resin, a melamine-based resin, an alkyd-based resin, a diallyl phthalate-based resin, an epoxy-based resin, a polyurethane-based resin, or a silicon-based resin; a resin such as a polyvinyl chloride-based resin, a polyvinylidene chloride-based resin, a fluorine-based resin, a polyvinyl fluoride-based resin, a polyvinylidene fluoride-based resin, a polyvinyl acetate-based resin, a polyvinyl alcohol-based resin, a polyvinyl formal-based resin, a saturated polyester-based resin, a polyethylene-based resin, a polypropylene-based resin, a polystyrene-based resin, an ABS-based resin, an acrylic resin, a polyamide-based resin, a polyacetal-based resin, a chlorinated polyether-based resin, a polycarbonate-based resin, a polyarylate-based resin, ethylcellulose, cellulose acetate, or cellulose nitrate; or an elastomer or rubber such as a natural rubber, an isoprene-based rubber, an acrylonitrile-based rubber, an acrylic rubber, a butadiene-based rubber, a butyl-based rubber, a styrene-based rubber, a chloroprene-based rubber, a chlorohydrin-based rubber, a polyolefin-based rubber, a urethane-based rubber, a polysulfide rubber, a silicone-based rubber, a fluorine-based rubber, or a fluorosilicone-based rubber.

The antifungal layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, and amounts of additives that can be incorporated into the antifungal layer can be appropriately set depending on purposes.

The antifungal layer may be formed only of one layer, or may be formed of two or more layers.

### (Deodorant layer)

Any appropriate layer may be adopted as the deodorant layer as long as a deodorant effect is obtained.

The deodorant layer preferably contains a deodorant. Any appropriate deodorant may be adopted as the deodorant. The content of the deodorant in the deodorant layer is preferably 0.01 wt% to 20 wt%, more preferably 0.1 wt% to 15 wt%, still more preferably 0.5 wt% to 10 wt%. As long as the content of the deodorant in the deodorant layer falls within the range, the layer can express extremely excellent deodorant property.

The deodorant is preferably such that a metal component is carried on an inorganic powder. The carrying amount of the metal component is preferably 0.1 wt% to 30 wt%, more preferably 0.5 wt% to 20 wt%, still more preferably 1 wt% to 20 wt% in terms of a content in the deodorant. As long as the carrying amount of the metal component falls within the range, the deodorant layer can express extremely excellent deodorant property.

Any appropriate inorganic powder may be adopted as the inorganic powder. The inorganic powder is preferably at least one kind selected from zeolite, silica gel, titanium oxide, aluminum oxide, and activated carbon.

Any appropriate metal component may be adopted as the metal component. The metal component is preferably at least one kind selected from silver, copper, zinc, tin, bismuth, cadmium, chromium, and mercury.

The deodorant layer may contain a resin. Examples of such resin include: a thermosetting resin such as a phenol-based resin, a urea-based resin, a melamine-based resin, an alkyd-based resin, a diallyl phthalate-based resin, an epoxy-based resin, a polyurethane-based resin, or a silicon-based resin; a resin such as a polyvinylchloride-based resin, a polyvinylidene chloride-based resin, a fluorine-based resin, a polyvinyl fluoride-based resin, a polyvinylidene fluoride-based resin, a polyvinyl acetate-based resin, a polyvinyl alcohol-based resin, a polyvinyl formal-based resin, a saturated polyester-based resin, a polyethylene-based resin, a polypropylene-based resin, a polystyrene-based resin, an ABS-based resin, an acrylic resin, a polyamide-based resin, a polyacetal-based resin, a chlorinated polyether-based resin, a polycarbonate-based resin, apolyarylate-basedresin, ethylcellulose, cellulose acetate, or cellulose nitrate; and an elastomer or rubber such as a natural rubber, an isoprene-based rubber, an acrylonitrile-based rubber, an acrylic rubber, a butadiene-based rubber, a butyl-based rubber, a styrene-based rubber, a chloroprene-based rubber, a chlorohydrin-based rubber, a polyolefin-based rubber, a urethane-based rubber, a polysulfide rubber, a silicone-based rubber, a fluorine-based rubber, or a fluorosilicone-based rubber.

The deodorant layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the deodorant layer can be appropriately set depending on purposes.

The deodorant layer may be formed only of one layer, or may be formed of two or more layers.

### <Convertible pressure-sensitive adhesive layer>

The convertible pressure-sensitive adhesive layer preferably contains sinterable particles and a polymer component.

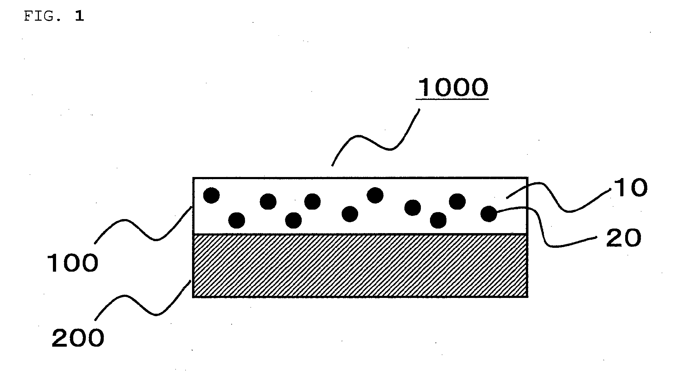

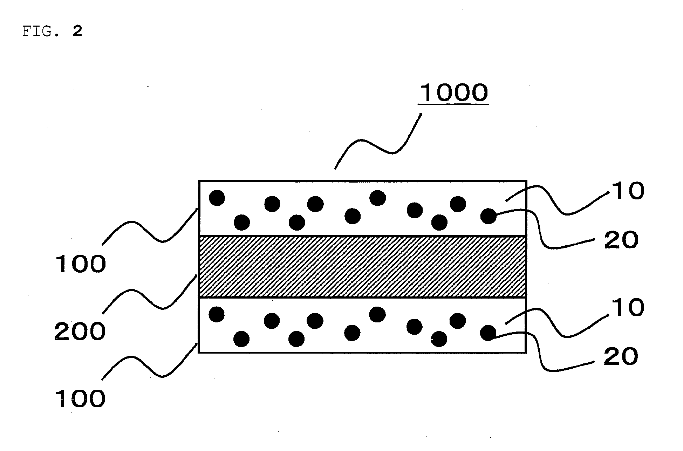

The convertible pressure-sensitive adhesive layer preferably contains sinterable particles and a polymer component. FIG. **1** is an example of a schematic sectional view of a shatterproofing member including a convertible pressure-sensitive adhesive layer of the present invention. A shatterproofing member **1000** provide with a convertible pressure-sensitive adhesive layer of the present invention includes a convertible pressure-sensitive adhesive layer **100**, a flame-resistant material **200**, in which, the convertible pressure-sensitive adhesive layer **100** has sinterable particles **20** dispersed in a polymer component **10.** The shatterproofing member including a convertible pressure-sensitive adhesive layer of the present invention may include a plurality of pressure-sensitive adhesive layers and may include a plurality of flame-resistant materials. For example, as illustrated in FIG. **2**, the shatterproofing member **1000** including a convertible pressure-sensitive adhesive layer of the present invention may include the convertible pressure-sensitive adhesive layers **100** on both sides of the flame-resistant material **200.**

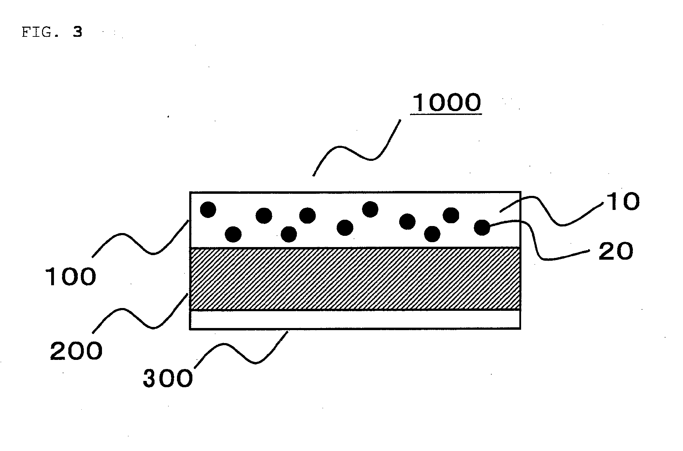

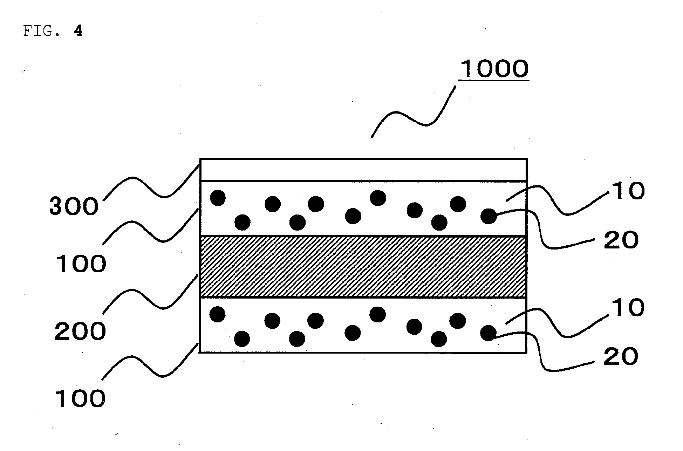

FIG. **3** is an example of a schematic sectional view of another shatterproofing member including a convertible pressure-sensitive adhesive layer of the present invention. The shatterproofing member **1000** including a convertible pressure-sensitive adhesive layer of the present invention includes the convertible pressure-sensitive adhesive layer **100,** the flame-resistant material **200,** and a functional layer **300,** in which the convertible pressure-sensitive adhesive layer **100** has the sinterable particles **20** dispersed in the polymer component **10.** The shatterproofing member including a convertible pressure-sensitive adhesive layer of the present invention may include a plurality of convertible pressure-sensitive adhesive layers, may include a plurality of flame-resistant materials, and may include a plurality of functional layers. For example, as illustrated in FIG. **4****,** the shatterproofing member **1000** including a convertible pressure-sensitive adhesive layer of the present invention may include the convertible pressure-sensitive adhesive layers **100** on both surfaces of the flame-resistant material **200.** In FIG. **4****,** the functional layer **300** is included as one outermost layer. Examples of the functional layer **300** in FIG. **3** and FIG. **4** include a protective layer, a thermally functional layer, a physically functional layer, a chemically functional layer, an environment-resistant functional layer, and a hygienically functional layer.

The content ratio of the sinterable particles in the convertible pressure-sensitive adhesive layer is preferably 1 wt% to 80 wt%, more preferably 5 wt% to 70 wt%, still more preferably 10 wt% to 60 wt%, particularly preferably 20 wt% to 50 wt% with respect to the solid content of the convertible pressure-sensitive adhesive layer. When the content ratio of the sinterable particles in the convertible pressure-sensitive adhesive layer falls within the range, there can be sufficiently expressed such an effect that the convertible pressure-sensitive adhesive layer is extremely hardly peeled from an adherend even when exposed to a high-temperature atmosphere such as one in a fire.

The sinterable particles in the convertible pressure-sensitive adhesive layer preferably contain two or more kinds of sinterable particles having different deformation points. When the sinterable particles in the convertible pressure-sensitive adhesive layer contain two or more kinds of sinterable particles having different deformation points, the convertible pressure-sensitive adhesive layer can express extremely excellent heat resistance.

The deformation point of each of the sinterable particles in the convertible pressure-sensitive adhesive layer is preferably 250°C to 800°C, more preferably 250°C to 700°C, still more preferably 250°C to 600°C, particularly preferably 250°C to 500°C. When the deformation point of each of the sinterable particles in the convertible pressure-sensitive adhesive layer falls within the range, there can be sufficiently expressed such an effect that the convertible pressure-sensitive adhesive layer is extremely hardly peeled from an adherend even when exposed to a high-temperature atmosphere such as one in a fire.

The deformation point of a sinterable particle having the lowest deformation point among the two or more kinds of sinterable particles having different deformation points is preferably 250°C to 800°C, more preferably 250°C to 700°C, still more preferably 250°C to 600°C, particularly preferably 250°C to 500°C. When the deformation point of the sinterable particle having the lowest deformation point falls within the range, the convertible pressure-sensitive adhesive layer can express extremely excellent heat resistance to an additional degree.

Any appropriate sinterable particles may be adopted as the sinterable particles in the convertible pressure-sensitive adhesive layer. Such sinterable particles are preferably inorganic particles each having sinterability, more preferably sinterable particles each formed of at least one kind of component selected from silicic acid, boric acid, borosilicic acid, aluminum oxide, calcium oxide, sodium oxide, lithium oxide, and phosphorus oxide. When such sinterable particles are adopted, there can be sufficiently expressed such an effect that the convertible pressure-sensitive adhesive layer is extremely hardly peeled from an adherend even when exposed to a high-temperature atmosphere such as one in a fire.

The average particle diameter of each of the sinterable particles in the convertible pressure-sensitive adhesive layer is preferably 0.1 µm to 1,000 µm, more preferably 0.5 µm to 500 µm, still more preferably 1 µm to 300 µm, particularly preferably 2 µm to 150 µm. When the average particle diameter of each of the sinterable particles in the convertible pressure-sensitive adhesive layer falls within the range, there can be sufficiently expressed such an effect that the convertible pressure-sensitive adhesive layer is extremely hardly peeled from an adherend even when exposed to a high-temperature atmosphere such as one in a fire.

The polymer component in the convertible pressure-sensitive adhesive layer preferably contains an antioxidant. When the polymer component in the convertible pressure-sensitive adhesive layer contains an antioxidant, the convertible pressure-sensitive adhesive layer can express extremely excellent heat resistance.

The content ratio of the antioxidant in the convertible pressure-sensitive adhesive layer is preferably 0.1 wt% to 10 wt%, more preferably 0.3 wt% to 8 wt%, still more preferably 0.5 wt% to 6 wt%, particularly preferably 0.7 wt% to 5 wt% with respect to the solid content of the convertible pressure-sensitive adhesive layer. When the content ratio of the antioxidant falls within the range, the convertible pressure-sensitive adhesive layer can express extremely excellent heat resistance to an additional degree. The antioxidants may be used alone or in combination.

Any appropriate antioxidant may be adopted as the antioxidant. Such antioxidant is preferably exemplified by at least one kind selected from a phenol-based antioxidant, an amine-based antioxidant, an amino ether-based antioxidant, and a phosphorus-based antioxidant.

Examples of the phenol-based antioxidant may include: monocyclic phenol compounds such as 2,6-di-t-butyl-p-cresol, 2,6-di-t-butyl-4-ethylphenol, 2,6-dicyclohexyl-4-methylphenol, 2,6-diisopropyl-4-ethylphenol, 2,6-di-t-amyl-4-methylphenol, 2,6-di-t-octyl-4-n-propylphenol, 2,6-dicyclohexyl-4-n-octylphenol, 2-isopropyl-4-methyl-6-t-butylphenol, 2-t-butyl-4-ethyl-6-t-octylphenol, 2-isobutyl-4-ethyl-6-t-hexylphenol, 2-cyclohexyl-4-n-butyl-6-isopropylphenol, styrenated mixed cresol, DL-α-tocopherol, and stearyl β-(3,5-di-t-butyl-4-hydroxyphenyl) propionate; bicyclic phenol compounds such as 2,2'-methylenebis(4-methyl-6-t-butylphenol), 4,4'-butylidenebis(3-methyl-6-t-butylphenol), 4,4'-thiobis(3-methyl-6-t-butylphenol), 2,2'-thiobis(4-methyl-6-t-butylphenol), 4,4'-methylenebis(2,6-di-t-butylphenol), 2,2'-methylenebis[6-(1-methylcyclohexyl)-p-cresol], 2,2'-ethylidenebis(4,6-di-t-butylphenol), 2,2'-butylidenebis(2-t-butyl-4-methylphenol), 3,6-dioxaoctamethylenebis[3-(3-t-butyl-4-hydroxy-5-methylpheny l) propionate], triethylene glycol-bis[3-(3-t-butyl-5-methyl-4-hydroxyphenyl) propionate], 1,6-hexanediolbis[3-(3,5-di-t-butyl-4-hydroxyphenyl) propionate], and 2,2'-thiodiethylenebis[3-(3,5-di-t-butyl-4-hydroxyphenyl) propionate]; tricyclic phenol compounds such as 1,1,3-tris(2-methyl-4-hydroxy-5-t-butylphenyl)butane, 1,3,5-tris(2,6-dimethyl-3-hydroxy-4-t-butylbenzyl) isocyanurate, 1,3,5-tris[(3,5-di-t-butyl-4-hydroxyphenyl)propionyloxyethyl] isocyanurate, tris(4-t-butyl-2,6-dimethyl-3-hydroxybenzyl) isocyanurate, and 1,3,5-trimethyl-2,4,6-tris(3,5-di-t-butyl-4-hydroxybenzyl)benz ene; tetracyclic phenol compounds such as tetrakis[methylene-3-(3,5-di-t-butyl-4-hydroxyphenyl) propionate]methane; and phosphorus-containing phenol compounds such as calcium bis(ethyl 3,5-di-t-butyl-4-hydroxybenzyl phosphonate) and nickel bis(ethyl 3,5-di-t-butyl-4-hydroxybenzyl phosphonate).

Examples of the amine-based antioxidant include bis(2,2,6,6-tetramethyl-4-piperidyl) sebacate, a polycondensate of dimethyl succinate and 1-(2-hydroxyethyl)-4-hydroxy-2,2,6,6-tetramethylpiperidineetha nol, N,N',N",N"'-tetrakis-(4,6-bis-(butyl-(N-methyl-2,2,6,6-tetra methylpiperidin-4-yl)amino)-triazin-2-yl)-4,7-diazadecane-1,10 -diamine, a polycondensate of dibutylamine·1,3,5-triazine·N,N'-bis(2,2,6,6-tetramethyl-4-pip eridyl-1,6-hexamethylenediamine) and N-(2,2,6,6-tetramethyl-4-piperidyl)butylamine, poly[{6-(1,1,3,3-tetramethylbutyl)amino-1,3,5-triazine-2,4-diy 1}{(2,2,6,6-tetramethyl-4-piperidyl)imino}hexamethylene{(2,2,6 ,6-tetramethyl-4-piperidyl)imino}], tetrakis(2,2,6,6-tetramethyl-4-piperidyl)-1,2,3,4-butane tetracarboxylate, 2,2,6,6-tetramethyl-4-piperidyl benzoate, bis-(1,2,6,6-pentamethyl-4-piperidyl)-2-(3,5-di-t-butyl-4-hydr oxybenzyl)-2-n-butyl malonate, bis-(N-methyl-2,2,6,6-tetramethyl-4-piperidyl) sebacate, 1,1'-(1,2-ethanediyl)bis(3,3,5,5-tetramethylpiperazinone), (mixed 2,2,6,6-tetramethyl-4-piperidyl/tridecyl)-1,2,3,4-butane tetracarboxylate, (mixed 1,2,2,6,6-pentamethyl-4-piperidyl/tridecyl)-1,2,3,4-butane tetracarboxylate, mixed [2,2,6,6-tetramethyl-4-piperidyl/β,β,β',β'-tetramethyl-3,9-[2, 4,8,10-tetraoxaspiro(5,5)undecane]diethyl]-1,2,3,4-butane tetracarboxylate, mixed [1,2,2,6,6-pentamethyl-4-piperidyl/β,β,β',β'-tetramethyl-3,9-[ 2,4,8,10-tetraoxaspiro(5,5)undecane]diethyl]-1,2,3,4-butane tetracarboxylate, an N,N'-bis(3-aminopropyl)ethylenediamine-2,4-bis[N-butyl-N-(1,2, 2,6,6-pentamethyl-4-piperidyl)amino]-6-chloro-1,3,5-triazine condensate, poly[6-N-morpholyl-1,3,5-triazine-2,4-diyl][(2,2,6,6-tetrameth yl-4-piperidyl)imino]hexamethylene[(2,2,6,6-tetramethyl-4-pipe ridyl)imide], a condensate of N,N'-bis(2,2,6,6-tetramethyl-4-piperidyl)hexamethylenediamine and 1,2-dibromoethane, and N-(2,2,6,6-tetramethyl-4-piperidyl)-2-methyl.

Examples of the amino ether-based antioxidant include bis(2,2,6,6-tetramethyl-4-piperidyl) sebacate, bis(1,2,2,6,6-pentamethyl-4-piperidyl) sebacate, bis(1-methoxy-2,2,6,6-tetramethyl-4-piperidyl) sebacate, bis(1-ethoxy-2,2,6,6-tetramethyl-4-piperidyl) sebacate, bis(1-propoxy-2,2,6,6-tetramethyl-4-piperidyl) sebacate, bis(1-butoxy-2,2,6,6-tetramethyl-4-piperidyl) sebacate, bis(1-pentyloxy-2,2,6,6-tetramethyl-4-piperidyl) sebacate, bis(1-hexyloxy-2,2,6,6-tetramethyl-4-piperidyl) sebacate, bis(1-heptyloxy-2,2,6,6-tetramethyl-4-piperidyl) sebacate, bis(1-octoxy-2,2,6,6-tetramethyl-4-piperidyl) sebacate, bis(1-nonyloxy-2,2,6,6-tetramethyl-4-piperidyl) sebacate, bis(1-decanyloxy-2,2,6,6-tetramethyl-4-piperidyl) sebacate, and bis(1-dodecyloxy-2,2,6,6-tetramethyl-4-piperidyl) sebacate.

Examples of the phosphorus-based antioxidant include triphenyl phosphite, diphenyl isodecyl phosphite, phenyl diisodecyl phosphite, 4,4'-butylidene-bis(3-methyl-6-t-butylphenylditridecyl) phosphite, cyclic neopentanetetraylbis(nonylphenyl) phosphite, cyclic neopentanetetraylbis(dinonylphenyl) phosphite, cyclic neopentane tetrayltris(nonylphenyl) phosphite, cyclic neopentane tetrayltris(dinonylphenyl) phosphite, 10-(2,5-dihydroxyphenyl)-10H-9-oxa-10-phosphaphenanthrene-10-o xide, diisodecyl pentaerythritol diphosphite, and tris(2,4-di-t-butylphenyl) phosphite.

The polymer component in the convertible pressure-sensitive adhesive layer preferably has a cross-linked structure. When the polymer component in the convertible pressure-sensitive adhesive layer has a cross-linked structure, the convertible pressure-sensitive adhesive layer can express extremely excellent heat resistance.

The cross-linked structure may be constructed by any appropriate method. The cross-linked structure is preferably constructed by incorporating a cross-linking monomer into all monomer components for forming the polymer component. In this case, the content ratio of the cross-linking monomer in all monomer components for forming the polymer component is preferably 2.0 wt% to 60 wt%, more preferably 3.0 wt% to 57 wt%, still more preferably 5.0 wt% to 55 wt%, particularly preferably 7.0 wt% to 53 wt%, most preferably 8.0 wt% to 50 wt%. When the content ratio of the cross-linking monomer falls within the range, the convertible pressure-sensitive adhesive layer can express extremely excellent heat resistance to an additional degree.

The cross-linking monomers may be used alone or in combination.

Any appropriate cross-linking monomer may be adopted as the cross-linking monomer as long as the monomer can construct the cross-linked structure. As such cross-linking monomer, there is preferably given a cross-linking monomer having at least one kind of functional group selected from an acryloyl group, an epoxy group, an isocyanate group, a carboxyl group, a hydroxyl group, a vinyl group, and an amino group. Specific examples of such cross-linking monomer include polyfunctional monomers to be described later.

The content ratio of the polymer component in the convertible pressure-sensitive adhesive layer is preferably 20 wt% to 99 wt%, more preferably 30 wt% to 95 wt%, still more preferably 40 wt% to 90 wt%, particularly preferably 50 wt% to 80 wt% with respect to the solid content of the convertible pressure-sensitive adhesive layer. When the content ratio of the polymer component in the convertible pressure-sensitive adhesive layer falls within the range, there can be sufficiently expressed such an effect that the convertible pressure-sensitive adhesive layer is extremely hardly peeled from an adherend even when exposed to a high-temperature atmosphere such as one in a fire.

Any appropriate polymer component may be adopted as the polymer component in the convertible pressure-sensitive adhesive layer as long as the polymer component can express pressure-sensitive adhesive property. Such polymer component is preferably at least one kind of component selected from a rubber-based polymer, a silicone-based polymer, and an acrylic polymer. The polymer components in the convertible pressure-sensitive adhesive layer may be used alone or in combination.

Any appropriate rubber-based polymer that can express pressure-sensitive adhesive property may be adopted as the rubber-based polymer.

Any appropriate silicone-based polymer that can express pressure-sensitive adhesive property may be adopted as the silicone-based polymer.

Any appropriate acrylic polymer that can express pressure-sensitive adhesive property may be adopted as the acrylic polymer. The acrylic polymer may be preferably formed from monomer components essentially containing an acrylic monomer. The content ratio of the acrylic monomer in all monomers that may be used for forming the acrylic polymer is preferably 50 wt% to 100 wt%, more preferably 55 wt% to 98 wt%, still more preferably 60 wt% to 95 wt%, particularly preferably 65 wt% to 93 wt%. The acrylic monomers may be used alone or in combination.

A preferred example of the acrylic monomer is an alkyl (meth)acrylate having an alkyl group. The alkyl (meth)acrylates each having an alkyl group may be used alone or in combination. It should be noted that the term "(meth)acryl" refers to "acryl" and/or "methacryl."

Examples of the alkyl (meth)acrylate having an alkyl group include an alkyl (meth)acrylate having a linear or branched alkyl group, and an alkyl (meth) acrylate having a cyclic alkyl group. It should be noted that the alkyl (meth)acrylate as used herein means a monofunctional alkyl (meth)acrylate.

Examples of the alkyl (meth)acrylate having a linear or branched alkyl group include alkyl (meth)acrylates each having an alkyl group having 1 to 20 carbon atoms such as methyl (meth) acrylate, ethyl meth(acrylate), propyl (meth) acrylate, isopropyl (meth)acrylate, butyl (meth)acrylate, isobutyl (meth)acrylate, sec-butyl (meth)acrylate, tert-butyl (meth)acrylate, pentyl (meth) acrylate, isopentyl (meth) acrylate, hexyl (meth)acrylate, heptyl (meth)acrylate, octyl (meth)acrylate, 2-ethylhexyl (meth)acrylate, isooctyl (meth)acrylate, nonyl (meth) acrylate, isononyl (meth) acrylate, decyl (meth) acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. Of those, an alkyl (meth) acrylate having an alkyl group having 2 to 14 carbon atoms is preferred, and an alkyl (meth)acrylate having an alkyl group having 2 to 10 carbon atoms is more preferred.

Examples of the alkyl (meth)acrylate having a cyclic alkyl group include cyclopentyl (meth)acrylate, cyclohexyl (meth)acrylate, and isobornyl (meth)acrylate.

A polyfunctional monomer may be used as a monomer component that can form the acrylic polymer. Any appropriate polyfunctional monomer may be adopted as the polyfunctional monomer. When the polyfunctional monomer is adopted, a cross-linked structure can be imparted to the acrylic polymer. The polyfunctional monomers may be used alone or in combination.

Examples of the polyfunctional monomer include 1,9-nonanediol di(meth)acrylate, 1,6-hexanedioldi(meth)acrylate, 1,4-butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, urethane acrylate, 4-hydroxybutyl acrylate glycidyl ether, glycidyl (meth)acrylate, 2-hydroxyethyl (meth)acrylate, 2-hydroxypropyl (meth)acrylate, butanediol (meth)acrylate, 2-hydroxyethyl (meth) acrylate, 4-hydroxybutyl (meth)acrylate, 2-isocyanatoethyl acrylate glycidyl ether, isocyanatoethyl (meth)acrylate, isocyanato (meth)acrylate; triglycidyl isocyanurate, (meth)acrylic acid, phthalic acid monohydroxyethyl (meth)acrylate, hexahydrophthalic acid monohydroxyethyl (meth)acrylate, 2-hydroxyethyl (meth)acrylate, 2-hydroxypropyl (meth)acrylate, 4-hydroxybutyl (meth)acrylate, dimethyl (meth)acrylamide, diethyl (meth)acrylamide, isopropyl (meth)acrylamide, hydroxyethyl (meth)acrylamide, 1,4-butanediol diglycidyl ether, 1,2-ethanediol diglycidyl ether, polyethylene glycol diglycidyl ether, neopentyl glycol diglycidyl ether, trimethylolpropane polyglycidyl ether, hexamethylene diisocyanate, tolylene diisocyanate, diphenylmethane diisocyanate, triphenylmethane triisocyanate, methyltriisocyanatosilane, tetraisocyanatosilane, polyisocyanate, oxalic acid, malonic acid, succinic acid, glutaric acid, adipic acid, pimelic acid, suberic acid, azelaic acid, sebacic acid, phthalic acid, isophthalic acid, 1,2,3-propanetricarboxylic acid, ethylene glycol, diethylene glycol, propylene glycol, dipropylene glycol, neopentyl glycol, 1,4-butanediol, 1,6-hexanediol, 3-methyl-1,5-pentanediol, 1,2,4-butanetriol, polyoxypropylenetriol, trimethylolethane, trimethylolpropane, aminomethanol, 2-aminoethanol, 3-amino-1-propanol, diethanolamine, triethanolamine, N,N-di-n-butylethanolamine, ethylenediamine, hexamethylenediamine, tolylenediamine, hydrogenated tolylenediamine, diphenylmethanediamine, hydrogenated diphenylmethanediamine, tolidineamine, naphthalenediamine, isophoronediamine, xylenediamine, hydrogenated xylenediamine, vinylamine, 2-(2-thienyl)vinylamine, 1-(allyloxy)vinylamine, allyl alcohol, 1,3-butadiene monoepoxide, and 1-vinyl-3,4-epoxycyclohexane. Of those, from the viewpoint of high reactivity, an acrylate-based polyfunctional monomer is preferred, and 1,9-nonanediol di(meth)acrylate, 1,6-hexanediol di(meth)acrylate, and 4-hydroxybutyl acrylate glycidyl ether are more preferred.

A polar group-containing monomer may be used as a monomer component that can form the acrylic polymer. Any appropriate polar group-containing monomer may be adopted as the polar group-containing monomer. When the polar group-containing monomer is adopted, the cohesive strength of the acrylic polymer can be improved, or the pressure-sensitive adhesive strength of the acrylic polymer can be improved. The polar group-containing monomers may be used alone or in combination.

Examples of the polar group-containing monomer include: carboxyl group-containing monomers such as (meth)acrylic acid, itaconic acid, maleic acid, fumaric acid, crotonic acid, and isocrotonic acid, or anhydrides thereof (for example, maleic anhydride);hydroxy group-containing monomers such as a hydroxyalkyl (meth) acrylate such as hydroxyethyl (meth) acrylate, hydroxypropyl (meth)acrylate, or hydroxybutyl (meth)acrylate, vinyl alcohol, and allyl alcohol; amide group-containing monomers such as (meth)acrylamide, N,N-dimethyl (meth)acrylamide, N-methylol (meth)acrylamide, N-methoxymethyl (meth)acrylamide, and N-butoxymethyl (meth)acrylamide; amino group-containing monomers such as aminoethyl (meth)acrylate, dimethylaminoethyl (meth)acrylate, and t-butylaminoethyl (meth)acrylate; glycidyl group-containing monomers such as glycidyl (meth)acrylate and methylglycidyl (meth)acrylate; cyano group-containing monomers such as acrylonitrile and methacrylonitrile; heterocycle-containing vinyl-based monomers such as N-vinyl-2-pyrrolidone and (meth)acryloyl morpholine, as well as N-vinylpyridine, N-vinylpiperidone, N-vinylpyrimidine, N-vinylpiperazine, N-vinylpyrrole, N-vinylimidazole, and N-vinyloxazole; alkoxyalkyl (meth) acrylate-based monomers such as methoxyethyl (meth)acrylate and ethoxyethyl (meth)acrylate; sulfonate group-containing monomers such as sodium vinyl sulfonate; phosphate group-containingmonomers such as 2-hydroxyethyl acryloyl phosphate; imide group-containing monomers such as cyclohexyl maleimide and isopropyl maleimide; and isocyanate group-containing monomers such as 2-methacryloyloxyethyl isocyanate. The polar group-containing monomer is preferably a carboxyl group-containing monomer or an anhydride thereof, more preferably acrylic acid.

Any other copolymerizable monomer may be used as a monomer component that can form the acrylic polymer. Any appropriate other copolymerizable monomer may be adopted as the other copolymerizable monomer. When the other copolymerizable monomer is adopted, the cohesive strength of the acrylic polymer can be improved, or the pressure-sensitive adhesive strength of the acrylic polymer can be improved. The other copolymerizable monomers may be used alone or in combination.

Examples of the other copolymerizable monomer include: alkyl (meth)acrylates such as a (meth) acrylate having an aromatic hydrocarbon group such as phenyl (meth) acrylate; vinyl esters such as vinyl acetate and vinyl propionate; aromatic vinyl compounds such as styrene and vinyl toluene; olefins or dienes such as ethylene, butadiene, isoprene, and isobutylene; vinyl ethers such as a vinyl alkyl ether; vinyl chloride; alkoxyalkyl (meth)acrylate-based monomers such as methoxyethyl (meth)acrylate and ethoxyethyl (meth) acrylate; sulfonate group-containing monomers such as sodium vinyl sulfonate; phosphate group-containing monomers such as 2-hydroxyethyl acryloyl phosphate; imide group-containing monomers such as cyclohexylmaleimide and isopropylmaleimide; isocyanate group-containing monomers such as 2-methacryloyloxyethyl isocyanate; fluorine atom-containing (meth)acrylates; and silicon atom-containing (meth)acrylates.

The weight-average molecular weight of the acrylic polymer is preferably 300,000 or more, more preferably 400,000 to 3,000,000. The weight-average molecular weight of the acrylic polymer may be determined by a gel permeation chromatography method (GPC method).

The convertible pressure-sensitive adhesive layer may contain any appropriate other component except the antioxidant in addition to the sinterable particles and the polymer component as long as the effects of the present invention are not impaired. Such other components may be contained alone or in combination.

Examples of the other component include other polymer components, a softening agent, an age resistor, a curing agent, a plasticizer, a filler, a thermal polymerization initiator, a photopolymerization initiator, a UV absorbing agent, a light stabilizing agent, a coloring agent (e.g., a pigment or a dye), a solvent (organic solvent), a surfactant (e. g. , an ionic surfactant, a silicone-based surfactant, or a fluorine-based surfactant), and a cross-linking agent (e.g., a polyisocyanate-based cross-linking agent, a silicone-based cross-linking agent, an epoxy-based cross-linking agent, or an alkyl etherified melamine-based cross-linking agent). It should be noted that the thermal polymerization initiator or the photopolymerization initiator may be contained in a material for forming the polymer component.

Any appropriate thermal polymerization initiator may be adopted as the thermal polymerization initiator. Examples of such thermal polymerization initiator include: peroxide-based polymerization initiators such as hydrogen peroxide, benzoyl peroxide, and t-butyl peroxide; and azo-based polymerization initiators such as 2,2'-azobis-2-methylpropionamidine acid salts, 2,2'-azobis-2,4-dimethylvaleronitrile, 2,2'-azobis-N,N'-dimethyleneisobutylamidine acid salts, 2,2'-azobisisobutyronitrile, and 2,2'-azobis-2-methyl-N-(2-hydroxyethyl)propionamide. The thermal polymerization initiators may be used alone or in combination. Further, such thermal polymerization initiator may be used as a redox-type polymerization initiator by being used in combination with a reducing agent. Examples of such reducing agent include: ionic salts such as a sulfite, a hydrogensulfite, and iron, copper, and cobalt salts; amines such as triethanolamine; and reducing sugars such as an aldose and a ketose.

The content ratio of the thermal polymerization initiator in the convertible pressure-sensitive adhesive layer is preferably 5 parts by weight or less, more preferably 0.01 part by weight to 5 parts by weight, still more preferably 0.05 part by weight to 3 parts by weight with respect to the monomer components to be used for forming the polymer component of the convertible pressure-sensitive adhesive layer.

Any appropriate photopolymerization initiator may be adopted as the photopolymerization initiator. Examples of such photopolymerization initiator include a benzoin ether-based photopolymerization initiator, an acetophenone-based photopolymerization initiator, an α-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, and a thioxanthone-based photopolymerization initiator. The photopolymerization initiators may be used alone or in combination.

An example of the ketal-based photopolymerization initiator is 2,2-dimethoxy-1,2-diphenylethan-1-one (such as "Irgacure 651" (trade name; manufactured by Ciba Speciality Chemicals Inc.)). Examples of the acetophenone-based photopolymerization initiator include 1-hydroxycyclohexyl phenyl ketone (such as "Irgacure 184" (trade name; manufactured by Ciba Speciality Chemicals Inc.)), 2,2-diethoxyacetophenone, 2,2-dimethoxy-2-phenylacetophenone, 4-phenoxydichloroacetophenone, and 4-(t-butyl)dichloroacetophenone. Examples of the benzoin ether-based photopolymerization initiator include benzoin methyl ether, benzoin ethyl ether, benzoin propyl ether, benzoin isopropyl ether, and benzoin isobutyl ether. An example of the acylphosphine oxide-based photopolymerization initiator is "Lucirin TPO" (trade name; manufactured by BASF). Examples of the α-ketol-based photopolymerization initiator include 2-methyl-2-hydroxy propiophenone and 1-[4-(2-hydroxyethyl)phenyl]-2-methylpropan-1-one. An example of the aromatic sulfonyl chloride-based photopolymerization initiator is 2-naphthalenesulfonyl chloride. An example of the photoactive oxime-based photopolymerization initiator is 1-phenyl-1,1-propanedione-2-(o-ethoxycarbonyl)-oxime. Examples of the benzoin-based photopolymerization initiator include benzoin. An example of the benzyl-based photopolymerization initiator is benzil. Examples of the benzophenone-based photopolymerization initiator include benzophenone, benzoylbenzoic acid, 3,3'-dimethyl-4-methoxybenzophenone, polyvinyl benzophenone, and α-hydroxycyclohexyl phenyl ketone. Examples of the thioxanthone-based photopolymerization initiator include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

The content ratio of the photopolymerization initiator in the convertible pressure-sensitive adhesive layer is preferably 5 parts by weight or less, more preferably 0.01 part by weight to 5 parts by weight, still more preferably 0.05 part by weight to 3 parts by weight with respect to the monomer components to be used for forming the polymer component in the convertible pressure-sensitive adhesive layer.

The convertible pressure-sensitive adhesive layer has pressure-sensitive adhesive property before being sintered. Before being sintered, the convertible pressure-sensitive adhesive layer has a pressure-sensitive adhesive strength for a stainless-steel plate at a peel rate of 50 mm/min, a peel angle of 180°, and 23°C of preferably 0.1 N/10 mm to 15 N/10 mm, more preferably 0.5 N/10 mm to 10 N/10 mm, still more preferably 1 N/10 mm to 8 N/10 mm, particularly preferably 2 N/10 mm to 6 N/10 mm. When the pressure-sensitive adhesive strength falls within the range, the following appropriate pressure-sensitive adhesive property can be expressed: the convertible pressure-sensitive adhesive layer allows adherends to be instantly fixed to each other, allows the adherends to be reattached to each other, and is excellent in processability such as being able to be cut into a sheet shape. A specific method of measuring the pressure-sensitive adhesive strength is described later.

The convertible pressure-sensitive adhesive layer has sinterability. Any appropriate temperature may be adopted as a sintering temperature depending on the kind and amount of the sinterable particles contained in the convertible pressure-sensitive adhesive layer.

### <Flame-resistant material>

The shatterproofing member including a convertible pressure-sensitive adhesive layer of the present invention includes the flame-resistant material.

The term "flame-resistant material" as used in the present invention refers to a backing containing at least a component that can remain as a flame-resistant material after combustion (sometimes referred to as "flame-resistant component"). Such flame-resistant component has only to be a component that can remain as a flame-resistant material after combustion, and examples thereof include a component that does not undergo a reaction or the like during combustion and remains in its original form as a flame-resistant material after the combustion (sometimes referred to as "non-reactive flame-resistant component") and a component that undergoes a reaction or the like during combustion to become a flame-resistant material and can remain as the flame-resistant material after the combustion (sometimes referred to as "reactive flame-resistant component"). It should be noted that the reactive flame-resistant component is not itself a flame-resistant material, but is a component that can undergo a reaction or the like owing to heat or the like during combustion to become a flame-resistant material, and any other component may be involved in the reaction or the like during combustion.

The flame-resistant material may be a backing formed only of a flame-resistant component, or may be a backing containing a flame-resistant component and a component that burns owing to a reaction or the like during combustion and does not remain after the combustion (sometimes referred to as "burnable component").

Specific examples of the flame-resistant material include the following ones:
(1) a backing formed only of a non-reactive flame-resistant component;
(2) a backing formed of a composition containing a non-reactive flame-resistant component and a burnable component;
(3) a backing formed only of a reactive flame-resistant component;
(4) a backing formed of a composition containing a reactive flame-resistant component and a burnable component;
(5) a backing formed only of a non-reactive flame-resistant component and a reactive flame-resistant component; and
(6) a backing formed of a composition containing a non-reactive flame-resistant component, a reactive flame-resistant component, and a burnable component.

The flame-resistant components may be used alone or in combination.

The components of each type such as the non-reactive flame-resistant components or the reactive flame-resistant components may be used alone or in combination.

The burnable components may be used alone or in combination.

Examples of the flame-resistant component include a glass cloth, a glass fiber, a metal mesh, a metal fibrous material, a layered clay mineral, silica particles, metal particles, silicone, and a siloxane polymer. The flame-resistant component is particularly preferably a glass cloth, a glass fiber, a metal mesh, or a metal fibrous material from such a viewpoint that the flame-resistant material can show high toughness after combustion. That is, when one containing a flame-resistant component such as a glass cloth, a glass fiber, a metal mesh, or a metal fibrous material is used as the flame-resistant material, the shatterproofing member including a convertible pressure-sensitive adhesive layer can exert glass-shatterproof property at a high level.

The burnable component is, for example, any appropriate polymer component such as a polymer particle. Examples of such polymer component include: an acrylic resin; aurethane-based resin; an olefin-based resin containing an α-olefin as a monomer component, such as polyethylene (PE), polypropylene (PP), an ethylene-propylene copolymer, or an ethylene-vinyl acetate copolymer (EVA); a polyester-based resin such as polyethylene terephthalate (PET), polyethylene naphthalate (PEN), and polybutylene terephthalate (PBT); a vinyl acetate-based resin; polyphenylene sulfide (PPS); an amide-based resin such as a polyamide (nylon) or a wholly aromatic polyamide (aramid) ; a polyimide-based resin; polyether ether ketone (PEEK) ; an epoxy resin; an oxetane-based resin; a vinyl ether-based resin; a natural rubber; and a synthetic rubber. Such polymer components may be used alone or in combination.

Any appropriate backing may be adopted as the flame-resistant material as long as it is a backing that is flame-resistant. Examples thereof include an inorganic backing and an organic-inorganic composite backing. The flame-resistant material is preferably an inorganic backing.

Any appropriate inorganic backing may be adopted as the inorganic backing. The backing is preferably permeable to a liquid substance such as a monomer or a syrupy polymer. Examples of such inorganic backing include inorganic backings having voids, such as a fibrous inorganic backing and a network inorganic backing.

The form of the fibrous inorganic backing is, for example, a woven fabric or a non-woven fabric.

Specific examples of the fibrous inorganic backing include a glass cloth, asbestos, a carbon fiber, and a fibrous metal oxide.

Specific examples of the network inorganic backing include a metal mesh.

Any appropriate thickness maybe adopted as the thickness of the inorganic backing depending on its kind. The thickness is, for example, preferably 1 µm to 500 µm.

A void portion of the inorganic backing may contain any appropriate component such as a component of a formation material for the convertible pressure-sensitive adhesive layer.

### <Form of shatterproofing member including a convertible pressure-sensitive adhesive layer>

The shatterproofing member including a convertible pressure-sensitive adhesive layer of the present invention may adopt any appropriate form. Examples of the form of the shatterproofing member including a convertible pressure-sensitive adhesive layer of the present invention include a sheet shape and a tape shape. When the form of the shatterproofing member including a convertible pressure-sensitive adhesive layer of the present invention is a sheet shape, the member may be used as a convertible pressure-sensitive adhesive sheet. The shatterproofing member including a convertible pressure-sensitive adhesive layer of the present invention may have such a form that a sheet-shaped or tape-shaped member is wound into a roll shape. In addition, the shatterproofing member including a convertible pressure-sensitive adhesive layer of the present invention may have such a form that sheet-shaped or tape-shaped members are laminated together.

In the case where the shatterproofing member including a convertible pressure-sensitive adhesive layer of the present invention has a sheet shape, its thickness is preferably 1 µm to 1,000 µm, more preferably 5 µm to 500 µm, still more preferably 10 um to 300 µm, particularly preferably 20 µm to 200 µm. When the thickness in the case where the shatterproofing member including a convertible pressure-sensitive adhesive layer of the present invention has a sheet shape falls within the range, the shatterproofing member including a convertible pressure-sensitive adhesive layer is excellent in handleability.

### «Production method for shatterproofing member including a convertible pressure-sensitive adhesive layer»

The shatterproofing member including a convertible pressure-sensitive adhesive layer of the present invention may be produced by any appropriate method.

The shatterproofing member including a convertible pressure-sensitive adhesive layer of the present invention is preferably produced by, for example: a production method involving laminating the convertible pressure-sensitive adhesive layer and the flame-resistant material; or a production method involving laminating a formation material for the convertible pressure-sensitive adhesive layer and the flame-resistant material and then forming the convertible pressure-sensitive adhesive layer by a curing reaction or the like.

When the shatterproofing member including a convertible pressure-sensitive adhesive layer of the present invention has a functional layer, the shatterproofing member including a convertible pressure-sensitive adhesive layer of the present invention is preferably produced by, for example: a production method involving laminating the convertible pressure-sensitive adhesive layer, the flame-resistant material, and the functional layer; a production method involving laminating a formation material for the convertible pressure-sensitive adhesive layer, the flame-resistant material, and the functional layer and then forming the convertible pressure-sensitive adhesive layer by a curing reaction or the like; or a production method involving laminating a formation material for the convertible pressure-sensitive adhesive layer, the flame-resistant material, and a formation material for the functional layer and then forming the convertible pressure-sensitive adhesive layer and the functional layer by a curing reaction or the like. In this case, examples of the functional layer include a protective layer, a thermally functional layer, a physically functional layer, a chemically functional layer, an environment-resistant functional layer, and a hygienically functional layer.

As a preferred production method for the pressure-sensitive adhesive layer in the shatterproofing member including a convertible pressure-sensitive adhesive layer of the present invention, there is given, for example, a method involving: partially polymerizing a polymerizable composition, which contains the monomer components to be used for forming the polymer component and any appropriate photopolymerization initiator, to prepare a polymerizable syrup; adding the sinterable particles to the polymerizable syrup, followed by uniform dispersion of the particles in the syrup; then applying the dispersion onto any appropriate backing (such as a separator); and subjecting the resultant to photopolymerization (curing) by photoirradiation. The shatterproofing member including a convertible pressure-sensitive adhesive layer of the present invention may be produced by laminating the flame-resistant material to the pressure-sensitive adhesive layer thus obtained. Alternatively, the shatterproofing member including a convertible pressure-sensitive adhesive layer of the present invention may be produced by using the flame-resistant material as the backing to which the dispersion is applied in the preferred production method for the pressure-sensitive adhesive layer.

Any appropriate conditions may be adopted as conditions for the photoirradiation, such as a light source, irradiation energy, an irradiation method, and an irradiation time.

An active energy ray to be used in the photoirradiation is, for example, an ionizing radiation such as an α-ray, a β-ray, a γ-ray, a neutron beam, or an electron beam, or UV light. Of those, UV light is preferred.

Irradiation with the active energy ray is performed by using, for example, a black-light lamp, a chemical lamp, a high-pressure mercury lamp, or a metal halide lamp.

Heating may be performed in the polymerization. Any appropriate heating method may be adopted as a heating method. Examples of the heating method include a heating method involving using an electrothermal heater and a heating method involving using an electromagnetic wave such as an infrared ray.

The protective layer to be used may be the protective layer of an available film or sheet shape as it is, or may be produced by any appropriate method. The protective layer may be preferably produced by applying a resin composition (e.g. , a resin composition containing a UV-curable resin, a resin composition containing a thermosetting resin, or a resin composition containing an organic-inorganic hybrid resin) as a formation material, and as required, drying the composition. When the resin composition as a formation material is applied, any appropriate solvent may be added as required.

Any appropriate means may be adopted as means for applying the resin composition. Examples of such means include gravure coating, spray coating, and dip coating.

When the resin composition is dried after its application, a heating temperature for the drying is preferably 30°C to 180°C, more preferably 50°C to 150°C. A heating time for the drying is preferably 10 seconds to 10 minutes.

In the production of the protective layer, after the application of the resin composition, the layer may be cured by, for example, UV irradiation or heating as required. For example, when a resin composition containing a UV-curable resin is used, the layer is preferably cured by UV irradiation, and when a resin composition containing a thermosetting resin is used, the layer is preferably cured by heating.

After its production, the protective layer may be aged for a necessary time period. The aging can improve the peel strength of the coating film.

The production of the protective layer may be performed at any appropriate timing during the production of the shatterproofing member including a convertible pressure-sensitive adhesive layer of the present invention.

The heat-insulating layer to be used may be the heat-insulating layer of an available film or sheet shape as it is, or may be produced by any appropriate method. Theheat-insulating layer may be preferably produced by applying a resin composition (e.g., a resin composition containing hollow bead structures) as a formation material, and as required, drying the composition. When the resin composition as a formation material is applied, any appropriate solvent may be added as required.

Any appropriate means may be adopted as means for applying the resin composition. Examples of such means include gravure coating, spray coating, and dip coating.

When the resin composition is dried after its application, a heating temperature for the drying is preferably 30°C to 180°C, more preferably 50°C to 150°C. A heating time for the drying is preferably 10 seconds to 10 minutes.

In the production of the heat-insulating layer, after the application of the resin composition, the layer may be cured by, for example, UV irradiation or heating as required. For example, when a resin composition containing a UV-curable resin is used, the layer is preferably cured by UV irradiation, and when a resin composition containing a thermosetting resin is used, the layer is preferably cured by heating.

After its production, the heat-insulating layer may be aged for a necessary time period. The aging can improve the peel strength of the coating film.

When the heat-shielding layer is an applied layer, the heat-shielding layer can be formed by applying any appropriate heat-shielding coating material. Specifically, for example, the heat-shielding layer is formed by applying a heat-shielding coating material onto the surface of the flame-resistant material in the laminate of the convertible pressure-sensitive adhensive layer and the flame-resistant material. After its application, the heat-shielding coating material is dried as required. A commercially available heat-shielding coating material may be used as the heat-shielding coating material, or the coating material can be prepared by mixing any appropriate heat-shielding substance and, as required, any other additive with any appropriate solvent. The solvent is preferably, for example, an organic solvent or water. The solvents may be used alone or as a mixture. When the heat-shielding substance and, as required, any other additive are mixed with the solvent, the heat-shielding substance may be mixed in a powder state, or may be mixed in a slurry state or a sol state.

Any appropriate means may be adopted as means for applying the heat-shielding coating material. Examples of such means include gravure coating, spray coating, and dip coating. After the application of the heat-shielding coating material, the applied product can be dried as required. A heating temperature for the drying is preferably 50 to 200°C. A heating time for the drying is preferably 10 seconds to 60 minutes. After the performance of the drying, aging may be performed for a necessary time period. The aging can improve the peel strength of the coating film.

When the heat-shielding layer is a sheet layer, the sheet layer can be formed by any appropriate formingmethod. Specifically, for example, a sheet-shaped product is formed by any appropriate forming method and the sheet-shaped product is attached to the surface of the flame-resistant material in the laminate of the convertible pressure-sensitive adhensive layer and the flame-resistant material.

When the heat-shielding layer is a foil layer, specifically, for example, a foil-shaped product such as a metal foil is prepared in advance and the foil-shaped product is attached to the surface of the flame-resistant material in the laminate of the convertible pressure-sensitive adhensive layer and the flame-resistant material.

When the heat-shielding layer is a sputtered layer, the layer can be formed by any appropriate sputtering method.

When the heat-shielding layer is a deposited layer, the layer can be, for example, formed by any appropriate deposition method.

The production of the thermally functional layer may be performed at any appropriate timing during the production of the shatterproofing member including a convertible pressure-sensitive adhesive layer of the present invention.

The functional layer (physically functional layer or chemically functional layer) to be used may be the functional layer (physically functional layer or chemically functional layer) of an available film or sheet shape as it is, or may be produced by any appropriate method.

The anti-fingerprint layer may be produced by any appropriate method. The anti-fingerprint layer can be preferably produced by: applying a resin composition (such as a resin composition containing at least one kind of resin selected from a fluorine-based resin, a silicone-based resin, and a urethane-based resin) as a formation material; and drying the composition as required. Any appropriate solvent may be added as required upon application of the resin composition as a formation material.

Any appropriate means may be adopted as means for applying the resin composition. Examples of such means include gravure coating, spray coating, and dip coating.

When the resin composition is dried after its application, a heating temperature for the drying is preferably 30°C to 180°C, more preferably 50°C to 150°C. A heating time for the drying is preferably 10 seconds to 10 minutes.

After the application of the resin composition, the anti-fingerprint layer may be cured by, for example, UV irradiation or heating as required. For example, when a resin composition containing a UV-curable resin is used, the layer is preferably cured by UV irradiation, and when a resin composition containing a thermosetting resin is used, the layer is preferably cured by heating.

After its production, the anti-fingerprint layer may be aged for a necessary time period. The aging can improve the peel strength of the coating film.

The ink-absorbing layer may be produced by any appropriate method. The ink-absorbing layer can be preferably produced by applying the water-soluble resin and drying the resin as required. Any appropriate solvent may be added as required upon application of the water-soluble resin. Examples of the method involving applying the water-soluble resin to form the ink-absorbing layer include: a method involving directly applying the water-soluble resin to form the ink-absorbing layer; and a method involving transferring the ink-absorbing layer, which has been formed by applying the water-soluble resin onto any appropriate backing.

Any appropriate means may be adopted as means for applying the water-soluble resin. Examples of such means include gravure coating, spray coating, and dip coating.

When the water-soluble resin is dried after its application, a heating temperature for the drying is preferably 30°C to 180°C, more preferably 50°C to 150°C. A heating time for the drying is preferably 10 seconds to 10 minutes.

The antireflection layer may be produced by any appropriate method. Preferred examples of the method of producing the antireflection layer include: a method involving forming the antireflection layer; and a method involving transferring the antireflection layer formed on any appropriate backing. In addition, the antireflection layer may be formed by using any appropriate antireflection coating material.

The light selective transmission layer may be produced by any appropriate method. Examples of the method of producing the light selective transmission layer include: a method involving performing coating with a material for the light selective transmission layer to form the layer; and a method involving depositing the material for the light selective transmission layer from the vapor (e.g., vacuum deposition) to form the layer. In addition, the light selective transmission layer may be formed by laminating the light selective transmission layer. Further, the light selective transmission layer may be formed by transferring the light selective transmission layer after its formation on any appropriate backing.

The alkali-resistant layer may be produced by any appropriate method. The alkali-resistant layer can be preferably produced by applying the alkali-resistant resin and drying the resin as required. Any appropriate solvent may be added as required upon application of the alkali-resistant resin. Examples of the method involving applying the alkali-resistant resin to form the alkali-resistant layer include: a method involving directly applying the alkali-resistant resin to form the alkali-resistant layer; and a method involving transferring the alkali-resistant layer, which has been formed by applying the alkali-resistant resin onto any appropriate backing.

Any appropriate means may be adopted as means for applying the alkali-resistant resin. Examples of such means include gravure coating, spray coating, and dip coating.

When the alkali-resistant resin is dried after its application, a heating temperature for the drying is preferably 30°C to 180°C, more preferably 50°C to 150°C. A heating time for the drying is preferably 10 seconds to 10 minutes.

The acid-resistant layer may be produced by any appropriate method. The acid-resistant layer can be preferably produced by applying the acid-resistant resin and drying the resin as required. Any appropriate solvent may be added as required upon application of the acid-resistant resin. Examples of the method involving applying the acid-resistant resin to form the acid-resistant layer include: a method involving directly applying the acid-resistant resin to form the acid-resistant layer; and a method involving transferring the acid-resistant layer, which has been formed by applying the acid-resistant resin onto any appropriate backing.

Any appropriate means may be adopted as means for applying the acid-resistant resin. Examples of such means include gravure coating, spray coating, and dip coating.

When the acid-resistant resin is dried after its application, a heating temperature for the drying is preferably 30°C to 180°C, more preferably 50°C to 150°C. A heating time for the drying is preferably 10 seconds to 10 minutes.

The solvent-resistant layer may be produced by any appropriate method. The solvent-resistant layer can be preferably produced by applying the solvent-resistant resin and drying the resin as required. Any appropriate solvent may be added as required upon application of the solvent-resistant resin. Examples of the method involving applying the solvent-resistant resin to form the solvent-resistant layer include: a method involving directly applying the solvent-resistant resin to form the solvent-resistant layer; and a method involving transferring the solvent-resistant layer, which has been formed by applying the solvent-resistant resin onto any appropriate backing.

Any appropriate means may be adopted as means for applying the solvent-resistant resin. Examples of such means include gravure coating, spray coating, and dip coating.

When the solvent-resistant resin is dried after its application, a heating temperature for the drying is preferably 30°C to 180°C, more preferably 50°C to 150°C. A heating time for the drying is preferably 10 seconds to 10 minutes.

The production of the physically functional layer or the chemically functional layer may be performed at any appropriate timing during the production of the shatterproof ing member including a convertible pressure-sensitive adhesive layer of the present invention.

The functional layer (environment-resistant functional layer or hygienically functional layer) to be used may be the functional layer (environment-resistant functional layer or hygienically functional layer) of an available film or sheet shape as it is, or may be produced by any appropriate method.

The photocatalyst layer may be produced by any appropriate method. The photocatalyst layer can be preferably produced by applying a photocatalyst coating liquid containing the photocatalyst and drying the liquid as required. The photocatalyst coating liquid can be prepared by mixing the photocatalyst and any appropriate solvent. The photocatalyst is preferably photocatalyst particles. The solvent is preferably, for example, an organic solvent or water. The solvents may be used alone or as a mixture. When the photocatalyst and the solvent are mixed, the photocatalyst may be mixed in a powder state, or may be mixed in a slurry state or a sol state.

When the photocatalyst particles are used, a dispersion stabilizer may be caused to co-exist in the photocatalyst coating liquid in order that a change in particle diameter and sedimentation due to the aggregation of the photocatalyst particles maybe prevented. The dispersion stabilizer may be caused to co-exist at the time of the preparation of the photocatalyst particles, or may be added upon preparation of the photocatalyst coating liquid.

Any appropriate dispersion stabilizer can be used as the dispersion stabilizer. For example, titanium oxide is liable to aggregate at a circumneutral pH and hence an acidic or alkaline dispersion stabilizer is preferred.

Examples of the acidic dispersion stabilizer include: mineral acids such as nitric acid and hydrochloric acid; carboxylic acids such as acetic acid, oxalic acid, glycolic acid, lactic acid, tartaric acid, malic acid, and citric acid; oxycarboxylic acids; and polycarboxylic acids. Examples of the alkaline dispersion stabilizer include: alkali metal salts of carboxylic acids, polycarboxylic acids, and the like; ammonia; primary to quaternary amines; and alkanolamines each obtained by adding a hydroxy group to an amine.

The photocatalyst coating liquid may contain an inorganic binder. The inorganic binder enhances adhesion between the photocatalyst particles and improves the strength of the layer based on the photocatalyst. Any appropriate inorganic compound may be adopted as the inorganic binder as long as the compound functions as a binder. Examples of the inorganic binder are as described above.

The photocatalyst coating liquid may contain any appropriate other additive depending on purposes and necessity. Such other additive is, for example, a thickener. The thickener is, for example, a water-soluble polymer.

Any appropriate content may be adopted as each of the content of the photocatalyst in the photocatalyst coating liquid and the content of any other component (such as the inorganic binder) therein as long as the photocatalyst layer to be obtained can express photocatalytic performance.

Any appropriate means may be adopted as means for applying the photocatalyst coating liquid. Examples of such means include gravure coating, spray coating, and dip coating.

After the application of the photocatalyst coating liquid containing the photocatalyst, the applied product can be dried as required. A heating temperature for the drying is preferably 80 °C to 180 °C. A heating time for the drying is preferably 10 seconds to 10 minutes.

After the performance of the drying, aging may be performed for a necessary time period. The aging can improve the peel strength of the coating film.

The antifouling layer may be produced by any appropriate method. The antifouling layer can be preferably produced by: applying a resin composition (such as a resin composition containing at least one kind of resin selected from a fluorine-based resin and a silicone-based resin) as a formation material; and drying the composition as required. Any appropriate solvent may be added as required upon application of the resin composition as a formation material.

Any appropriate means may be adopted as means for applying the resin composition. Examples of such means include gravure coating, spray coating, and dip coating.

When the resin composition is dried after its application, a heating temperature for the drying is preferably 30°C to 180°C, more preferably 50°C to 150°C. A heating time for the drying is preferably 10 seconds to 10 minutes.

After the application of the resin composition, the antifouling layer may be cured by, for example, UV irradiation or heating as required. For example, when a resin composition containing a UV-curable resin is used, the layer is preferably cured by UV irradiation, and when a resin composition containing a thermosetting resin is used, the layer is preferably cured by heating.

After its production, the antifouling layer may be aged for a necessary time period. The aging can improve the peel strength of the coating film.

The moisture-conditioning layer may be produced by any appropriate method. The moisture-conditioning layer can be produced by, for example, applying a moisture-conditioning coating material essentially containing the porous substance and drying the coating material as required. Any appropriate solvent may be added as required upon application of the moisture-conditioning coating material. Examples of the method involving applying the moisture-conditioning coating material to form the moisture-conditioning layer include: a method involving directly applying the moisture-conditioning coating material to form the moisture-conditioning layer; and a method involving transferring the moisture-conditioning layer, which has been formed by applying the moisture-conditioning coating material onto any appropriate backing.

Any appropriate means may be adopted as means for applying the moisture-conditioning coating material. Examples of such means include gravure coating, spray coating, and dip coating.

When the moisture-conditioning coating material is dried after its application, a heating temperature for the drying is preferably 30°C to 180°C, more preferably 50°C to 150°C. A heating time for the drying is preferably 10 seconds to 10 minutes.

The moisture-preventing layer may be produced by any appropriate method. The moisture-preventing layer can be produced by, for example, applying a moisture-preventing coating material essentially containing the resin having a moisture-preventing effect and drying the coating material as required. Any appropriate solvent may be added as required upon application of the moisture-preventing coating material. Examples of the method involving applying the moisture-preventing coating material to form the moisture-preventing layer include: a method involving directly applying the moisture-preventing coating material to form the moisture-preventing layer; and a method involving transferring the moisture-preventing layer, which has been formed by applying the moisture-preventing coating material onto any appropriate backing.

Any appropriate means may be adopted as means for applying the moisture-preventing coating material. Examples of such means include gravure coating, spray coating, and dip coating.

When the moisture-preventing coating material is dried after its application, a heating temperature for the drying is preferably 30°C to 180°C, more preferably 50°C to 150°C. A heating time for the drying is preferably 10 seconds to 10 minutes.

The water-resistant layer may be produced by any appropriate method. Examples of the method of producing the water-resistant layer include: a method involving directly forming the water-resistant resin; and a method involving transferring the water-resistant resin formed on any appropriate backing. In addition, the water-resistant layer may be formed by using any appropriate water-resistant coating material.

The water-repellent layer may be produced by any appropriate method. Examples of the method of producing the water-repellent layer include: a method involving directly forming the water-repellent layer containing the water-repellent compound; and a method involving transferring the water-repellent layer containing the water-repellent compound and formed on any appropriate backing. In addition, the water-repellent layer may be formed by using any appropriate water-repellent coating material.

The hydrophilic layer may be produced by any appropriate method. Examples of the method of producing the hydrophilic layer include: a method involving directly forming the hydrophilic layer containing the hydrophilic inorganic compound and/or the hydrophilic resin; and a method involving transferring the hydrophilic layer containing the hydrophilic in organic compound and/or the hydrophilic resin and formed on any appropriate backing. In addition, the hydrophilic layer may be formed by using any appropriate hydrophilic coating material.

The oil-repellent layer may be produced by any appropriate method. Examples of the method of producing the oil-repellent layer include: a method involving directly forming the oil-repellent layer containing the oil-repellent compound; and a method involving transferring the oil-repellent layer containing the oil-repellent compound and formed on any appropriate backing. In addition, the oil-repellent layer may be formed by using any appropriate oil-repellent coating material.

The antibacterial layer may be produced by any appropriate method. The antibacterial layer can be preferably produced by: applying a resin composition (such as a resin composition containing an antibacterial agent) as a formation material; and drying the composition as required. Any appropriate solvent may be added as required upon application of the resin composition as a formation material.

Any appropriate means may be adopted as means for applying the resin composition. Examples of such means include gravure coating, spray coating, and dip coating.

When the resin composition is dried after its application, a heating temperature for the drying is preferably room temperature to 150°C, more preferably 40°C to 100°C. A heating time for the drying is preferably 10 seconds to 10 minutes.

After the application of the resin composition, the antibacterial layer may be cured by, for example, UV irradiation or heating as required. For example, when a resin composition containing a UV-curable resin is used, the layer is preferably cured by UV irradiation, and when a resin composition containing a thermosetting resin is used, the layer is preferably cured by heating.

After its production, the antibacterial layer may be aged for a necessary time period. The aging can improve the peel strength of the coating film.

The antifungal layer may be produced by any appropriate method. The antifungal layer can be preferably produced by: applying a resin composition (such as a resin composition containing an antifungal agent) as a formationmaterial; and drying the composition as required. Any appropriate solvent may be added as required upon application of the resin composition as a formation material.

Any appropriate means may be adopted as means for applying the resin composition. Examples of such means include gravure coating, spray coating, and dip coating.

When the resin composition is dried after its application, a heating temperature for the drying is preferably room temperature to 150°C, more preferably 40°C to 100°C. A heating time for the drying is preferably 10 seconds to 10 minutes.

After the application of the resin composition, the antifungal layer may be cured by, for example, UV irradiation or heating as required. For example, when a resin composition containing a UV-curable resin is used, the layer is preferably cured by UV irradiation, and when a resin composition containing a thermosetting resin is used, the layer is preferably cured by heating.

After its production, the antifungal layer may be aged for a necessary time period. The aging can improve the peel strength of the coating film.

The deodorant layer may be produced by any appropriate method. Examples of the method of producing the deodorant layer include: a method involving performing direct coating with a material for the deodorant layer to form the layer; and a method involving depositing the material for the deodorant layer from the vapor (e. g. , vacuum deposition) to form the layer. In addition, the deodorant layer may be formed by lamination. Further, the deodorant layer may be formed by transferring the deodorant layer after its formation on any appropriate backing.

The production of the environment-resistant functional layer or the hygienically functional layer may be performed at any appropriate timing during the production of the shatterproofing member including a convertible pressure-sensitive adhesive layer of the present invention.

### Examples

Hereinafter, the present invention is described in more detail by way of Examples, but the present invention is not limited to Examples shown below.

It should be noted that a biaxially stretched polyethylene terephthalate film having a thickness of 38 µm (trade name: "MRN38," manufactured by Mitsubishi Chemical Polyester Film) one surface of which had been subjected to a silicone-based release treatment was used as each of separators and cover separators used in the following respective examples. When various evaluations were performed, those separators and cover separators were peeled off as required.

### (Synthesis Example 1) (Preparation of photopolymerizable syrup (A))

90 Parts by weight of 2-ethylhexyl acrylate and 10 parts by weight of acrylic acid as monomer components, 0.05 part by weight of a photopolymerization initiator (trade name: "IRGACURE 651," manufactured by BASF), and 0.05 part by weight of a photopolymerization initiator (trade name: "IRGACURE 184," manufactured by BASF) were stirred in a four-necked separable flask including a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a photopolymerizable syrup (A) as a composition having a rate of polymerization of 3.5% part of which had been polymerized was prepared.

### (Synthesis Example 2) (Preparation of photopolymerizable syrup (B))

100 Parts by weight of cyclohexyl acrylate as a monomer component, 0.05 part by weight of a photopolymerization initiator (trade name: "IRGACURE 651," manufactured by BASF), and 0.05 part by weight of a photopolymerization initiator (trade name: "IRGACURE 184, " manufactured by BASF) were stirred in a four-necked separable flask including a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a photopolymerizable syrup (B) as a composition having a rate of polymerization of 7% part of which had been polymerized was prepared.

### (Example 1)

0.1 Part by weight of 1,6-hexanediol diacrylate (HDDA) and 50 parts by weight of phosphoric acid-based frit (manufactured by TAKARASTANDARD CO., LTD., VY0144, deformation point:397°C, average particle diameter: 10 µm) were added to 100 parts by weight of the photopolymerizable syrup (A) obtained in Synthesis Example 1, and were uniformly dispersed therein with a disper. The resultant dispersion was applied onto the peel-treated surface of a separator so as to have a thickness of 50 µm. A cover separator was attached thereto, and the resultant was irradiated with UV light (illuminance: 5 mW/cm²) by using a black-light lamp as a light source for 5 minutes to cure the applied layer. Thus, a sheet-shaped convertible pressure-sensitive adhesive (1A) having a thickness of 50 µm was produced.

The resultant sheet-shaped convertible pressure-sensitive adhesive (1A) having a thickness of 50 µm was attached to a glass cloth (1031, manufactured by Arisawa Mfg. Co., Ltd.) having a thickness of 100 µm to produce a sheet-shaped shatterproofing member (1B) including a convertible pressure-sensitive adhesive layer.

### (Example 2)

0.1 Part by weight of 1,6-hexanediol diacrylate (HDDA) and 50 parts by weight of porcelain enamel frit (manufactured by TAKARA STANDARD CO., LTD., CY0098M1, deformation point: about 500°C, average particle diameter: 10 µm) were added to 100 parts by weight of the photopolymerizable syrup (A) obtained in Synthesis Example 1, and were uniformly dispersed therein with a disper. The resultant dispersion was applied onto the peel-treated surface of a separator so as to have a thickness of 50 µm. A cover separator was attached thereto, and the resultant was irradiated with UV light (illuminance: 5 mW/cm²) by using a black-light lamp as a light source for 5 minutes to cure the applied layer. Thus, a sheet-shaped convertible pressure-sensitive adhesive (2A) having a thickness of 50 µm was produced.

The resultant sheet-shaped convertible pressure-sensitive adhesive (2A) having a thickness of 50 µm was attached to a glass cloth (1031, manufactured by Arisawa Mfg. Co., Ltd.) having a thickness of 100 µm to produce a sheet-shaped shatterproofing member (2B) including a convertible pressure-sensitive adhesive layer.

### (Example 3)

0.1 Part by weight of 1,6-hexanediol diacrylate (HDDA) and 50 parts by weight of phosphoric acid-based frit (manufactured by TAKARA STANDARD CO., LTD., deformation point: 397°C, average particle diameter: 3 µm) were added to 100 parts by weight of the photopolymerizable syrup (A) obtained in Synthesis Example 1, and were uniformly dispersed therein with a disper. The resultant dispersion was applied onto the peel-treated surface of a separator so as to have a thickness of 50 µm. A cover separator was attached thereto, and the resultant was irradiated with UV light (illuminance: 5 mW/cm²) by using a black-light lamp as a light source for 5 minutes to cure the applied layer. Thus, a sheet-shaped convertible pressure-sensitive adhesive (3A) having a thickness of 50 µm was produced.

The resultant sheet-shaped convertible pressure-sensitive adhesive (3A) having a thickness of 50 µm was attached to a glass cloth (1031, manufactured by Arisawa Mfg. Co., Ltd.) having a thickness of 100 µm to produce a sheet-shaped shatterproofing member (3B) including a convertible pressure-sensitive adhesive layer.

### (Example 4)

0.1 Part by weight of 1,6-hexanediol diacrylate (HDDA) and 20 parts by weight of phosphoric acid-based frit (manufactured by TAKARA STANDARD CO., LTD., VY0144, deformation point: 397 °C, average particle diameter: 10 µm) were added to 100 parts by weight of the photopolymerizable syrup (A) obtained in Synthesis Example 1, and were uniformly dispersed therein with a disper. The resultant dispersion was applied onto the peel-treated surface of a separator so as to have a thickness of 50 µm. A cover separator was attached thereto, and the resultant was irradiated with UV light (illuminance: 5 mW/cm²) by using a black-light lamp as a light source for 5 minutes to cure the applied layer. Thus, a sheet-shaped convertible pressure-sensitive adhesive (4A) having a thickness of 50 µm was produced.

The resultant sheet-shaped convertible pressure-sensitive adhesive (4A) having a thickness of 50 µm was attached to a glass cloth (1031, manufactured by Arisawa Mfg. Co., Ltd.) having a thickness of 100 µm to produce a sheet-shaped shatterproofing member (4B) including a convertible pressure-sensitive adhesive layer.

### (Example 5)

50 Parts by weight of phosphoric acid-based frit (manufactured by TAKARA STANDARD CO., LTD., VY0144, deformation point: 397°C, average particle diameter: 10 µm) were added to 100 parts by weight of a silicone-based pressure-sensitive adhesive (manufactured by Dow Corning Toray Co., Ltd., SD-4585), and were uniformly dispersed therein with a disper. The resultant dispersion was applied onto the peel-treated surface of a separator so as to have a thickness of 50 µm, followed by drying for fixation. Thus, a sheet-shaped convertible pressure-sensitive adhesive (5A) having a thickness of 50 µm was produced.

The resultant sheet-shaped convertible pressure-sensitive adhesive (5A) having a thickness of 50 µm was attached to a glass cloth (1031, manufactured by Arisawa Mfg. Co., Ltd.) having a thickness of 100 µm to produce a sheet-shaped shatterproofing member (5B) including a convertible pressure-sensitive adhesive layer.

### (Example 6)

0.1 Part by weight of 1,6-hexanediol diacrylate (HDDA) and 50 parts by weight of phosphoric acid-based frit (manufactured by TAKARA STANDARD CO., LTD., VY0144, deformation point: 397°C, average particle diameter: 10 µm) were added to 100 parts by weight of the photopolymerizable syrup (A) obtained in Synthesis Example 1, and were uniformly dispersed therein with a disper. The resultant dispersion was applied onto the peel-treated surface of a separator so as to have a thickness of 200 µm. A cover separator was attached thereto, and the resultant was irradiated with UV light (illuminance: 5 mW/cm²) by using a black-light lamp as a light source for 5 minutes to cure the applied layer. Thus, a sheet-shaped convertible pressure-sensitive adhesive (6A) having a thickness of 200 µm was produced.

The resultant sheet-shaped convertible pressure-sensitive adhesive (6A) having a thickness of 200 µm was attached to a glass cloth (1031, manufactured by Arisawa Mfg. Co., Ltd.) having a thickness of 100 µm to produce a sheet-shaped shatterproofing member (6B) including a convertible pressure-sensitive adhesive layer.

### (Example 7)

0.1 Part by weight of 1,6-hexanediol diacrylate (HDDA) and 50 parts by weight of phosphoric acid-based frit (manufactured by TAKARA STANDARD CO., LTD., VY0144, deformation point: 397°C, average particle diameter: 10 µm) were added to 100 parts by weight of the photopolymerizable syrup (A) obtained in Synthesis Example 1, and were uniformly dispersed therein with a disper. The resultant dispersion was applied onto the peel-treated surface of a separator so as to have a thickness of 50 µm. A cover separator was attached thereto, and the resultant was irradiated with UV light (illuminance: 5 mW/cm²) by using a black-light lamp as a light source for 5 minutes to cure the applied layer. Thus, a sheet-shaped convertible pressure-sensitive adhesive (7A) having a thickness of 50 µm was produced.

A glass cloth (1031, manufactured by Arisawa Mfg. Co., Ltd.) having a thickness of 100 µm was impregnated with 100 parts by weight of the photopolymerizable syrup (B) obtained in Synthesis Example 2, and the resultant was sandwiched between the peel-treated surfaces of separators and irradiated with UV light (illuminance: 5mW/cm²) by using a black-light lamp for 5 minutes to cure the syrup. Thus, a flame-blocking sheet (7A') having a thickness of 200 µm was produced.

The resultant sheet-shaped convertible pressure-sensitive adhesive (7A) having a thickness of 50 µm was attached to the flame-blocking sheet (7A') having a thickness of 200 µm to produce a sheet-shaped shatterproofing member (7B) including a convertible pressure-sensitive adhesive layer.

### (Example 8)

0.1 Part by weight of 1,6-hexanediol diacrylate (HDDA) and 50 parts by weight of phosphoric acid-based frit (manufactured by TAKARA STANDARD CO., LTD. , VY0144, deformation point: 397 °C, average particle diameter: 10 µm) were added to 100 parts by weight of the photopolymerizable syrup (A) obtained in Synthesis Example 1, and were uniformly dispersed therein with a disper. The resultant dispersion was applied onto the peel-treated surface of a separator so as to have a thickness of 50 µm, and a glass cloth (1031, manufactured by Arisawa Mfg. Co., Ltd.) having a thickness of 100 µm was attached thereonto to produce a polymerizable sheet (8A). Meanwhile, 100 parts by weight of the photopolymerizable syrup (B) obtained in Synthesis Example 2 were applied onto the peel-treated surface of a separator so as to have a thickness of 50 µm, and the applied surface was attached to the glass cloth surface of the polymerizable sheet (8A). The resultant was irradiated with UV light (illuminance: 5 mW/cm²) by using a black-light lamp as a light source for 5 minutes to cure the syrup. Thus, a shatterproofing member (8B) including a convertible pressure-sensitive adhesive layer and having a thickness 200 µm was produced.

### (Comparative Example 1)

0.1 Part by weight of 1,6-hexanediol diacrylate (HDDA) was added to the photopolymerizable syrup (A) obtained in Synthesis Example 1, and the mixture was applied onto the peel-treated surface of a separator so as to have a thickness of 100 µm. A cover separator was attached thereto, and the resultant was irradiated with UV light (illuminance: 5 mW/cm²) by using a black-light lamp as a light source for 5 minutes to cure the mixture. Thus, a sheet-shaped convertible pressure-sensitive adhesive (C1A) having a thickness of 50 µm was produced.

The resultant sheet-shaped convertible pressure-sensitive adhesive (C1A) having a thickness of 50 µm was attached to a glass cloth (1031, manufactured by Arisawa Mfg. Co., Ltd.) having a thickness of 100 µm to produce a sheet-shaped shatterproofing member (C1B) including a convertible pressure-sensitive adhesive layer.

### (Comparative Example 2)

The sheet-shaped convertible pressure-sensitive adhesive (1A) having a thickness of 50 µm obtained in Example 1 was attached to a PET film (A-PET, manufactured by Mitsubishi Chemical Corporation) having a thickness of 100 µm to produce a sheet-shaped shatterproofing member (C2B) including a convertible pressure-sensitive adhesive layer.

### (Comparative Example 3)

0.1 Part by weight of 1,6-hexanediol diacrylate (HDDA) and 50 parts by weight of organic fine particles (manufactured by Soken Chemical & Engineering Co., Ltd., MX-1000, average particle diameter: 10 µm) were added to 100 parts by weight of the photopolymerizable syrup (A) obtained in Synthesis Example 1, and were uniformly dispersed therein with a disper. The resultant dispersion was applied onto the peel-treated surface of a separator so as to have a thickness of 50 µm. A cover separator was attached thereto, and the resultant was irradiated with UV light (illuminance: 5 mW/cm²) by using a black-light lamp as a light source for 5 minutes to cure the applied layer. Thus, a sheet-shaped convertible pressure-sensitive adhesive (C3A) having a thickness of 50 µm was produced.

The resultant sheet-shaped convertible pressure-sensitive adhesive (C3A) having a thickness of 50 µm was attached to a glass cloth (1031, manufactured by Arisawa Mfg. Co., Ltd.) having a thickness of 100 µm to produce a sheet-shaped shatterproofing member (C3B) including a convertible pressure-sensitive adhesive layer.

### (Comparative Example 4)

50 Parts by weight of phosphoric acid-based frit (manufactured by TAKARA STANDARD CO., LTD., VY0144, deformation point: 397°C, average particle diameter: 10 µm) were added to 100 parts by weight of toluene, and were uniformly dispersed therein with a disper. The resultant dispersion was applied onto the peel-treated surface of a separator so as to have a thickness of 50 µm, followed by drying. Thus, a sheet having a thickness of about 10 µm was produced.

The resultant sheet did not show pressure-sensitive adhesive property, and hence was not able to be subjected to the subsequent evaluations.

### <Evaluation for pressure-sensitive adhesive property>

A sample having a width of 10 mm cut out of a convertible pressure-sensitive adhesive layer was brought into pressure contact with a standard stainless-steel plate with a 2-kg rubber roller while the roller was rolled in a reciprocating manner once at a speed of 300 mm/min. After 30 minutes from the pressure contact, the sample was evaluated for its pressure-sensitive adhesive strength by being pulled with a tensile tester at 23°C and a rate of pulling (peel rate) of 50 mm/min in a direction of 180°.

### <Evaluation for glass-shatterproof property>

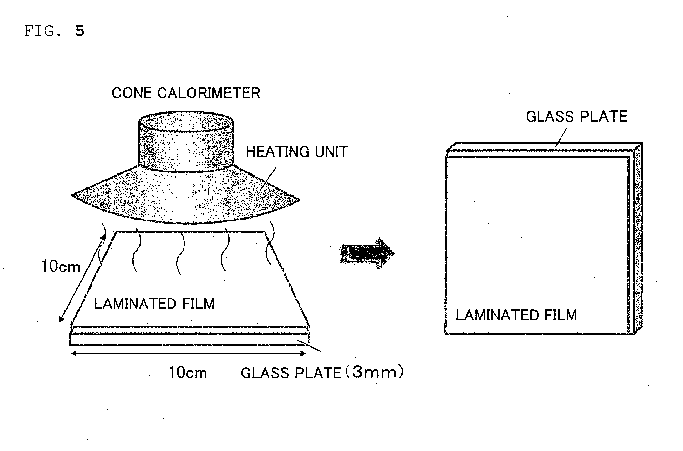

As illustrated in FIG. **5****,** each of the shatterproofing members including a convertible pressure-sensitive adhesive layer obtained in Examples and Comparative Examples was cut into a piece measuring 100 mm by 100 mm square, and the piece was attached to float glass measuring 100 mm by 100 mm square by 3 mm thick to produce a laminate. The laminate was horizontally placed so that the shatterproofing member including a convertible pressure-sensitive adhesive layer faced upward and the glass faced downward, and the entire surface thereof was heated at about 700°C with a cone calorimeter. After 5 minutes, the laminate was taken out of the cone calorimeter, returned to room temperature (23°C), and set in a vertical position. Whether or not glass that had been broken owing to thermal expansion fell down was evaluated.
- ○:: No broken glass falls down.
- ×:: Broken glass falls down.

**[Table 1]**

| | Deformation point (°C) | Average particle diameter (µm) | Addition amount of particles (parts by weight) | Polymer component | Flame-resistant material | Sheet thickness (µm) | Pressure-sensitive adhesive strength (N/10 mm) | Glass-shat terproof property |
|---|---|---|---|---|---|---|---|---|
| Example 1 | 397 | 10 | 50 | Syrup (A) | Glass cloth | 150 | 3.2 | ○ |
| Example 2 | 500 | 10 | 50 | Syrup (A) | Glass cloth | 150 | 3.6 | ○ |
| Example 3 | 397 | 3 | 50 | Syrup (A) | Glass cloth | 150 | 2.9 | ○ |
| Example 4 | 397 | 10 | 20 | Syrup (A) | Glass cloth | 150 | 4.1 | ○ |
| Example 5 | 397 | 10 | 50 | Silicone | Glass cloth | 150 | 2.1 | ○ |
| Example 6 | 397 | 10 | 50 | Syrup (A) | Glass cloth | 300 | 3.7 | ○ |
| Example 7 | 397 | 10 | 50 | Syrup (A) | Resin-impr egnated cloth | 250 | 3.4 | ○ |
| Example 8 | 397 | 10 | 50 | Syrup (A) | Syrup (B)+Glass cloth | 200 | 3.2 | ○ |
| Comparative Example 1 | - | - | - | Syrup (A) | Glass cloth | 150 | 6.4 | × |
| Comparative Example 2 | 397 | 10 | 50 | Syrup (A) | PET | 150 | 3.2 | × |
| Comparative Example 3 | - | 10 | 50 | Syrup (A) | Glass cloth | 150 | 3.3 | × |
| Comparative Example 4 | 397 | 10 | 50 | - | - | 10 | - | × |

Each of the shatterproofing members including a convertible pressure-sensitive adhesive layer obtained in Examples allows adherends to be instantly fixed to each other, allows the adherends to be reattached to each other, is excellent in processability such as being able to be cut into a sheet shape, is not peeled from the adherends even when exposed to a high-temperature atmosphere such as one in a fire, and can express shatterproof property when attached to an adherend that is broken by combustion such as glass even if exposed to combustion during a fire or the like.

### <Horizontal firing test>

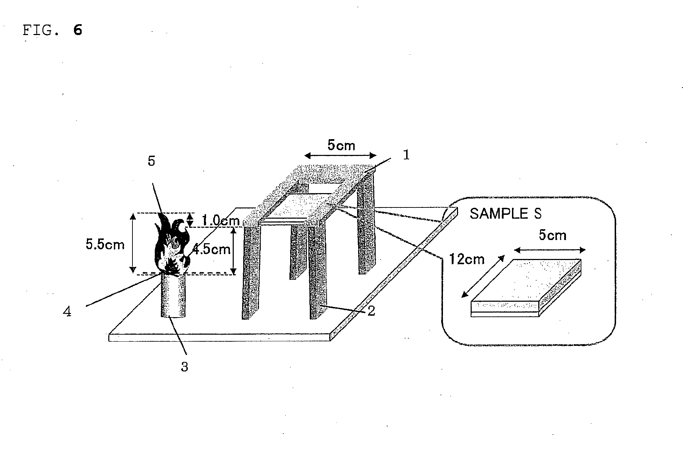

In a horizontal firing test used for evaluating the flame retardancy of a flame-retardant-treated product, measurement was performed with a measurement apparatus illustrated in FIG. **6****.**

A sample **S** (flame-retardant-treated product) as a measurement object was cut so as to have a size of 5 cm by 12 cm, the separator or the cover separator, if present, was peeled off, and both sides of the rectangular shape were each horizontally fixed by two upper and lower supporting plates **1** with the flame-retardant treatment object side (lumber side or plastic side) being an upper surface. In FIG. **6****,** each side of the sample **S** having a length of 12 cm is fixed by the supporting plates **1** (each having a width of 10 cm). With regard to the supporting plates **1,** both sides in the lengthwise direction of the lower supporting plate **1** are including supporting posts **2** so that the lower surface of the sample **S** may be brought into contact with air and a Bunsen burner **3** may be placed.

The Bunsen burner **3** was placed so that a flame port **4** of the Bunsen burner **3** was positioned at a lower portion distant from the central portion of the lower surface of the placed sample by 45 mm, and then 1 cm (difference between the height of the flame from the flame port **4** of the Bunsen burner **3,** i.e. , 55 mm and the distance between the lower surface of the sample **S** and the flame port **4** of the Bunsen burner **3,** i.e., 45 mm) of the flame of the Bunsen burner having a height of 55 mm from the flame port (height indicated by **5** in FIG. **6**) was brought into contact for 30 seconds. Although the Bunsen burner **3** is positioned below the the sample **S,** the Bunsen burner **3** is illustrated outside the supporting plates **1** in FIG. **6** for convenience. A propane gas was used as the gas of the Bunsen burner and the flame contact was performed in the air.

### <Evaluation for flame retardancy of flame-retardant-treated product>

### (1) Flame-retardant treatment for lumber

A plate made of pine wood having a thickness of 6 mm was attached to each of the shatterproofing members including a convertible pressure-sensitive adhesive layer obtained in Examples and Comparative Examples to prepare a sample (flame-retardant-treated product). The sample was observed for the presence or absence of the combustion of the flame-retardant-treated product in the horizontal firing test, to thereby evaluate the flame retardancy of the flame-retardant-treated product.
○: The flame-retardant-treated product does not ignite even after 5 minutes from the flame contact.
Δ: The flame-retardant-treated product ignites within 5 minutes from the flame contact, but does not fall down.
×: The flame-retardant-treated product ignites within 5 minutes from the flame contact and falls down.

### (2) Flame-retardant treatment for plastic

A polycarbonate plate (manufactured by Takiron Co., Ltd., PC1600) having a thickness of 2 mm was attached to each of the shatterproofing members including a convertible pressure-sensitive adhesive layer obtained in Examples and Comparative Examples to prepare a sample (flame-retardant-treated product). The sample was observed for the presence or absence of the combustion of the flame-retardant-treated product in the horizontal firing test, to thereby evaluate the flame retardancy of the flame-retardant-treated product.
○: The flame-retardant-treated product does not ignite and melt and drip down even after 3 minutes from the flame contact.
Δ: The flame-retardant-treated product ignites within 3 minutes from the flame contact, but does not melt and drip down.
×: The flame-retardant-treated product ignites and melts and drips down within 3 minutes from the flame contact.

**[Table 2]**

| | Flame retardancy of flame-retardant-treated product | |
|---|---|---|
| | Flame-retardant treatment for lumber | Flame-retardant treatment for plastic |
| Example 1 | ○ | ○ |
| Example 2 | ○ | ○ |
| Example 3 | ○ | ○ |
| Example 4 | ○ | ○ |
| Example 5 | ○ | ○ |
| Example 6 | ○ | ○ |
| Comparative Example 1 | Δ | Δ |
| Comparative Example 2 | × | × |
| Comparative Example 3 | Δ | Δ |

The shatterproofing members including a convertible pressure-sensitive adhesive layer obtained in Examples 1 to 6 each show excellent flame retardancy when used for flame-retardant treatment for lumber. In addition, the shatterproofing members including a convertible pressure-sensitive adhesive layer obtained in Examples 1 to 6 each show excellent flame retardancy when used for flame-retardant treatment for plastic.

### (Synthesis Example 3) (Production of shatterproofing member (A) including convertible pressure-sensitive adhesive layer)

0.1 Part by weight of 1,6-hexanediol diacrylate (HDDA) and 50 parts by weight of phosphoric acid-based frit (manufactured by TAKARA STANDARD CO., LTD.,VY0144, deformation point: 397°C, average particle diameter: 10 µm) were added to 100 parts by weight of the photopolymerizable syrup (A) obtained in Synthesis Example 1, and were uniformly dispersed therein with a disper. The resultant dispersion was applied onto the peel-treated surface of a separator so as to have a thickness of 100 µm. A glass cloth (manufactured by UNITIKA LTD., trade name: E10T-4W, thickness: 100 µm) was placed on the applied surface to form a laminate.

A cover separator was attached onto the resultant laminate in such a manner that its release-treated surface was in contact with the laminate, and the resultant was irradiated with UV light (illuminance: 5 mW/cm²) from both surfaces for 5 minutes by using a black-light lamp as a light source to cure the dispersion. Thus, a sheet-shaped shatterproofing member (A) including a convertible pressure-sensitive adhesive layer was produced.

### (Example 9)

0.1 Part by weight of 1,6-hexanediol diacrylate (HDDA) and 50 parts by weight of phosphoric acid-based frit (manufactured by TAKARA STANDARD CO., LTD., VY0144, deformation point: 397°C, average particle diameter: 10 µm) were added to 100 parts by weight of the photopolymerizable syrup (A) obtained in Synthesis Example 1, and were uniformly dispersed therein with a disper. The resultant dispersion was applied onto the peel-treated surface of a separator so as to have a thickness of 100 µm. A glass cloth (manufactured by UNITIKA LTD., trade name: E10T-4W, thickness: 100 µm) was placed on the applied surface to form a laminate.

A polyester film (manufactured by Oike Fine Coating, Inc., trade name: FINESOLID CE20, thickness: 50 µm) was attached onto the resultant laminate, and the resultant was irradiated with UV light (illuminance: 5 mW/cm²) from both surfaces for 5 minutes by using a black-light lamp as a light source to cure the dispersion. Thus, a sheet-shaped shatterproofing member (9) including a convertible pressure-sensitive adhesive layer was produced.

### (Example 10)

0.1 Part by weight of 1,6-hexanediol diacrylate (HDDA) and 50 parts by weight of phosphoric acid-based frit (manufactured by TAKARA STANDARD CO., LTD., VY0144, deformation point: 397°C, average particle diameter: 10 µm) were added to 100 parts by weight of the photopolymerizable syrup (A) obtained in Synthesis Example 1, and were uniformly dispersed therein with a disper. The resultant dispersion was applied onto the peel-treated surface of a separator so as to have a thickness of 100 µm. A glass cloth (manufactured by UNITIKA LTD., trade name: E10T-4W, thickness: 100 µm) was placed on the applied surface to form a laminate.

A polyester film (manufacturedbyTORAY INDUSTRIES, INC., trade name: Lumirror S10, thickness: 50 µm) was attached onto the resultant laminate, and the resultant was irradiated with UV light (illuminance: 5 mW/cm²) from both surfaces for 5 minutes by using a black-light lamp as a light source to cure the dispersion. Thus, a sheet-shaped shatterproofing member (10) including a convertible pressure-sensitive adhesive layer was produced.

### (Example 11)

The cover separator on the glass cloth side of the shatterproofing member (A) including a convertible pressure-sensitive adhesive layer obtained in Synthesis Example 3 was peeled off to expose the glass cloth side, and an epoxy acrylate-based UV-curable resin (manufactured by ARAKAWA CHEMICAL INDUSTRIES, LTD., trade name: Beam Set 374A) was applied onto the exposed surface and dried at 100°C for 1 minute. After that, the resultant was irradiated with UV light (light quantity: 300 mJ/cm²) by using a metal halide lamp. Thus, a sheet-shaped shatterproofing member (11) including a convertible pressure-sensitive adhesive layer was produced. The protective layer had a thickness of 10 µm.

### (Comparative Example 5)

The shatterproofing member (A) including a convertible pressure-sensitive adhesive layer obtained in Synthesis Example 3 was defined as a shatterproofingmember (C5) including a convertible pressure-sensitive adhesive layer.

### <Scratch resistance>

Each of the shatterproofing members including a convertible pressure-sensitive adhesive layer obtained in Examples and Comparative Example was cut into a piece measuring 25 mm wide by 100 mm or more long, and the piece was attached as a sample to a glass plate. Next, a Steel Wool #0000 was uniformly attached to a smooth section of a column having a diameter of 25 mm and the resultant was pressed against the surface of the sample under the condition of a load of 400 g. It should be noted that the column to which the steel wool had been attached was reciprocated at a speed of 100 mm/sec 10 times. After that, whether or not the surface of the sample was free of a flaw having a width of 10 µm or more was visually observed and evaluated in accordance with the following criteria.
○: No flaw is present.
Δ: A fine flaw is present, but its influence on visibility is small.
×: A large flaw is present, and impairs visibility.

**[Table 3]**

| | Protective layer | Shatterproof property | Scratch resistance |
|---|---|---|---|
| Example 9 | FINESOLID CE20 | ○ | ○ |
| Example 10 | Lumirror S10 | ○ | Δ |
| Example 11 | Beam Set 374A | ○ | ○ |
| Comparative Example 5 | None | ○ | × |

Each of the shatterproofing members including a convertible pressure-sensitive adhesive layer obtained in Examples 9 to 11 allows adherends to be instantly fixed to each other, allows the adherends to be reattached to each other, is excellent in processability such as being able to be cut into a sheet shape, is not peeled from the adherends even when exposed to a high-temperature atmosphere such as one in a fire, can express shatterproof property when attached to an adherend that is broken by combustion such as glass even if exposed to combustion during a fire or the like, and is excellent in scratch resistance.

### (Synthesis Example 4) (Production of shatterproofing member (B) including convertible pressure-sensitive adhesive layer)

0.1 Part by weight of 1,6-hexanediol diacrylate (HDDA) and 50 parts by weight of porcelain enamel frit (manufactured by TAKARA STANDARD CO., LTD., CY0098M1, deformation point: 500°C, average particle diameter: 10 µm) were added to 100 parts by weight of the photopolymerizable syrup (A) obtained in Synthesis Example 1, and were uniformly dispersed therein with a disper. The resultant dispersion was applied onto the peel-treated surface of a separator so as to have a thickness of 100 µm. A glass cloth (manufactured by UNITIKA LTD. , trade name: E10T-4W, thickness: 100 µm) was placed on the applied surface to form a laminate.

A cover separator was attached onto the resultant laminate in such a manner that its release-treated surface was in contact with the laminate, and the resultant was irradiated with UV light (illuminance: 5 mW/cm²) from both surfaces for 5 minutes by using a black-light lamp as a light source to cure the dispersion. Thus, a sheet-shaped shatterproofing member (B) including a convertible pressure-sensitive adhesive layer was produced.

### (Example 12)

The cover separator on the glass cloth side of the shatterproofing member (A) including a convertible pressure-sensitive adhesive layer obtained in Synthesis Example 3 was peeled off to expose the glass cloth side, and a heat-insulating coating material(acrylic resin emulsion coating material containing glass beads, trade name: "Sun Coat Thermo Shield," manufactured by NAGASHIMA SPECIAL PAINT CO., LTD.) was applied onto the exposed surface and dried at 100°C for 5 minutes. Thus, a sheet-shaped shatterproofing member (12) including a convertible pressure-sensitive adhesive layer was produced. The heat-insulating layer had a thickness of 20 µm.

### (Example 13)

The cover separator on the glass cloth side of the shatterproofing member (B) including a convertible pressure-sensitive adhesive layer obtained in Synthesis Example 4 was peeled off to expose the glass cloth side, and a heat-insulating coating material (acrylic resin emulsion coating material containing glass beads, trade name: "Sun Coat Thermo Shield," manufactured by NAGASHIMA SPECIAL PAINT CO., LTD.) was applied onto the exposed surface and dried at 100°C for 5 minutes. Thus, a sheet-shaped shatterproofing member (13) including a convertible pressure-sensitive adhesive layer was produced. The heat-insulating layer had a thickness of 20 µm.

### (Example 14)

The cover separator on the glass cloth side of the shatterproofing member (A) including a convertible pressure-sensitive adhesive layer obtained in Synthesis Example 3 was peeled off to expose the glass cloth side, and a heat-shielding coating material (trade name: "Parathermo," manufactured by NIHON TOKUSHU TORYO CO., LTD.) was applied onto the exposed surface and dried at 100°C for 5 minutes. Thus, a sheet-shaped shatterproofing member (14) including a convertible pressure-sensitive adhesive layer was produced. The heat-shielding layer had a thickness of 20 µm.

### (Example 15)

The cover separator on the glass cloth side of the shatterproofing member (B) including a convertible pressure-sensitive adhesive layer obtained in Synthesis Example 4 was peeled off to expose the glass cloth side, and a heat-shielding coating material (trade name: "Parathermo," manufactured by NIHON TOKUSHU TORYO CO., LTD.) was applied onto the exposed surface and dried at 100°C for 5 minutes. Thus, a sheet-shaped shatterproofing member (15) including a convertible pressure-sensitive adhesive layer was produced. The heat-shielding layer had a thickness of 20 µm.

### (Example 16)

The cover separator on the glass cloth side of the shatterproofing member (A) including a convertible pressure-sensitive adhesive layer obtained in Synthesis Example 3 was peeled off to expose the glass cloth side, and a highly transparent heat-insulating film (trade name: HEATCUT "IR-50HD," manufactured by LINTEC Corporation) was attached onto the exposed surface. Thus, a sheet-shaped shatterproofing member (16) including a convertible pressure-sensitive adhesive layer was produced. The highly transparent heat-insulating layer had a thickness of 78 µm.

### <Evaluation for high-temperature pressure-sensitive adhesive property and high-temperature adhesive property>

### (High-temperature pressure-sensitive adhesive property test*1)

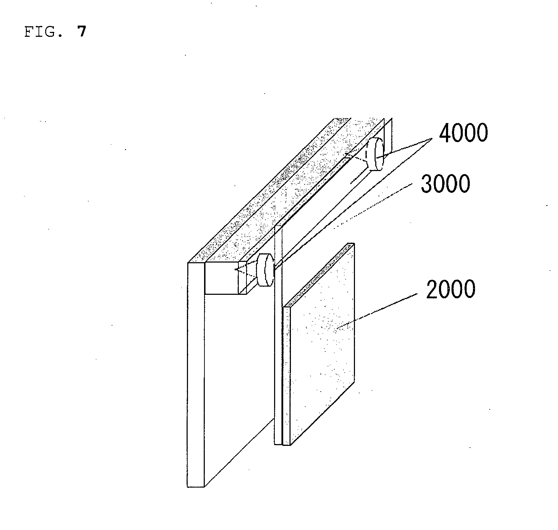

Each of the shatterproofing members including a convertible pressure-sensitive adhesive layer obtained in Examples and Comparative Example was cut into a piece measuring 30 mm by 50 mm, and the piece was attached to a glass plate measuring 30 mm by 30 mm to produce a test body in which the shatterproof ing member including a convertible pressure-sensitive adhesive layer stuck out from the glass plate by 20 mm. As illustrated in FIG. **7****,** the test body was attached to a stainless-steel jig, and was further fixed between stainless-steel plates with screws for fixation.

The test body fixed to the jig was put into an electric furnace held at 200°C, and left at rest under a high-temperature atmosphere under the condition of a rate of temperature increase of 15°C/min for 10 minutes. After that, the test body was taken out, and the pressure-sensitive adhesive state of the test body and the glass plate was visually observed. Then, an evaluation was made by marking a case where the test body and the glass plate were not peeled from each other with symbol "○", marking a case where the test body was peeled from less than a half of the glass plate with symbol "Δ", and marking a case where the test body was peeled from a half or more of the glass plate with symbol "×".

### (High-temperature adhesive property test*2)

A test body was produced with each of the shatterproofing members including a convertible pressure-sensitive adhesive layer obtained in Examples and Comparative Example and was fixed to a j ig in the same manner as in the high-temperature pressure-sensitive adhesive property test*1. After that, the test body was put into an electric furnace held at 700°C, and left at rest under a high-temperature atmosphere under the condition of a rate of temperature increase of 20°C/min for 10 minutes. After that, the test body was taken out, and the adhesive state of the test body and the glass plate was visually observed. Then, an evaluation was made by marking a case where the test body and the glass plate were not peeled from each other with symbol "○", and marking a case where the test body and the glass plate were peeled from each other with symbol "x".

**[Table 4]**

| | Shatterproof property | High-temperature pressure-sensitive adhesive property | High-temperature adhesive property |
|---|---|---|---|
| Example 12 | ○ | ○ | ○ |
| Example 13 | ○ | ○ | ○ |
| Example 14 | ○ | ○ | ○ |
| Example 15 | ○ | ○ | ○ |
| Example 16 | ○ | ○ | ○ |
| Comparative Example 5 | ○ | × | × |

Each of the shatterproofing members including a convertible pressure-sensitive adhesive layer obtained in Examples 12 to 16 allows adherends to be instantly fixed to each other, allows the adherends to be reattached to each other, is excellent in processability such as being able to be cut into a sheet shape, is not peeled from the adherends even when exposed to a high-temperature atmosphere such as one in a fire, and can express shatterproof property when attached to an adherend that is broken by combustion such as glass even if exposed to combustion during a fire or the like. In addition, each of the shatterproofing members including a convertible pressure-sensitive adhesive layer obtained in Examples 12 to 16 is excellent in thermal functionality, and hence can express excellent high-temperature pressure-sensitive adhesive property and high-temperature adhesive property.

### (Example 17)

95 Parts by weight of a polyfunctional acrylate (trade name: "Beam Set 575, " manufactured by ARAKAWA CHEMICAL INDUSTRIES, LTD.), 5 parts by weight of a fluorine-based resin (trade name: "OPTOOL DAC," manufactured by DAIKIN INDUSTRIES, LTD.), and 0.5 part by weight of a photopolymerization initiator (trade name: "IRGACURE 819, " manufactured by BASF) were uniformly mixed to provide a syrup composition.

The cover separator on the glass cloth side of the shatterproofing member (A) including a convertible pressure-sensitive adhesive layer obtained in Synthesis Example 3 was peeled off to expose the glass cloth side, and the syrup composition was applied onto the exposed surface. The resultant was irradiated with UV light (illuminance: 5 mW/cm²) from both sides by using a black-light lamp as a light source for 5 minutes to cure the syrup composition. Thus, a sheet-shaped shatter proofing member (17) including a convertible pressure-sensitive adhesive layer, the member including an anti-fingerprint layer, was produced. The anti-fingerprint layer had a thickness of 20 µm.

### (Example 18)

The cover separator on the glass cloth side of the shatterproofing member (A) including a convertible pressure-sensitive adhesive layer obtained in Synthesis Example 3 was peeled off to expose the glass cloth side, and a 20% aqueous solution of polyvinyl alcohol (KurarayPoval "PVA-244, "manufactured by Kuraray Co., Ltd.) was applied onto the exposed surface and dried at 110°C for 5 minutes. Thus, a sheet-shaped shatterproofing member (18) including a convertible pressure-sensitive adhesive layer, the member including an ink-absorbing layer, was produced. The ink-absorbing layer had a thickness of 20 µm.

### (Example 19)

The cover separator on the glass cloth side of the shatterproofing member (A) including a convertible pressure-sensitive adhesive layer obtained in Synthesis Example 3 was peeled off to expose the glass cloth side, and alumina was deposited from the vapor in a vacuum thereonto with a vacuum deposition apparatus (model number: VE-2030, manufactured by VACUUM DEVICE INC.). Thus, a sheet-shaped shatterproof ing member (19) including a convertible pressure-sensitive adhesive layer, the member including an antireflection layer, was produced. The antireflection layer had a thickness of 0.125 µm.

### (Example 20)

The cover separator on the glass cloth side of the shatterproofing member (A) including a convertible pressure-sensitive adhesive layer obtained in Synthesis Example 3 was peeled off to expose the glass cloth side, and a multilayer film (multilayer film having a number of laminated layers of 25 obtained by alternately laminating a silica (SiO₂) layer and a titania (TiO₂) layer) was formed with a vacuum deposition apparatus (manufactured by VACUUM DEVICE INC., model number: VE-2030). Thus, a sheet-shaped shatterproofing member (20) including a convertible pressure-sensitive adhesive layer, the member including a light selective transmission layer, was produced. The light selective transmission layer had a thickness of 6 µm.

### (Example 21)

The cover separator on the glass cloth side of the shatterproofing member (A) including a convertible pressure-sensitive adhesive layer obtained in Synthesis Example 3 was peeled off to expose the glass cloth side, and an alkali-resistant coating material (trade name: "Silvia WU-200," aqueous acrylic urethane emulsion coating material, manufactured by NIHON TOKUHU TORYO CO. , LTD.) was applied onto the exposed surface and dried at 100°C for 5 minutes. Thus, a sheet-shaped shatterproofing member (21) including a convertible pressure-sensitive adhesive layer, the member including an alkali-resistant layer, was produced. The alkali-resistant layer had a thickness of 10 µm.

### (Example 22)

The cover separator on the glass cloth side of the shatterproofing member (A) including a convertible pressure-sensitive adhesive layer obtained in Synthesis Example 3 was peeled off to expose the glass cloth side, and an acid- resistant coating material (trade name: "Saruhotaito 10" phenol resin-based coating material, manufactured by NIPPON PAINT Co. , Ltd.) was applied onto the exposed surface and dried at 120°C for 1 minute. Thus, a sheet-shaped shatterproofing member (22) including a convertible pressure-sensitive adhesive layer, the member including an acid-resistant layer, was produced. The acid- resistant layer had a thickness of 10 µm.

### (Example 23)

The cover separator on the glass cloth side of the shatterproofing member (A) including a convertible pressure-sensitive adhesive layer obtained in Synthesis Example 3 was peeled off to expose the glass cloth side, and a solvent-resistant coating material (trade name: "Bon Dick 1310NE," aqueous dispersion type urethane resin-based coating material, manufactured by Dainippon Ink and Chemicals, Inc.) was applied onto the exposed surface and dried at 120°C for 1 minute. Thus, a sheet-shaped shatterproofing member (23) including a convertible pressure-sensitive adhesive layer, the member including a solvent-resistant layer, was produced. The solvent-resistant layer had a thickness of 10 µm.

### <Anti-fingerprint property>

A fingerprint was caused to adhere onto the shatterproofing member including a convertible pressure-sensitive adhesive layer obtained in Example or Comparative Example (on the anti-fingerprint layer in Example or the glass cloth side in Comparative Example). Black paper was spread below the member, and then the fingerprint was visually observed from a vertical direction and evaluated in accordance with the following criteria.
- ○:: The fingerprint is not observed.
- Δ:: The fingerprint is slightly observed.
- ×:: The fingerprint is whitely and clearly observed.

### <Printing property>

Printing was performed on the shatterproof ingmember including a convertible pressure-sensitive adhesive layer obtained in Example or Comparative Example (on the ink-absorbing layer in Example or the glass cloth side in Comparative Example) with an inkjet printer PM-900 manufactured by SEIKO EPSON. The quality of the printing was evaluated by being compared to that in the case of printing on an OHP film (manufactured by Sharp Corporation) for a color inkjet printer through visual observation.
- ○:: The quality of the printing is at a comparable level.
- Δ:: The image has a dot of ink mixed therein and is blurred.
- ×:: Owing to a lack of ability to absorb ink, ink runs off or a dot of ink is badly mixed.

### <Antireflection property>

The shatterproofing member including a convertible pressure-sensitive adhesive layer obtained in Example or Comparative Example was attached to a black image, and the degree of unnecessary reflection was evaluated through visual observation in a room with a fluorescent lamp on.
A: The unnecessary reflection of the fluorescent lamp is completely ignorable.
B: The unnecessary reflection of the fluorescent lamp is slightly observed, but is ignorable for the most part.
C: The unnecessary reflection of the fluorescent lamp is observed, but is at an acceptable level.
D: The unnecessary reflection of the fluorescent lamp is noticeably observed, and the unnecessary reflection cannot be ignored.

### <Light selective transmission property>

Transmittances at wavelengths of 400 to 600 nm and 750 to 1,000 nm were measured with a spectrophotometer (Shimadzu UV-3100, manufactured by SHIMADZU CORPORATION).

### <Alkali resistance>

Qualitative filter paper (product name: "No. 2," size: "ϕ55 mm," manufactured by ADVANTEC) sufficiently impregnated with a 10-wt% aqueous solution of sodium hydroxide was placed on the shatterproofing member including a convertible pressure-sensitive adhesive layer obtained in Example or Comparative Example (on the alkali-resistant layer in Example or the glass cloth side in Comparative Example) for 30 minutes, and then the state of the surface of the member after the removal of the qualitative filter paper was observed.
- ○:: No change is observed.
- ×:: The surface has a wrinkle or a blister.

### <Acid resistance>

Qualitative filter paper (product name: "No. 2," size: "ϕ55 mm," manufactured by ADVANTEC) sufficiently impregnated with a 10-vol% aqueous solution of sulfuric acid was placed on the shatterproofing member including a convertible pressure-sensitive adhesive layer obtained in Example or Comparative Example (on the acid-resistant layer in Example or the glass cloth side in Comparative Example) for 30 minutes, and then the state of the surface of the member after the removal of the qualitative filter paper was observed.
- ○:: No change is observed.
- ×:: The surface has a wrinkle or a blister.

### <Solvent resistance>

Qualitative filter paper (product name: "No. 2," size: "ϕ55 mm," manufactured by ADVANTEC) sufficiently impregnated with xylene was placed on the shatterproofing member including a convertible pressure-sensitive adhesive layer obtained in Example or Comparative Example (on the solvent-resistant layer in Example or the glass cloth side in Comparative Example) for 30 minutes, and then the state of the surface of the member after the removal of the qualitative filter paper was observed.
○: No change is observed.
×: The surface has a wrinkle or a blister.

**[Table 5]**

| | Shatterproof property | Anti-fingerprint property |
|---|---|---|
| Example 17 | ○ | ○ |
| Comparative Example 5 | ○ | × |

**[Table 6]**

| | Shatterproof property | Printing property |
|---|---|---|
| Example 18 | ○ | ○ |
| Comparative Example 5 | ○ | × |

**[Table 7]**

| | Shatterproof property | Antireflection property |
|---|---|---|
| Example 19 | ○ | ○ |
| Comparative Example 5 | ○ | × |

**[Table 8]**

| | Shatterproof property | Transmittance | |
|---|---|---|---|
| | | 400 to 600 nm | 750 to 1,000 nm |
| Example 20 | ○ | 70 or more | 5 or less |
| Comparative Example 5 | ○ | 70 or more | 70 or more |

**[Table 9]**

| | Shatterproof property | Alkali resistance |
|---|---|---|
| Example 21 | ○ | ○ |
| Comparative Example 5 | ○ | × |

**[Table 10]**

| | Shatterproof property | Acid resistance |
|---|---|---|
| Example 22 | ○ | ○ |
| Comparative Example 5 | ○ | × |

**[Table 11]**

| | Shatterproof property | Solvent resistance |
|---|---|---|
| Example 23 | ○ | ○ |
| Comparative Example 5 | ○ | × |

Each of the shatterproofing members including a convertible pressure-sensitive adhesive layer obtained in Examples 17 to 23 allows adherends to be instantly fixed to each other, allows the adherends to be reattached to each other, is excellent in processability such as being able to be cut into a sheet shape, is not peeled from the adherends even when exposed to a high-temperature atmosphere such as one in a fire, and can express shatterproof property when attached to an adherend that is broken by combustion such as glass even if exposed to combustion during a fire or the like. In addition, each of the shatterproofing members including a convertible pressure-sensitive adhesive layer obtained in Examples 17 to 23 is excellent in physical functionality or chemical functionality.

### (Example 24)

The cover separator on the glass cloth side of the shatterproofing member (A) including a convertible pressure-sensitive adhesive layer obtained in Synthesis Example 3 was peeled off to expose the glass cloth side, and a photocatalytic coating agent (manufactured by TAYCA CORPORATION, trade name: "TKC-303," photocatalyst: titanium oxide, dry solid content: 13%, titanium oxide particle diameter=6 nm, acidic, aqueous medium) was applied onto the exposed surface and dried at 120°C for 1 minute. Thus, a sheet-shaped shatterproofing member (24) including a convertible pressure-sensitive adhesive layer, the member including a photocatalyst layer, was produced. The photocatalyst layer had a thickness of 5 µm.

### (Example 25)

The cover separator on the glass cloth side of the shatterproofing member (A) including a convertible pressure-sensitive adhesive layer obtained in Synthesis Example 3 was peeled off to expose the glass cloth side, and an antifouling coating material (fluorine-based resin-coating aqueous top coating material, trade name: "Silvia WF-400, " manufactured by NIHON TOKUSHO TORYO Co., LTD.) was applied onto the exposed surface and dried at 120°C for 1 minute. Thus, a sheet-shaped shatterproofing member (25) including a convertible pressure-sensitive adhesive layer, the member including an antifouling layer, was produced. The antifouling layer had a thickness of 5 µm.

### (Example 26)

The cover separator on the glass cloth side of the shatterproofing member (A) including a convertible pressure-sensitive adhesive layer obtained in Synthesis Example 3 was peeled off to expose the glass cloth side, and a moisture-conditioning coating material (trade name : "Suzuka bouro," manufactured by SUZUKA FINE CO., LTD.) was applied onto the exposed surface and dried at 100°C for 5 minutes. Thus, a sheet-shaped shatterproofing member (26) including a convertible pressure-sensitive adhesive layer, the member including a moisture-conditioning layer, was produced. The moisture-conditioning layer had a thickness of 10 µm.

### (Example 27)

A polyvinylidene chloride emulsion (trade name: "Saran Latex L536B," manufactured by Asahi Kasei Chemicals Corporation) was diluted with distilled water to 5 wt% to prepare a polyvinylidene chloride aqueous dispersion liquid.

The cover separator on the glass cloth side of the shatterproofing member (A) including a convertible pressure-sensitive adhesive layer obtained in Synthesis Example 3 was peeled off to expose the glass cloth side, and the polyvinylidene chloride aqueous dispersion liquid was applied onto the exposed surface and dried at 130°C for 5 minutes. Thus, a sheet-shaped shatterproofing member (27) including a convertible pressure-sensitive adhesive layer, the member including a moisture-preventing layer, was produced. The moisture-preventing layer had a thickness of 10 µm.

### (Example 28)

100 Parts by weight of an epoxy acrylate (trade name: "HITAROID 7851," manufactured by HITACHI CHEMICAL CO., LTD.) and 0.5 part by weight of a photopolymerization initiator (trade name: "IRGACURE 819, " manufactured by BASF) were uniformly mixed to provide a syrup composition.

The cover separator on the glass cloth side of the shatterproofing member (A) including a convertible pressure-sensitive adhesive layer obtained in Synthesis Example 3 was peeled off to expose the glass cloth side, and the syrup composition was applied onto the exposed surface. The resultant was irradiated with UV light (illuminance: 5 mW/cm²) from both sides by using a black-light lamp as a light source for 5 minutes to cure the syrup composition. Thus, a sheet-shaped shatter proofing member (28) including a convertible pressure-sensitive adhesive layer, the member including a water-resistant layer, was produced. The water-resistant layer had a thickness of 5 µm.

### (Example 29)

95 Parts by weight of a polyfunctional acrylate (trade name: "Beam Set 575, " manufactured by ARAKAWA CHEMICAL INDUSTRIES, LTD.), 5 parts by weight of a fluorine-based resin (trade name: "OPTOOL DAC," manufactured by DAIKIN INDUSTRIES, LTD.), and 0.5 part by weight of a photopolymerization initiator (trade name: "IRGACURE 819, " manufactured by BASF) were uniformly mixed to provide a syrup composition.

The cover separator on the glass cloth side of the shatterproofing member (A) including a convertible pressure-sensitive adhesive layer obtained in Synthesis Example 3 was peeled off to expose the glass cloth side, and the syrup composition was applied onto the exposed surface. The resultant was irradiated with UV light (illuminance: 5 mW/cm²) from both sides by using a black-light lamp as a light source for 5 minutes to cure the syrup composition. Thus, a sheet-shaped shatterproof ing member (29) including a convertible pressure-sensitive adhesive layer, the member including a water-repellent layer, was produced. The water-repellent layer had a thickness of 5 µm.

### (Example 30)

The cover separator on the glass cloth side of the shatterproofing member (A) including a convertible pressure-sensitive adhesive layer obtained in Synthesis Example 3 was peeled off to expose the glass cloth side, and an inorganic coating agent (manufactured by AGTEX CO., LTD., trade name: "Hydrophilic coat F," main components: titanium dioxide, silica, and platinum) was applied onto the exposed surface and dried at 120°C for 1 minute. Thus, a sheet-shaped shatterproofing member (30) including a convertible pressure-sensitive adhesive layer, the member including a hydrophilic layer, was produced. The hydrophilic layer had a thickness of 5 µm.

### (Example 31)

10 Parts by weight of a fluorine-based oil-repellent agent (trade name: "FS-6130," manufactured by Fluoro Technology) and 90 parts by weight of distilled water were uniformly mixed to provide a fluorine-based oil-repellent coating agent.

The cover separator on the glass cloth side of the shatterproofing member (A) including a convertible pressure-sensitive adhesive layer obtained in Synthesis Example 3 was peeled off to expose the glass cloth side, and the fluorine-based oil-repellent coating agent was applied onto the exposed surface and dried at 120°C for 1 minute. Thus, a sheet-shaped shatterproofing member (31) including a convertible pressure-sensitive adhesive layer, the member including an oil-repellent layer, was produced. The oil-repellent layer had a thickness of 5 µm.

### (Example 32)

An antibacterial coating material was prepared that contained 5 wt% of a silver ion-based zeolite antibacterial agent (particle diameter distribution: 2 to 5 µm, silver content: 2.5 wt%, zinc content: 14.5 wt%) as an antibacterial agent, 5 wt% of microsilica (average primary particle diameter: 16 nm, specific surface area: 110 m²/g) as an extender pigment, and 90 wt% of a two-component curable type urethane resin formed of an acrylic polyol and hexamethylene diisocyanate as a binder.

The cover separator on the glass cloth side of the shatterproofing member (A) including a convertible pressure-sensitive adhesive layer obtained in Synthesis Example 3 was peeled off to expose the glass cloth side, and the antibacterial coating material was applied onto the exposed surface and dried at 80°C for 5 minutes. Thus, a sheet-shaped shatterproofing member (32) including a convertible pressure-sensitive adhesive layer, the member including an antibacterial layer, was produced. The antibacterial layer had a thickness of 5 µm.

### (Example 33)

The cover separator on the glass cloth side of the shatterproofing member (A) including a convertible pressure-sensitive adhesive layer obtained in Synthesis Example 3 was peeled off to expose the glass cloth side, and an antifungal coating material agent (acrylic resin emulsion type coating material, trade name: "Bio tight #10," manufactured by SK KAKEN Co., Ltd.) as an antifungal agent was applied onto the exposed surface and dried at 80°C for 5 minutes. Thus, a sheet-shaped shatterproofing member (33) including a convertible pressure-sensitive adhesive layer, the member including an antifungal layer, was produced. The antifungal layer had a thickness of 5 µm.

### (Example 34)

A deodorant coating material was prepared that contained 5 wt% of a silver ion-based zeolite deodorant (particle diameter distribution: 2 µm to 5 µm, silver content: 2.5 wt%, zinc content: 14.5 wt%) as a deodorant , 5 wt% of microsilica (average primary particle diameter: 16 nm, specific surface area: 110 m²/g) as an extender pigment, and 90 wt% of a two-component curable type urethane resin formed of an acrylic polyol and hexamethylene diisocyanate as a binder.

The cover separator on the glass cloth side of the shatterproofing member (A) including a convertible pressure-sensitive adhesive layer obtained in Synthesis Example 3 was peeled off to expose the glass cloth side, and the deodorant coating material was applied onto the exposed surface and dried at 130°C for 1 minute. Thus, a sheet-shaped shatterproofing member (34) including a convertible pressure-sensitive adhesive layer, the member including a deodorant layer, was produced. The deodorant layer had a thickness of 5 µm.

### <Photocatalytic performance>

The shatterproofing member including a convertible pressure-sensitive adhesive layer obtained in Example or Comparative Example was evaluated for its photocatalytic performance with an acetaldehyde gas. Gas concentrations (initial concentration and concentration after 60 minutes) in a detector tube were measured on the basis of the following evaluation test method.

**(Evaluation test method)**

| | |
|---|---|
| Preirradiation of sample: | 1 mW/cm²×6 hr |
| Sample dimensions: | 5 cm×5 cm |
| Gas bag volume: | Tedlar Bag having a volume of 5 L |
| Initial gas concentration: | 20 ppm |
| Light source: | Fluorescent lamp (10,000 lux) |

### <Antifouling property>

A paste formed of a mixture of carbon black/kerosene=1/2 (weight ratio) was smeared on the shatterproofing member including a convertible pressure-sensitive adhesive layer obtained in Example or Comparative Example (on the antifouling layer in Example or the glass cloth side in Comparative Example), and the resultant was left to stand at room temperature for 24 hours. After that, water washing was performed with a sponge, and the contamination state of the surface of the shatterproofing member including a convertible pressure-sensitive adhesive layer (on the antifouling layer in Example or the glass cloth side in Comparative Example) was visually observed and evaluated in accordance with the following criteria.
- ○:: No contamination.
- Δ:: Slight contamination.
- ×:: Remarkable contamination.

### <Moisture-conditioning property>

In a thermostatic chamber having an outside temperature of 20°C, 200 ml of ion-exchange water held at 40°C were loaded into a 300-ml beaker, and the shatterproofing member including a convertible pressure-sensitive adhesive layer obtained in Example or Comparative Example (the moisture-conditioning layer side in Example or the glass cloth side in Comparative Example) was provided on the top of the beaker so as to face the inside. After 10 minutes, the dew condensation state of the inner surface was visually observed and evaluated on the basis of the following criteria.
○: There was no water droplet adhering.
Δ: There were water droplets each having a diameter of 2 to 10 mm and adhering to the entire surface.
×: There were many water droplets each having a diameter of less than 2 mm and adhering to the entire surface.

### <Moisture-preventing property>

The shatterproofing member including a convertible pressure-sensitive adhesive layer obtained in Example or Comparative Example was measured for its water vapor transmission rate with a water vapor transmission rate measuring apparatus (manufactured by MOCON, Inc.) under the conditions of 40°C and 80%RH. It should be noted that the method of measuring the water vapor transmission rate was performed in conformity with JIS-K-7129 or the MOCON method.

### <Water resistance>

The shatterproofing member including a convertible pressure-sensitive adhesive layer obtained in Example or Comparative Example was immersed in tap water at 23°C for 3 days, and then the degree of deterioration of the surface (the water-resistant layer side in Example or the glass cloth side in Comparative Example) was visually observed and evaluated on the basis of the following criteria.
- ○:: The surface shows no change.
- ×:: The surface has a wrinkle or a blister.

### <Water repellency>

0.1 g of oleic acid was smeared on the shatterproofing member including a convertible pressure-sensitive adhesive layer obtained in Example or Comparative Example (on the antifouling layer in Example or the glass cloth side in Comparative Example), and then the resultant was washed with a Kimwipe while ion-exchange water was applied thereonto. The external appearance of the surface that had been washed (on the antifouling layer in Example and the glass cloth side in Comparative Example) was visually observed and evaluated on the basis of the following criteria.
- ⊚:: A stain is completely removed.
- ○:: A slight stain remains.
- Δ:: A conspicuous stain remains.
- ×:: A stain is spread over the entire surface and can be hardly removed.

### <Hydrophilicity>

0.1 g of oleic acid was smeared on the shatterproofing member including a convertible pressure-sensitive adhesive layer obtained in Example or Comparative Example (on the antifouling layer in Example or the glass cloth side in Comparative Example), and then the resultant was washed with a Kimwipe while ion-exchange water was applied thereonto. The external appearance of the surface that had been washed (on the antifouling layer in Example and the glass cloth side in Comparative Example) was visually observed and evaluated on the basis of the following criteria.
- ⊚:: A stain is completely removed.
- ○:: A slight stain remains.
- Δ:: A conspicuous stain remains.
- ×:: A stain is spread over the entire surface and can be hardly removed.

### <Oil repellency>

0. 2 g of a silicone oil was placed on the shatterproofing member including a convertible pressure-sensitive adhesive layer obtained in Example or Comparative Example (on the antifouling layer in Example or the glass cloth side in Comparative Example) placed horizontally, and a surface contact angle with respect to the silicone oil was evaluated by measuring an angle formed between the liquid droplet and the surface of the shatterproofing member including a convertible pressure-sensitive adhesive layer (on the antifouling layer in Example or the glass cloth side in Comparative Example).

### <Antibacterial performance>

### (1) Test bacterial strains

- *Escherichia coli* (*Escherichia coli* IFO3301)
- *Staphylococcus aureus*

### (2) Preparation of test bacterial liquid

A culture of test bacteria that had been subjected to shaking culture in a broth medium at 35°C for 20 hours was diluted 20, 000-fold with a sterile phosphate buffer to provide a bacterial liquid. In addition, a bacterial count in the bacterial liquid was separately measured.

### (3) Test for antibacterial property

1 mL of the bacterial liquid was dropped onto the shatterproofing member including a convertible pressure-sensitive adhesive layer obtained in Example or Comparative Example (on the antifouling layer in Example or the glass cloth side in Comparative Example) serving as a specimen, and the resultant was left to stand at 25°C for 24 hours. After that, a bacterial count was measured, and the antibacterial performance of the specimen was evaluated. It should be noted that 1 mL of the bacterial liquid was dropped onto a petri dish as a control sample, and the resultant was subjected to the same test.

### (4) Measurement of bacterial count

The specimen and control sample stored for 24 hours were each washed with 10 mL of an SCDLP medium (manufactured by NIHON PHARMACEUTICAL CO., LTD.). The washing liquid was measured for its bacterial count with standard plate count agar, and the bacterial count of each of the specimen and the control sample was calculated.

### <Antifungal property>

An evaluation was performed in conformity with Attachment A of JIS Z 2911.

### <Deodorant property>

Deodorant property was evaluated with acetic acid. That is, gas concentrations (initial concentration and concentration after 60 minutes) in a detector tube were measured on the basis of the following evaluation test method.

| | |
|---|---|
| Sample dimensions: | 15 cm by 25 cm |
| Gas bag volume: | Tedlar bag having a volume of 5 L |
| Initial gas concentration: | 20 ppm |

**[Table 12]**

| | Shatterproof property | Photocatalytic property | |
|---|---|---|---|
| | | Initial concentration (ppm) | Concentration after 60 minutes (ppm) |
| Example 24 | ○ | 20 | 3 |
| Comparative Example 5 | ○ | 20 | 19 |

**[Table 13]**

| | Shatterproof property | Antifouling property |
|---|---|---|
| Example 25 | ○ | ○ |
| Comparative Example 5 | ○ | × |

**[Table 14]**

| | Shatterproof property | Moisture-conditioning property |
|---|---|---|
| Example 26 | ○ | ○ |
| Comparative Example 5 | ○ | × |

**[Table 15]**

| | Shatterproof property | Moisture-preventing property |
|---|---|---|
| | | Water vapor transmission rate (g/m²·day) |
| Example 27 | ○ | 10 |
| Comparative Example 5 | ○ | 80 |

**[Table 16]**

| | Shatterproof property | Water resistance |
|---|---|---|
| Example 28 | ○ | ○ |
| Comparative Example 5 | ○ | × |

**[Table 17]**

| | Shatterproof property | Water repellency |
|---|---|---|
| Example 29 | ○ | ○ |
| Comparative Example 5 | ○ | × |

**[Table 18]**

| | Shatterproof property | Hydrophilicity |
|---|---|---|
| Example 30 | ○ | ○ |
| Comparative Example 5 | ○ | × |

**[Table 19]**

| | Shatterproof property | Oil repellency |
|---|---|---|
| | | Contact angle (°) |
| Example 31 | ○ | 100 |
| Comparative Example 5 | ○ | 70 |

**[Table 20]**

| | Shatterproof property | Antibacterial property | |
|---|---|---|---|
| | | Initial | After 24 hours |
| Example 32 | ○ | 1.2×10⁶ | <10 |
| Comparative Example 5 | ○ | 1.2×10⁶ | 1.2×10⁶ |

**[Table 21]**

| | Shatterproof property | Antifungal property |
|---|---|---|
| Example 33 | ○ | 3 |
| Comparative Example 5 | ○ | 4 |

**[Table 22]**

| | Shatterproof property | Deodorant property | |
|---|---|---|---|
| | | Initial concentration (ppm) | Concentration after 60 minutes (ppm) |
| Example 34 | ○ | 20 | 8 |
| Comparative Example 5 | ○ | 20 | 19 |

Each of the shatterproofing members including a convertible pressure-sensitive adhesive layer obtained in Examples 24 to 34 allows adherends to be instantly fixed to each other, allows the adherends to be reattached to each other, is excellent in processability such as being able to be cut into a sheet shape, is not peeled from the adherends even when exposed to a high-temperature atmosphere such as one in a fire, and can express shatterproof property when attached to an adherend that is broken by combustion such as glass even if exposed to combustion during a fire or the like. In addition, each of the shatterproof ing members including a convertible pressure-sensitive adhesive layer obtained in Examples 24 to 34 is excellent in environment-resistant functionality and hygienic functionality.

### Industrial Applicability

The shatterproofing member including a convertible pressure-sensitive adhesive layer of the present invention can be instantly fixed to glass, can be reattached, and is not peeled from an adherend even when exposed to a high-temperature atmosphere such as one in a fire. Therefore, the shatterproofing member including a convertible pressure-sensitive adhesive layer of the present invention can be effectively utilized because the member can prevent shattering of glass not only in an application in which the member is not exposed to a high-temperature atmosphere, but also in an application in which the member is exposed to a high-temperature atmosphere. In addition, the shatterproofing member including a convertible pressure-sensitive adhesive layer of the present invention shows excellent flame retardancy when used for flame-retardant treatment for lumber or plastic, and hence can be suitably utilizedforflame-retardant treatment for various members.

In addition, when the shatterproofing member including a convertible pressure-sensitive adhesive layer of the present invention has a protective layer, the shatterproofing member including a convertible pressure-sensitive adhesive layer of the present invention shows excellent scratch resistance, and hence can be suitably utilized even in a use environment in which the member is exposed to such a situation that its surface is liable to have a flaw.

In addition, when the shatterproofing member including a convertible pressure-sensitive adhesive layer of the present invention has a thermally functional layer, the shatterproofing member including a convertible pressure-sensitive adhesive layer of the present invention shows excellent thermal functionality, and hence can be suitably utilized even in a use environment that may be affected by temperature.

In addition, when the shatterproofing member including a convertible pressure-sensitive adhesive layer of the present invention has a physically functional layer or a chemically functional layer, the shatter proofing member including a convertible pressure-sensitive adhesive layer of the present invention shows excellent physical functionality or chemical functionality, and hence can impart physical functionality or chemical functionality to various adherends.

In addition, when the shatterproofing member including a convertible pressure-sensitive adhesive layer of the present invention has an environment-resistant functional layer or a hygienically functionallayer,theshatterproofing memberincluding a convertible pressure-sensitive adhesive layer of the present invention shows excellent environment-resistant functionality or hygienic functionality, and hence can impart environment-resistant functionality or hygienic functionality to various adherends.

The shatterproofing member including a convertible pressure-sensitive adhesive layer of the present invention can be suitably used, for example, as a building material in each of an outer wall material, an outer wall trim material, an inner wall material, an inner wall trim material, an wall insulation material, a ceiling material, a ceiling trim material, a roofing material, a floor material, a floor trim material, a partition material, a wall material, floor material, and ceiling material for a bathroom and trim materials therefor, a wall material, floor material, and ceiling material for a kitchen and trim materials therefor, a wall material, floor material, and ceiling material for a lavatory and trim materials therefor, a pillar material and a pillar protection material, and an inner material, surface trim material, partition material, and curtain for a lavatory, room, and various doors such as a front door and a sliding door, in particular, a wall material and ceiling material for a kitchen, and a partition for a clean room, in general housing including wooden housing based on a conventional construction method, a light-frame construction method, or the like, reinforced concrete housing, steel construction housing of light-gauge steel construction or heavy-gauge steel construction, and prefabricated housing, complex housing such as a super high-rise condominium, a high-rise condominium, a mid-rise or low-rise condominium, and an apartment building, and large building structures and public facilities such as a cafe, a restaurant, an office building, a department store, a supermarket, an indoor parking lot, a movie theater, a hotel, various sports facilities, a gymnasium, a concert hall, a domed baseball stadium or soccer stadium, an indoor soccer stadium, an indoor pool, and a factory building. In addition, the member can be used in, for example, an inner material or surface trim material for fire preventive equipment such as an exhaust duct, a fire door, or a fire shutter, a surface trim material for furniture such as a table, a surface trim material for a door, a surface trim material for window glass, a surface trim material for furniture such as a table, a shatterproofing material or surface trim material for window glass, a mirror, a tile, or the like, a surface trim material for a signboard or digital signage, or a roll screen. In addition, the member can be used in a body protective material, inner or outer wall material, ceiling material, roofing material, or floormaterial for a ship, aircraft, automobile, or railwayvehicle, a surface protective material for a printed matter to be attached to the inside or outside of a railway vehicle, a surface protective material for an inkjet media material, an outer protective material or inner protective material for a solar cell, a protective material for a battery such as a lithium ion battery, or an electrical and electronic device member such as a partition inside an electrical device. Further, the member can also be used as a peripheral tool for an ash tray, a surface trim material for a garbage can, or a protective material for the front panel or chassis of a pachinko machine.

### Reference Signs List

- **1**: supporting plate
- **2**: supporting post
- **3**: Bunsen burner
- **4**: flame port
- **5**: portion at height of 55 mm from flame port
- **10**: polymer component
- **20**: sinterable particle
- **100**: convertible pressure-sensitive adhesive layer
- **200**: flame-resistant material
- **300**: functional layer
- **1000**: shatterproofing member including convertible pressure-sensitive adhesive layer
- **2000**: glass plate
- **3000**: test body
- **4000**: screw for fixation

## Claims

1. A shatterproofing member including a pressure-sensitive adhesive layer convertible into an adhesive layer, comprising:
a pressure-sensitive adhesive layer convertible into an adhesive layer; and
a flame-resistant material,
wherein the pressure-sensitive adhesive layer convertible into an adhesive layer has pressure-sensitive adhesive property before being sintered, and has adhesive property after being sintered.

2. A shatterproofing member including a pressure-sensitive adhesive layer convertible into an adhesive layer according to claim 1, further comprising a protective layer as at least one outermost layer.

3. A shatterproofing member including a pressure-sensitive adhesive layer convertible into an adhesive layer according to claim 2, wherein the protective layer comprises a resin layer.

4. A shatterproofing member including a pressure-sensitive adhesive layer convertible into an adhesive layer according to claim 3, wherein the resin layer comprises a polyester-based resin layer.

5. A shatterproofing member including a pressure-sensitive adhesive layer convertible into an adhesive layer according to claim 2, wherein the protective layer comprises at least one kind selected from a UV-curing type hard coat layer, a thermosetting type hard coat layer, and an organic-inorganic hybrid type hard coat layer.

6. A shatterproofing member including a pressure-sensitive adhesive layer convertible into an adhesive layer according to any one of claims 2 to 5, wherein the protective layer has a thickness of 0.1 µm to 200 µm.

7. A shatterproofing member including a pressure-sensitive adhesive layer convertible into an adhesive layer according to claim 1, further comprising a thermally functional layer as at least one outermost layer.

8. A shatterproofing member including a pressure-sensitive adhesive layer convertible into an adhesive layer according to claim 7, wherein the thermally functional layer has a thickness of 0.1 µm to 200 µm.

9. A shatterproofing member including a pressure-sensitive adhesive layer convertible into an adhesive layer according to claim 7 or 8, wherein the thermally functional layer comprises a heat-insulating layer.

10. A shatterproofing member including a pressure-sensitive adhesive layer convertible into an adhesive layer according to claim 9, wherein the heat-insulating layer contains hollow bead structures.

11. A shatterproofing member including a pressure-sensitive adhesive layer convertible into an adhesive layer according to claim 10, wherein the hollow bead structures comprise glass beads.

12. A shatterproofing member including a pressure-sensitive adhesive layer convertible into an adhesive layer according to claim 7 or 8, wherein the thermally functional layer comprises a heat-shielding layer.

13. A shatterproofing member including a pressure-sensitive adhesive layer convertible into an adhesive layer according to claim 12, wherein the heat-shielding layer contains at least one kind selected from a pigment, a ceramic, a metal, and microballoons.

14. A shatterproofing member including a pressure-sensitive adhesive layer convertible into an adhesive layer according to claim 12 or 13, wherein the heat-shielding layer comprises at least one kind selected from an applied layer, a sheet layer, a foil layer, a sputtered layer, and a deposited layer.

15. A shatterproofing member including a pressure-sensitive adhesive layer convertible into an adhesive layer according to claim 1, further comprising a physically functional layer as at least one outermost layer.

16. A shatterproofing member including a pressure-sensitive adhesive layer convertible into an adhesive layer according to claim 15, wherein the physically functional layer has a thickness of 0.1 µm to 200 µm.

17. A shatterproofing member including a pressure-sensitive adhesive layer convertible into an adhesive layer according to claim 15 or 16, wherein the physically functional layer comprises any one of an anti-fingerprint layer, an ink-absorbing layer, an antireflection layer, and a light selective transmission layer.

18. A shatterproofing member including a pressure-sensitive adhesive layer convertible into an adhesive layer according to claim 1, further comprising a chemically functional layer as at least one outermost layer.

19. A shatterproofing member including a pressure-sensitive adhesive layer convertible into an adhesive layer according to claim 18, wherein the chemically functional layer has a thickness of 0.1 µm to 200 µm.

20. A shatterproofing member including a pressure-sensitive adhesive layer convertible into an adhesive layer according to claim 18 or 19, wherein the chemically functional layer comprises any one of an alkali-resistant layer, an acid-resistant layer, and a solvent-resistant layer.

21. A shatterproofing member including a pressure-sensitive adhesive layer convertible into an adhesive layer according to claim 1, further comprising an environment-resistant layer as at least one outermost layer.

22. A shatterproofing member including a pressure-sensitive adhesive layer convertible into an adhesive layer according to claim 21, wherein the environment-resistant layer has a thickness of 0.1 µm to 200 µm.

23. A shatterproofing member including a pressure-sensitive adhesive layer convertible into an adhesive layer according to claim 21 or 22, wherein the environment-resistant layer comprises any one of a photocatalyst layer, an antifouling layer, a moisture-conditioning layer, a moisture-preventing layer, a water-resistant layer, a water-repellent layer, a hydrophilic layer, and an oil-repellent layer.

24. A shatterproofing member including a pressure-sensitive adhesive layer convertible into an adhesive layer according to claim 1, further comprising a hygienically functional layer as at least one outermost layer.

25. A shatterproofing member including a pressure-sensitive adhesive layer convertible into an adhesive layer according to claim 24, wherein the hygienically functional layer has a thickness of 0.1 µm to 200 µm.

26. A shatterproofing member including a pressure-sensitive adhesive layer convertible into an adhesive layer according to claim 24 or 25, wherein the hygienically functional layer comprises any one of an antibacterial layer, an antifungal layer, and a deodorant layer.

27. A shatterproofing member including a pressure-sensitive adhesive layer convertible into an adhesive layer according to any one of claims 1 to 26, wherein the pressure-sensitive adhesive layer convertible into an adhesive layer contains sinterable particles and a polymer component.

28. A shatterproofing member including a pressure-sensitive adhesive layer convertible into an adhesive layer according to claim 27, wherein the sinterable particles each have a deformation point of 250°C to 800°C.

29. A shatterproofing member including a pressure-sensitive adhesive layer convertible into an adhesive layer according to claim 27 or 28, wherein the sinterable particles are each formed of at least one kind of component selected from silicic acid, boric acid, borosilicic acid, aluminum oxide, calcium oxide, sodium oxide, lithium oxide, and phosphorus oxide.

30. A shatterproofing member including a pressure-sensitive adhesive layer convertible into an adhesive layer according to any one of claims 27 to 29, wherein the sinterable particles each have an average particle diameter of 0.1 µm to 1,000 µm.

31. A shatterproofing member including a pressure-sensitive adhesive layer convertible into an adhesive layer according to any one of claims 27 to 30, wherein a content ratio of the sinterable particles is 1 wt% to 80 wt% with respect to a solid content of the pressure-sensitive adhesive layer convertible into an adhesive layer.

32. A shatterproofing member including a pressure-sensitive adhesive layer convertible into an adhesive layer according to any one of claims 27 to 31, wherein the polymer component comprises at least one kind of component selected from a rubber-based polymer, a silicone-based polymer, and an acrylic polymer.

33. A shatterproofing member including a pressure-sensitive adhesive layer convertible into an adhesive layer according to any one of claims 27 to 32, wherein a material for forming the polymer component contains a photopolymerization initiator.

34. A shatterproofing member including a pressure-sensitive adhesive layer convertible into an adhesive layer according to any one of claims 1 to 33, wherein the pressure-sensitive adhesive layer convertible into an adhesive layer is obtained by photopolymerization.

35. A shatterproofing member including a pressure-sensitive adhesive layer convertible into an adhesive layer according to any one of claims 1 to 34, wherein the flame-resistant material comprises an inorganic backing.

36. A shatterproofing member including a pressure-sensitive adhesive layer convertible into an adhesive layer according to claim 35, wherein the inorganic backing comprises a fibrous inorganic backing.

37. A shatterproofing member including a pressure-sensitive adhesive layer convertible into an adhesive layer according to claim 36, wherein the fibrous inorganic backing comprises a glass cloth.

38. A shatterproofing member including a pressure-sensitive adhesive layer convertible into an adhesive layer according to any one of claims 1 to 37, wherein the shatterproofing member has a sheet shape or a tape shape, and has a thickness of 1 µm to 1,000 µm.
